# EUROPEAN PATENT APPLICATION

(11) **EP 3 595 313 A1**
(43) Date of publication of application: **15.01.2020**
(21) Application number: 18764169.1
(22) Date of filing: 23.02.2018
(51) Int. Cl.: H04N 19/51, H04N 19/587, H04N 19/70

(54) **IMAGE PROCESSING DEVICE AND METHOD**

(30) Priority: 10.03.2017 JP 2017045770
(71) Applicant: Sony Corporation, Tokyo 108-0075 (JP)
(72) Inventor: KONDO Kenji, Tokyo 108-0075 (JP)
(74) Representative: D Young & Co LLP
(86) International application number: PCT/JP2018/006636
(87) International publication number: WO 2018/163858

(57) **Abstract**

The present technology relates to image processing apparatus and method that make it possible to obtain motion information more rapidly.

The image processing apparatus includes a prediction section configured to derive, based on a given upper limit number of candidates for a motion vector from among a plurality of candidates for a motion vector, a motion vector of a block of a processing target using reference images having time different from that of an image of the block. The present technology can be applied to an image encoding apparatus and an image decoding apparatus.

## Description

### [Technical Field]

The present technology relates to an image processing apparatus and method, and particularly to an image processing apparatus and method that make it possible to obtain motion information more rapidly.

### [Background Art]

For example, as a technology relating to encoding or decoding of an image, a technology called FRUC (Frame Rate Up Conversion) has been proposed. This FRUC technology is a technology proposed by JVET (Joint Video Exploration Team), and in the FRUC technology, prediction of motion information is performed on the decoder side upon inter-prediction (for example, refer to NPL 1).

In the FRUC technology, a block matching process is performed by a template matching method or a bilateral matching method by a decoder to derive motion information. By deriving motion information by the decoder in this manner, it becomes possible to reduce information relating to motion information, which is to be placed into a bit stream.

### [Citation List]

### [Non Patent Literature]

[NPL 1]
Joint video Exploration Team (JVET) of ITU-T SG 16 WP 3 and ISO/IEC JTC 1/SC 29/WG 11, "Algorithm Description of Joint Exploration Test Model 4," JVET-D1001_v3, 4th Meeting: Chengdu, CN, 15-21 October 2016

### [Summary]

### [Technical Problem]

Incidentally, in the case where the FRUC technology is used, block matching for deriving motion information is performed not only by the encoder side but also by the decoder side, and the processing in the block matching is great in processing amount. For example, if the processing amount in block matching is so great that time is required for derivation of motion information, then in some cases, a content of a moving image or the like cannot be reproduced on the real time basis.

Therefore, a technology is demanded that makes it possible to obtain motion information more rapidly in order to make it possible to perform real time reproduction of a content of a moving image or the like.

The present technology has been made in view of such a situation as described above and makes it possible to obtain motion information more rapidly.

### [Solution to Problem]

An image processing apparatus according to a first aspect of the present technology includes a prediction section configured to derive, based on a given upper limit number of candidates for a motion vector from among a plurality of candidates for a motion vector, a motion vector of a block of a processing target using reference images having time different from that of an image of the block.

An image processing method according to the first aspect of the present technology corresponds to the image processing apparatus according to the first aspect of the present technology.

In the first aspect of the present technology, based on a given upper limit number of candidates for a motion vector from among a plurality of candidates for a motion vector, a motion vector of a block of a processing target is derived using reference images having time different from that of an image of the block.

An image processing apparatus according to a second aspect of the present technology includes a prediction section configured to calculate, in regard to a plurality of candidates for a motion vector, a difference between a block of a processing target of an original image and a block indicated by each of candidates for a motion vector in a decoded image having time different from that of the original image and selects one candidate for a motion vector from among the plurality of candidates for a motion vector based on the differences, and an encoding section configured to encode information indicative of the candidate for the motion vector selected by the prediction section.

In the second aspect of the present technology, in regard to a plurality of candidates for a motion vector, a difference between a block of a processing target of an original image and a block indicated by each of candidates for a motion vector in a decoded image having time different from that of the original image is calculated, and one candidate for a motion vector is selected from among the plurality of candidates for a motion vector based on the differences. Further, information indicative of the candidate for a motion vector selected is encoded.

An image processing apparatus according to a third aspect of the present technology includes a prediction section configured to acquire information indicative of a candidate for a motion vector and derive, based on a block on a reference image having time different from that of an image including a block of a processing target, the block being indicated by a first motion vector indicated by the information and obtained from the candidate for the motion vector, and a different reference image having time different from those of the image and the reference image, a second motion vector between the block of the processing target and the different reference image by block matching.

In the third aspect of the present technology, information indicative of a candidate for a motion vector is acquired, and based on a block on a reference image having time different from that of an image including a block of a processing target, the block being indicated by a first motion vector indicated by the information and obtained from the candidate for the motion vector, and a different reference image having time different from those of the image and the reference image, a second motion vector between the block of the processing target and the different reference image is derived by block matching.

An image processing apparatus according to a fourth aspect of the present technology includes a prediction section configured to acquire a motion vector in a peripheral region that is not processed in a FRUC mode from among peripheral regions in a proximity of a block of a processing target as a candidate for a motion vector and derive, based on the acquired candidate for the motion vector, a motion vector of the block of the processing target using a reference image having time different from that of an image that includes a block of the processing target.

In the fourth aspect of the present technology, a motion vector in a peripheral region that is not processed in a FRUC mode from among peripheral regions in a proximity of a block of a processing target is acquired as a candidate for a motion vector, and based on the acquired candidate for the motion vector, a motion vector of the block of the processing target is derived using a reference image having time different from that of an image that includes a block of the processing target.

### [Advantageous Effect of Invention]

With the first aspect to fourth aspect of the present technology, motion information can be obtained more rapidly.

It is to be noted that the advantageous effect described here is not restrictive and may be any effect described in the present disclosure.

### [Brief Description of Drawings]

[FIG. 1]

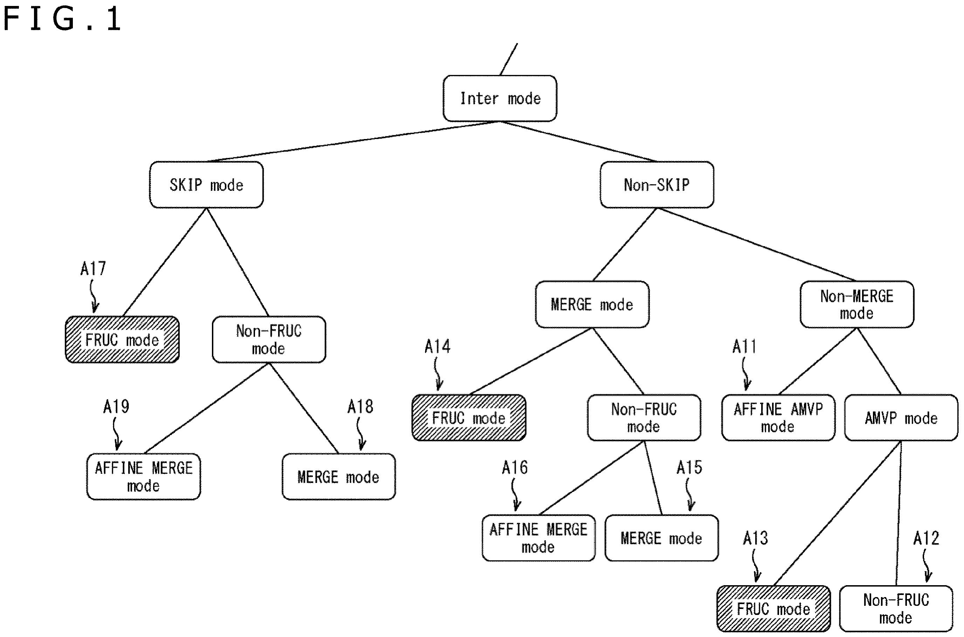

   FIG. 1 is a view illustrating an inter-prediction mode.
[FIG. 2]

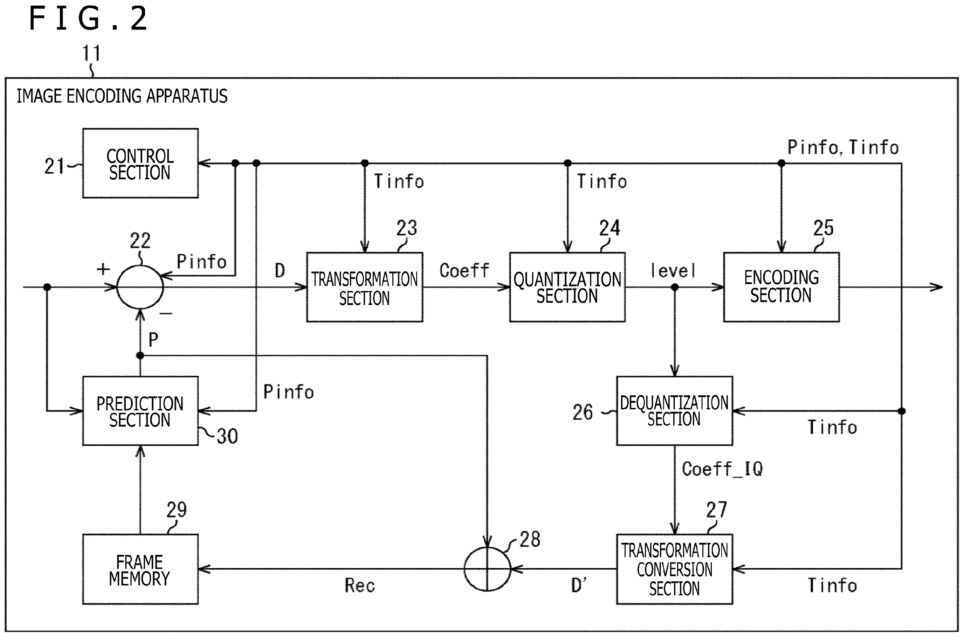

   FIG. 2 is a view depicting an example of a configuration of an image encoding apparatus.
[FIG. 3]

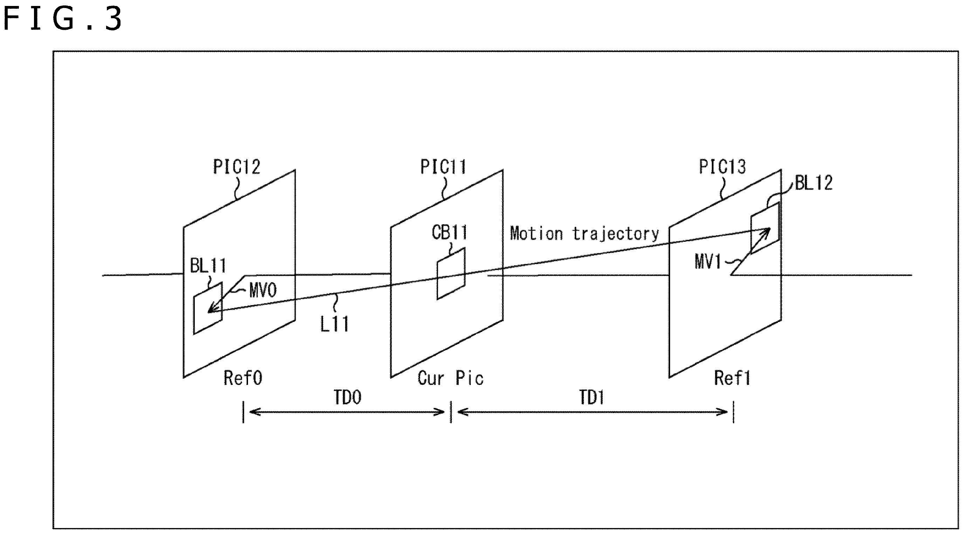

   FIG. 3 is a view illustrating bilateral matching.
[FIG. 4]

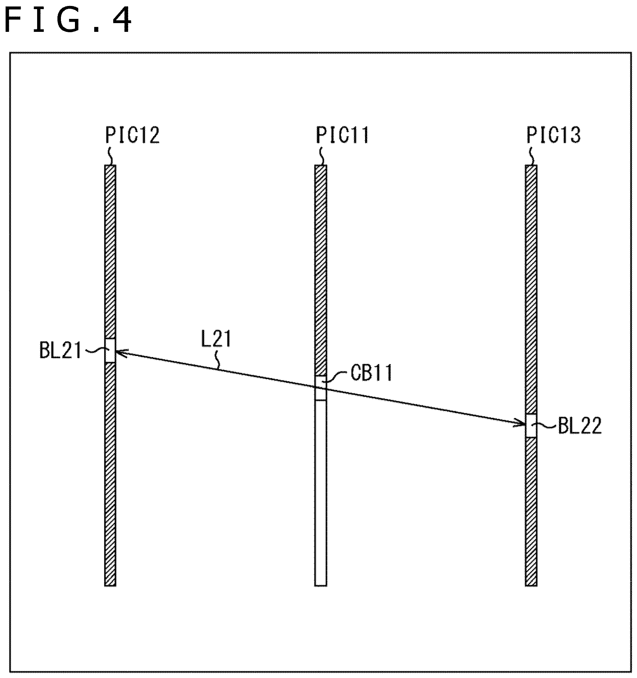

   FIG. 4 is a view illustrating the bilateral matching.
[FIG. 5]

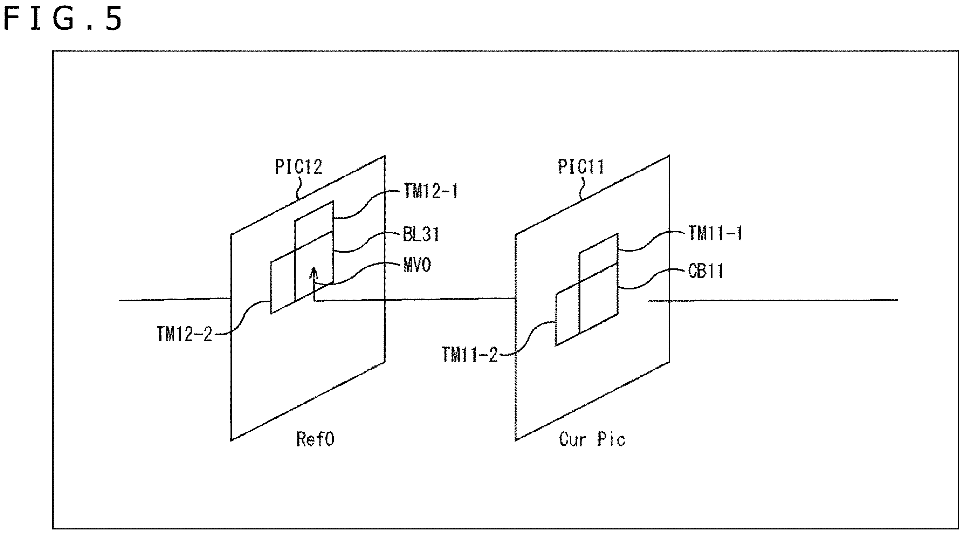

   FIG. 5 is a view illustrating template matching.
[FIG. 6]

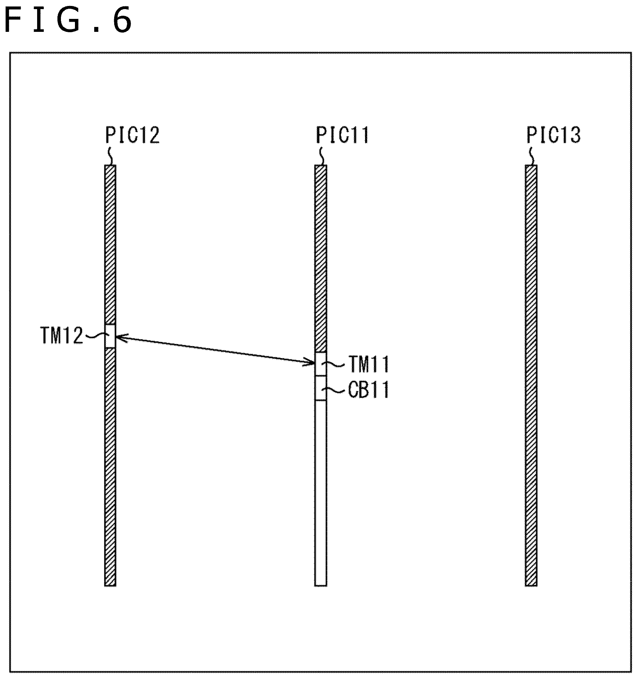

   FIG. 6 is a view illustrating the template matching.
[FIG. 7]

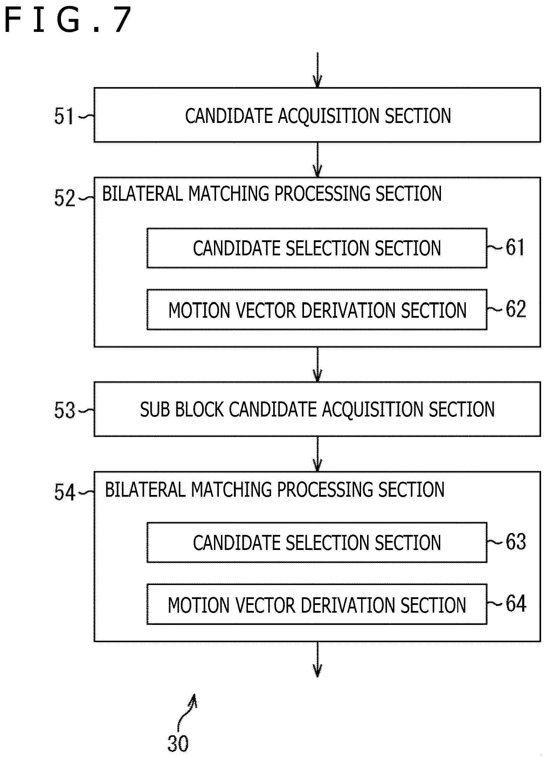

   FIG. 7 is a view depicting an example of a configuration of a prediction section.
[FIG. 8]

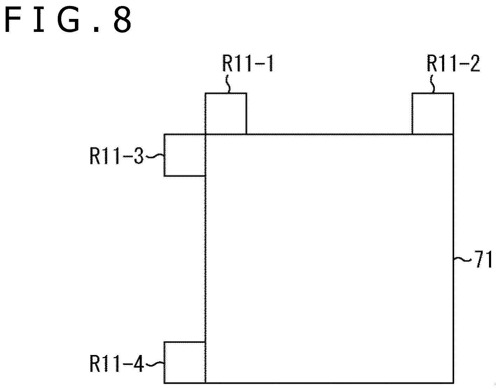

   FIG. 8 is a view illustrating a candidate for a predicted motion vector.
[FIG. 9]

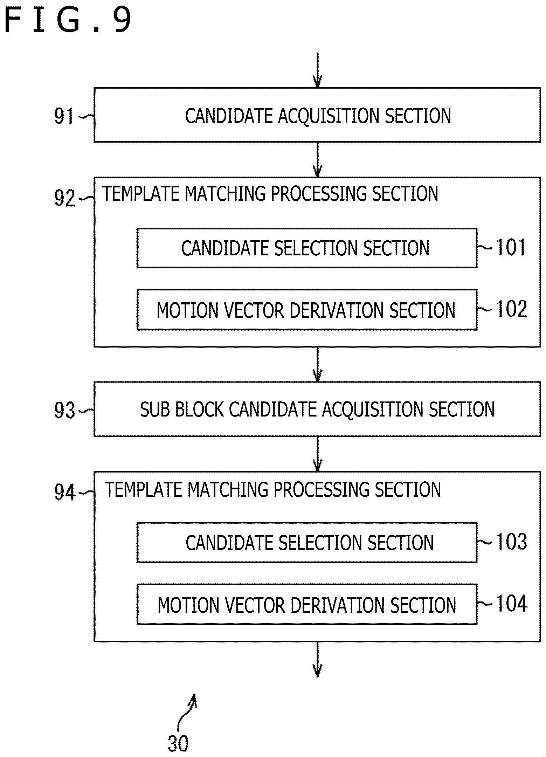

   FIG. 9 is a view depicting another example of a configuration of the prediction section.
[FIG. 10]

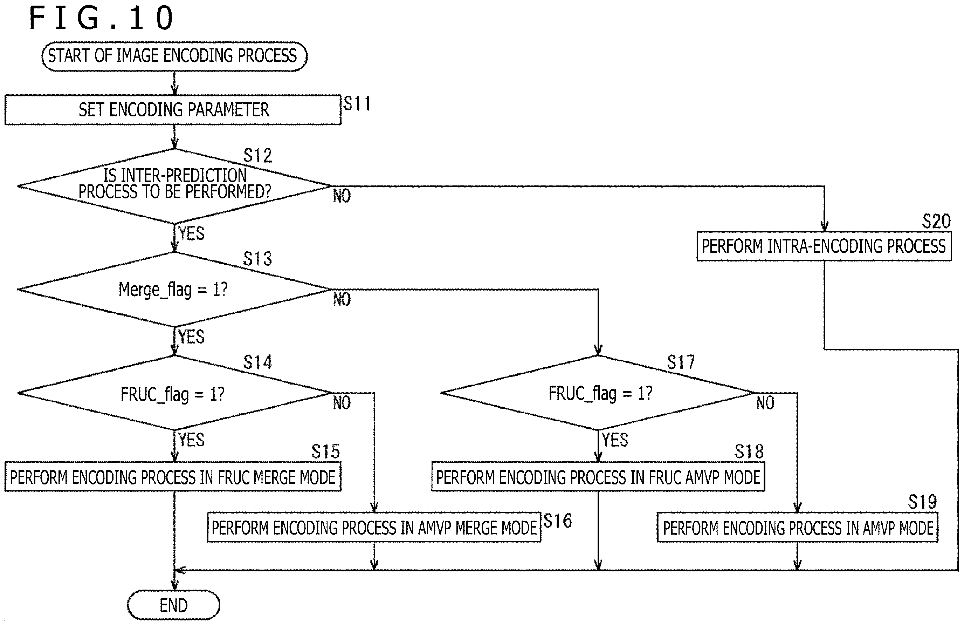

   FIG. 10 is a flow chart illustrating an image encoding process.
[FIG. 11]

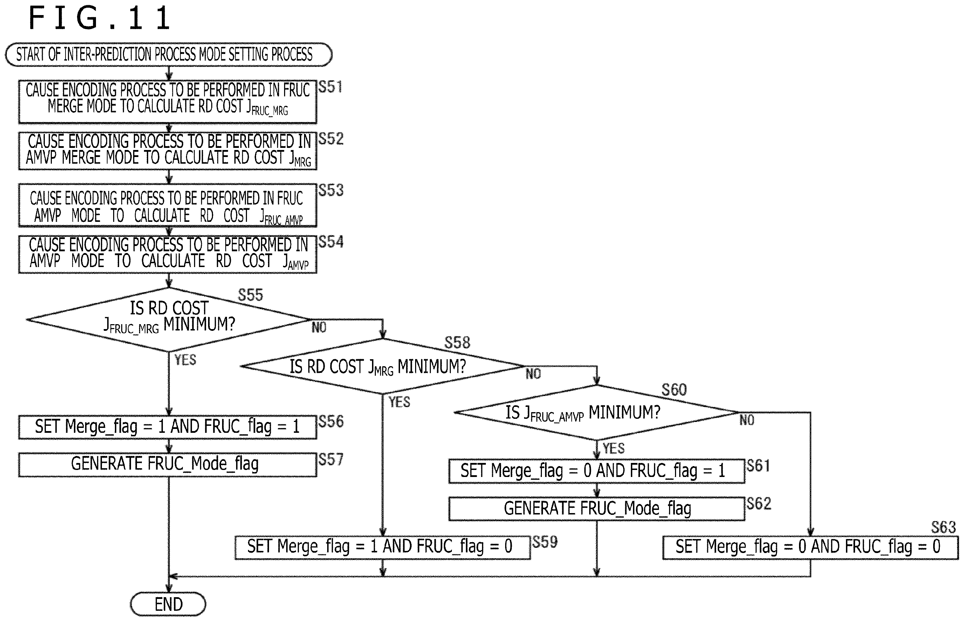

   FIG. 11 is a flow chart illustrating an inter-prediction process mode setting process.
[FIG. 12]

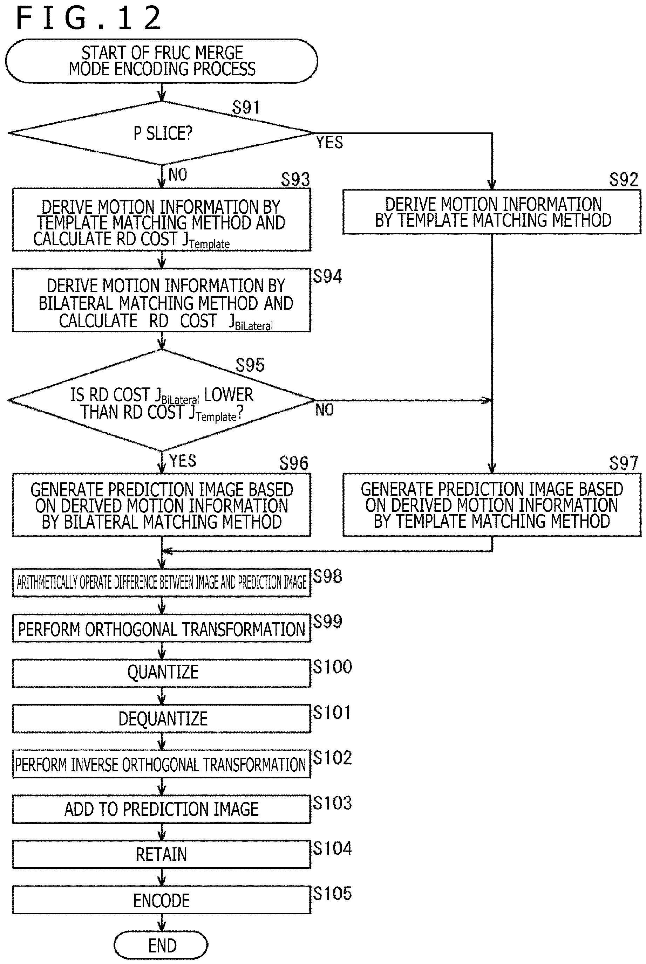

   FIG. 12 is a flow chart illustrating a FRUC merge mode encoding process.
[FIG. 13]

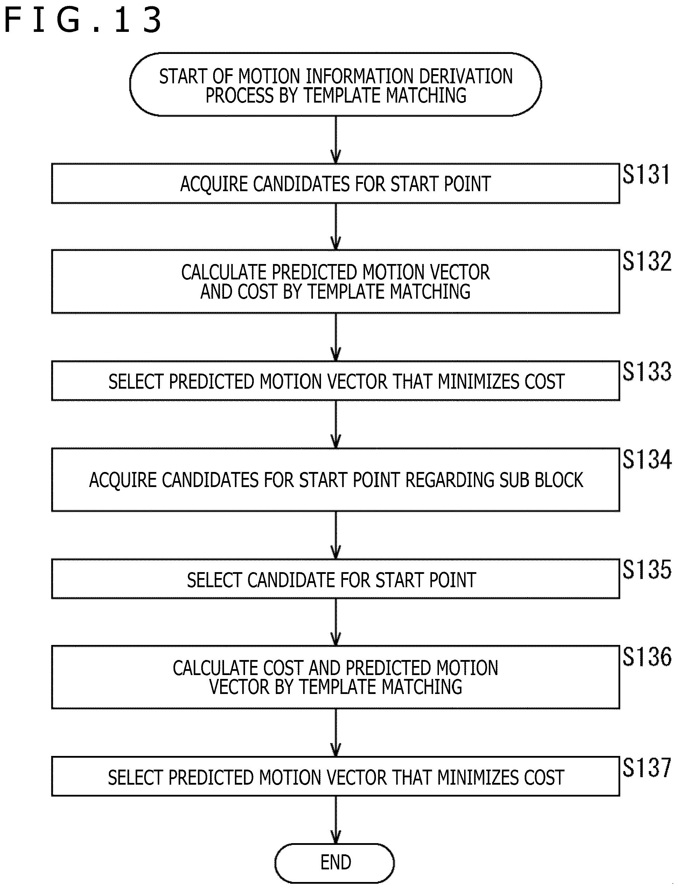

   FIG. 13 is a flow chart illustrating a motion information derivation process by template matching.
[FIG. 14]

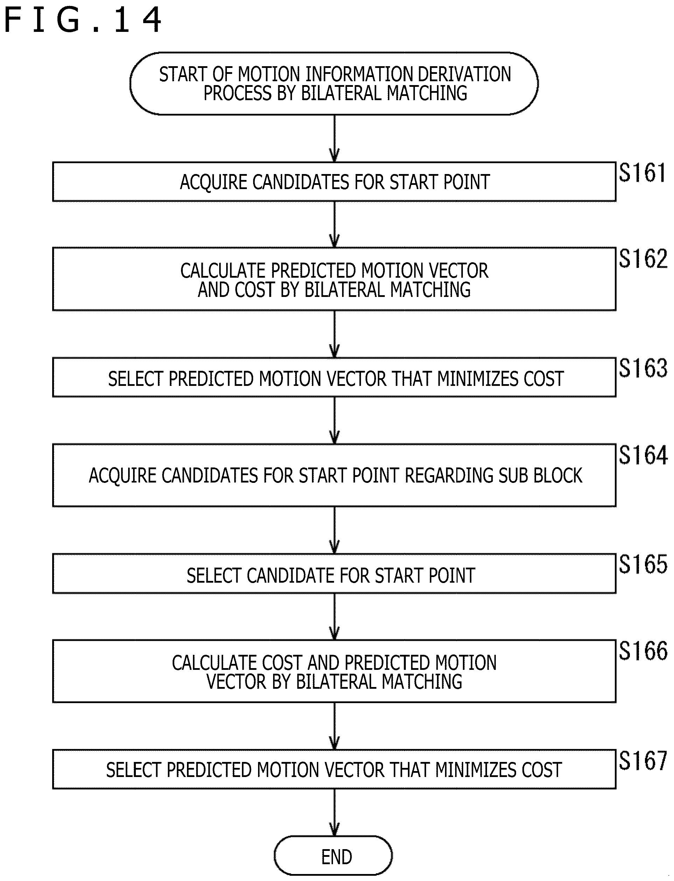

   FIG. 14 is a flow chart illustrating a motion information derivation process by bilateral matching.
[FIG. 15]

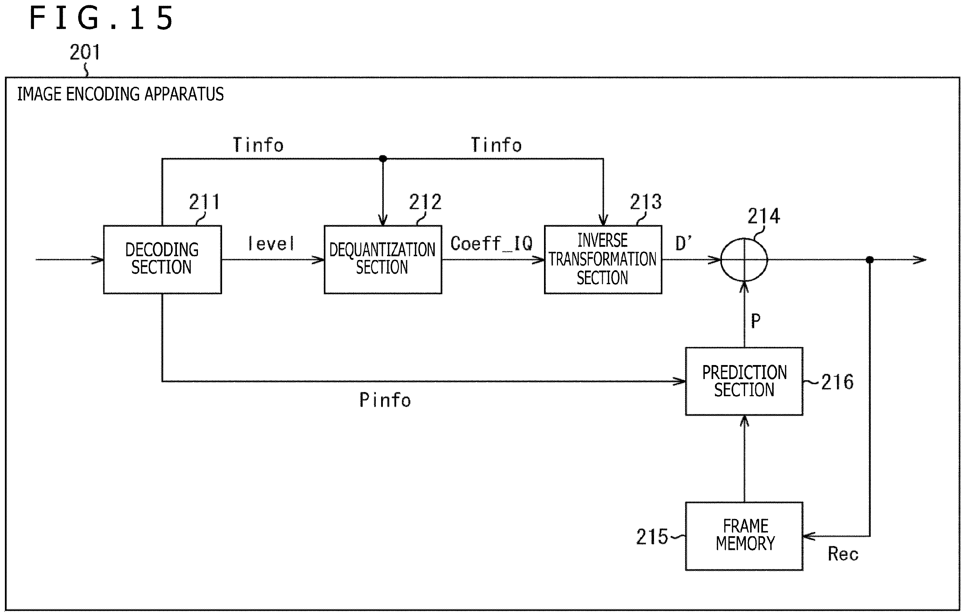

   FIG. 15 is a view depicting an example of a configuration of an image decoding apparatus.
[FIG. 16]

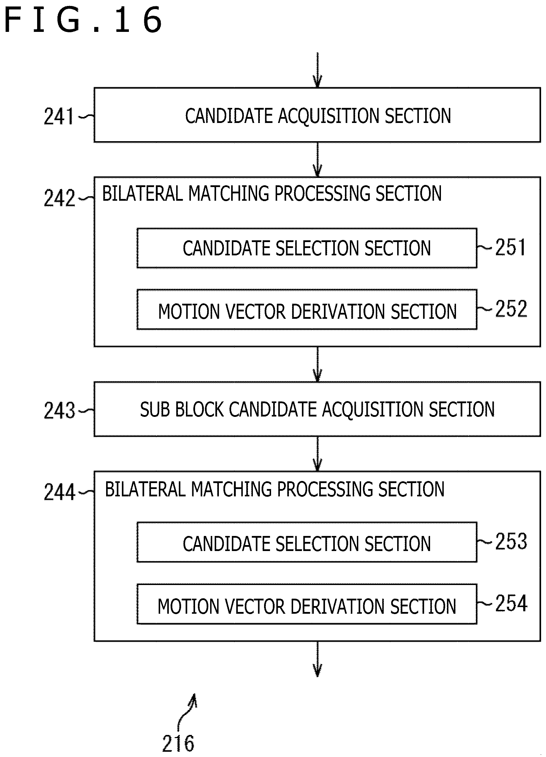

   FIG. 16 is a view depicting an example of a configuration of a prediction section.
[FIG. 17]

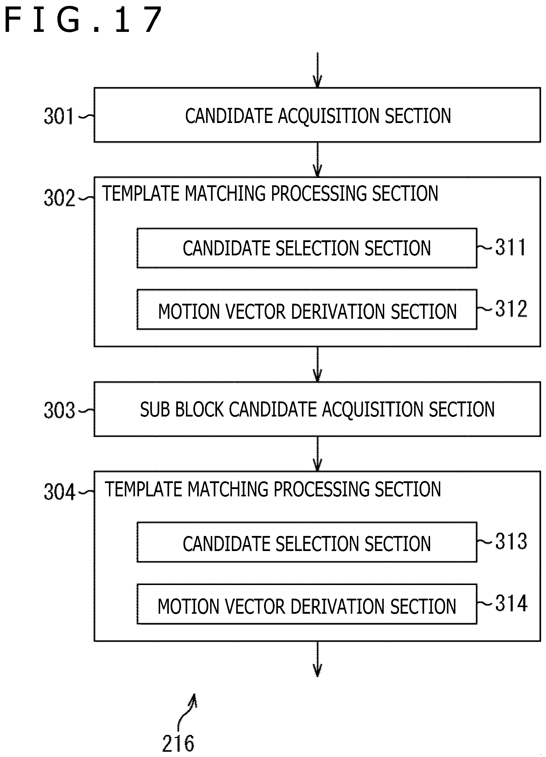

   FIG. 17 is a view depicting another example of a configuration of the prediction section.
[FIG. 18]

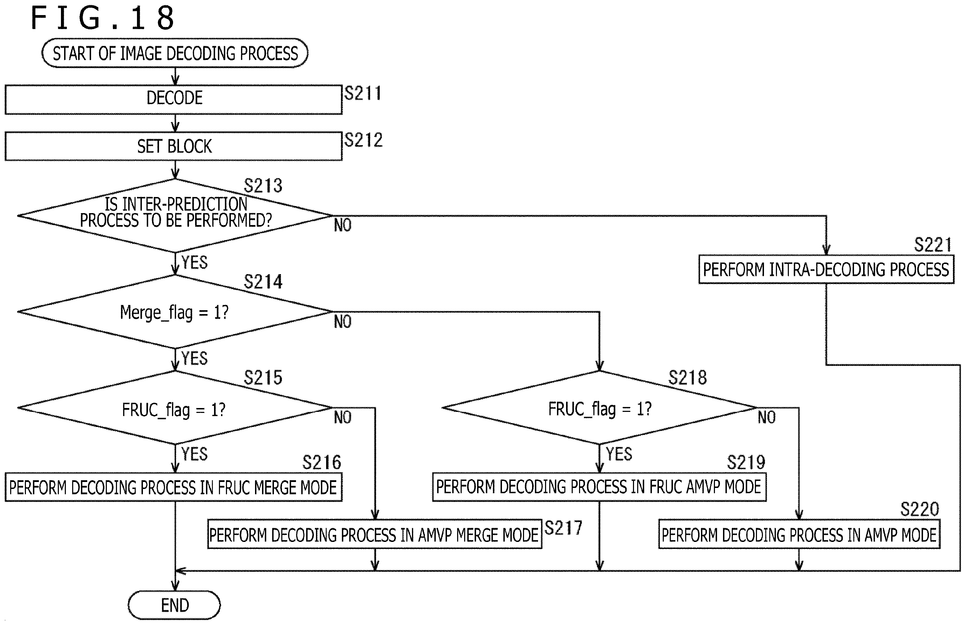

   FIG. 18 is a flow chart illustrating an image decoding process.
[FIG. 19]

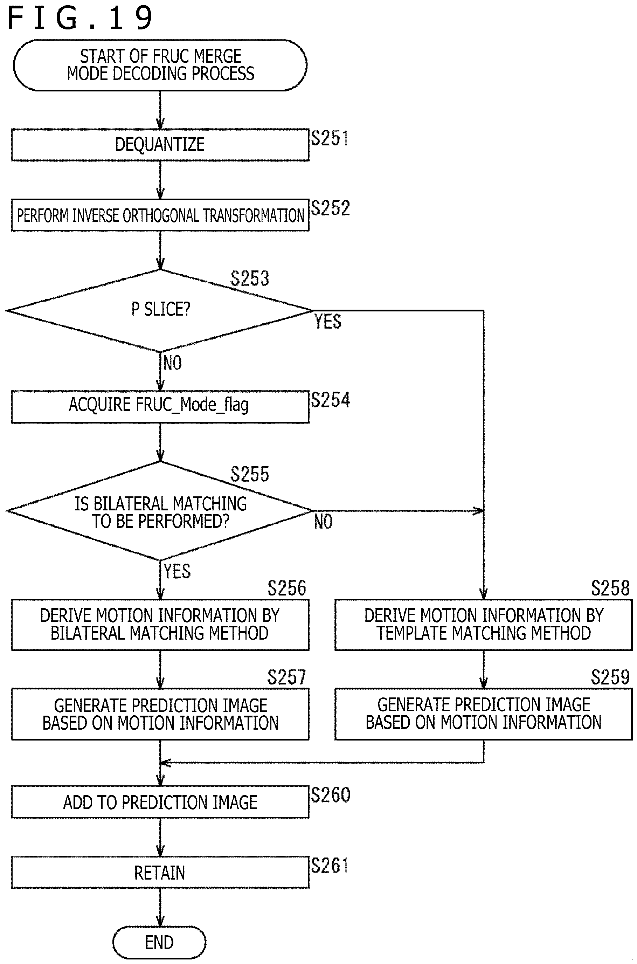

   FIG. 19 is a flow chart illustrating a FRUC merge mode decoding process.
[FIG. 20]

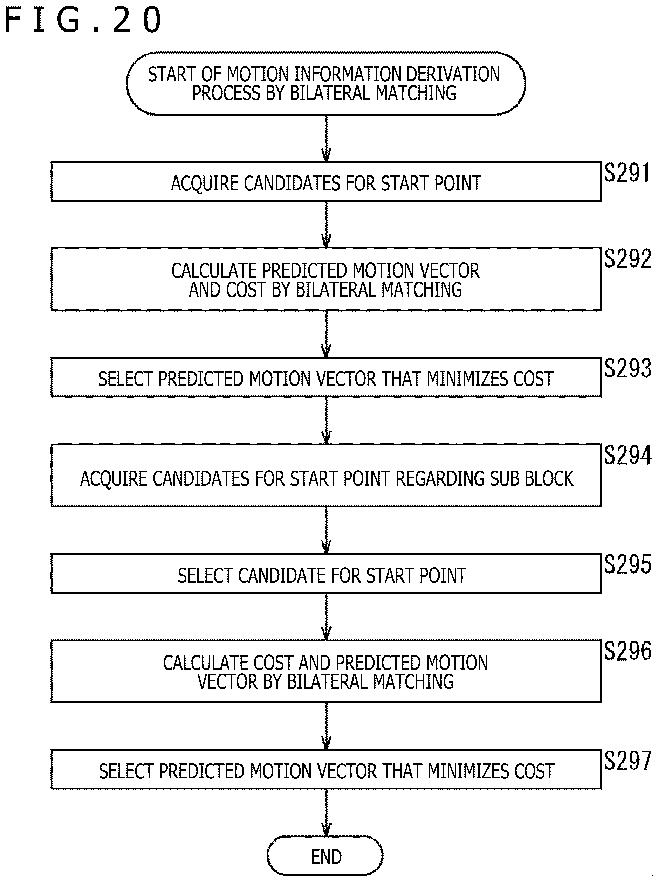

   FIG. 20 is a flow chart illustrating another motion information derivation process by bilateral matching.
[FIG. 21]

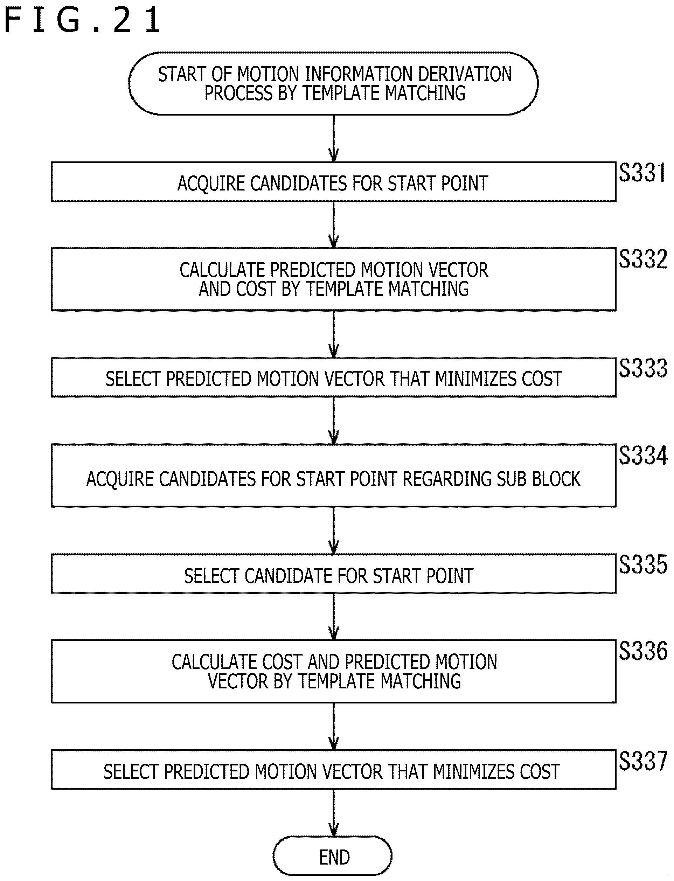

   FIG. 21 is a flow chart illustrating another motion information derivation process by template matching.
[FIG. 22]

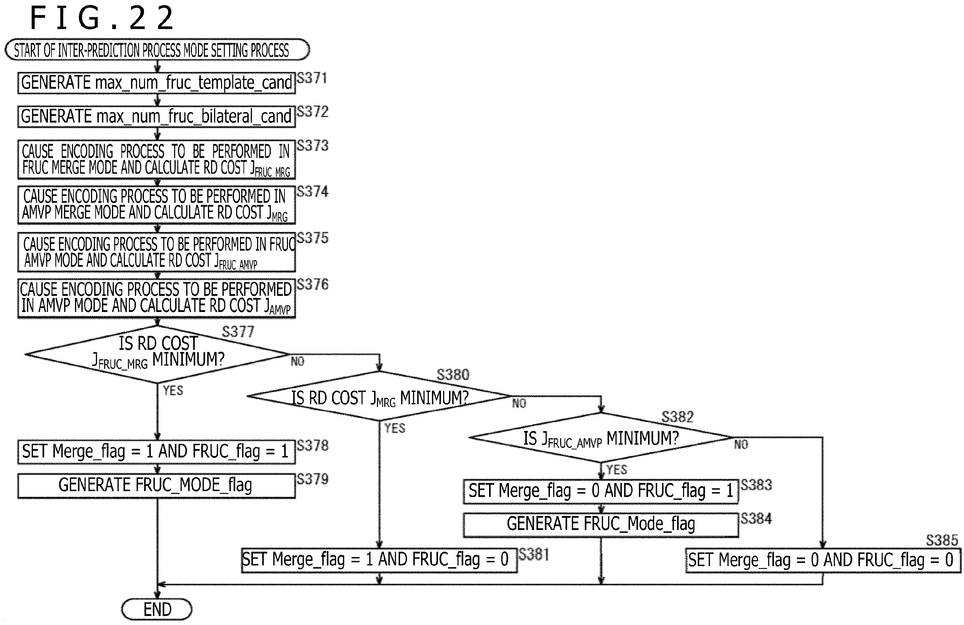

   FIG. 22 is a flow chart illustrating an inter-prediction process mode setting process.
[FIG. 23]

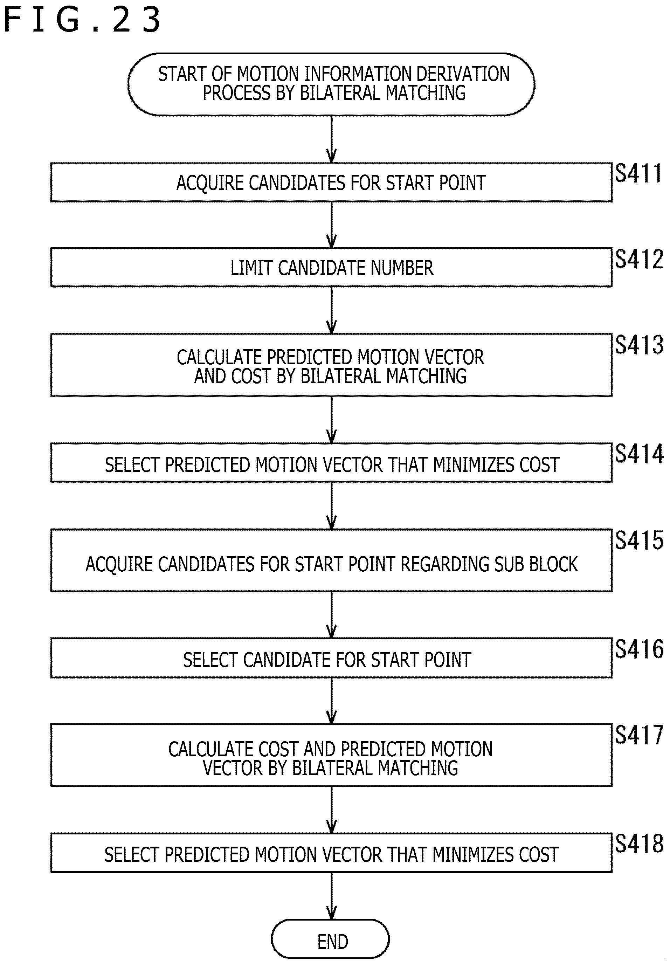

   FIG. 23 is a flow chart illustrating a further motion information derivation process by bilateral matching.
[FIG. 24]

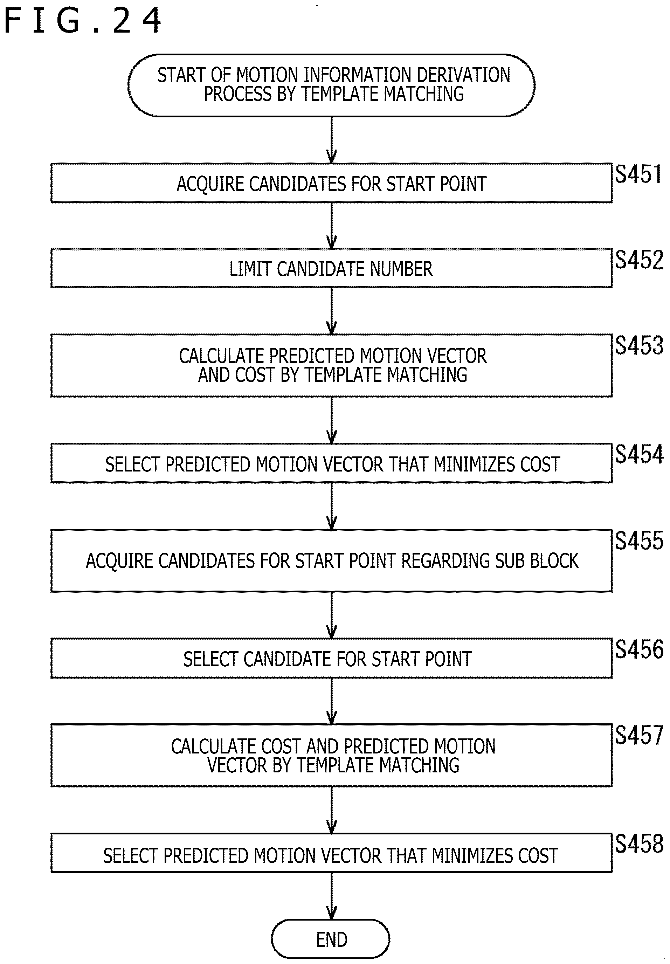

   FIG. 24 is a flow chart illustrating a further motion information derivation process by template matching.
[FIG. 25]

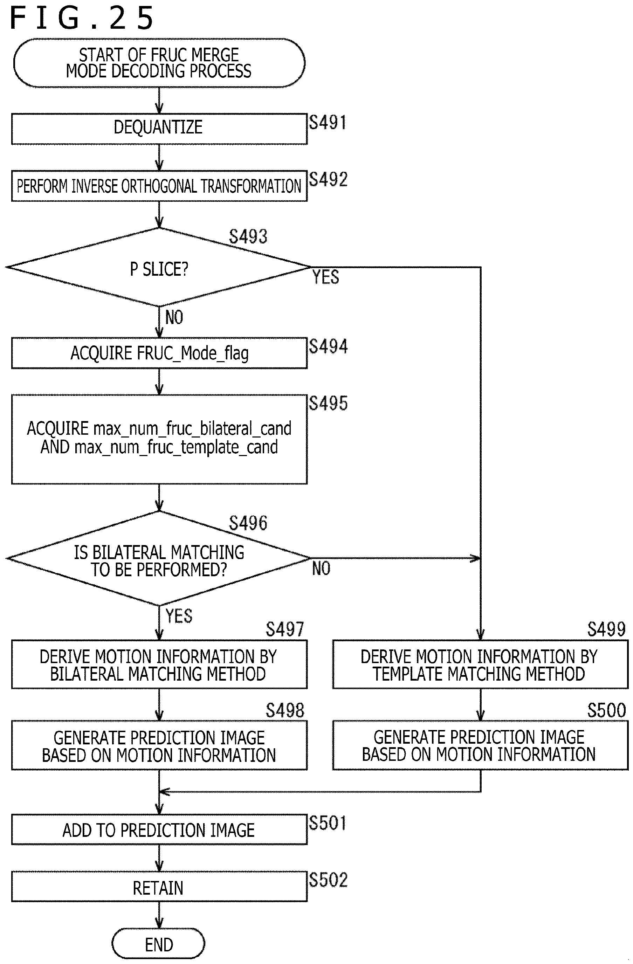

   FIG. 25 is a flow chart illustrating a FRUC merge mode decoding process.
[FIG. 26]

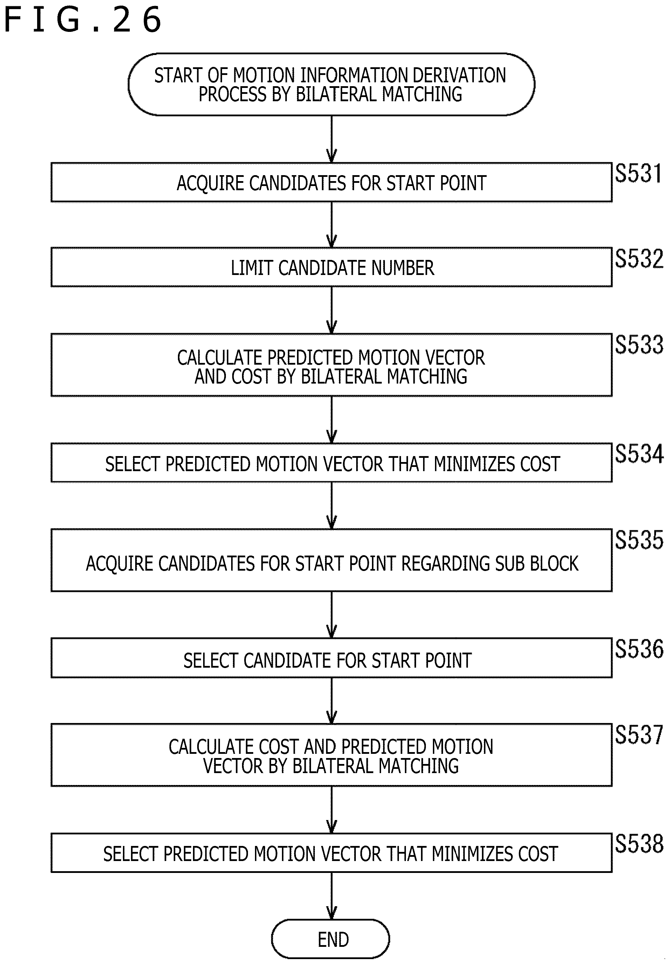

   FIG. 26 is a flow chart illustrating another motion information derivation process by bilateral matching.
[FIG. 27]

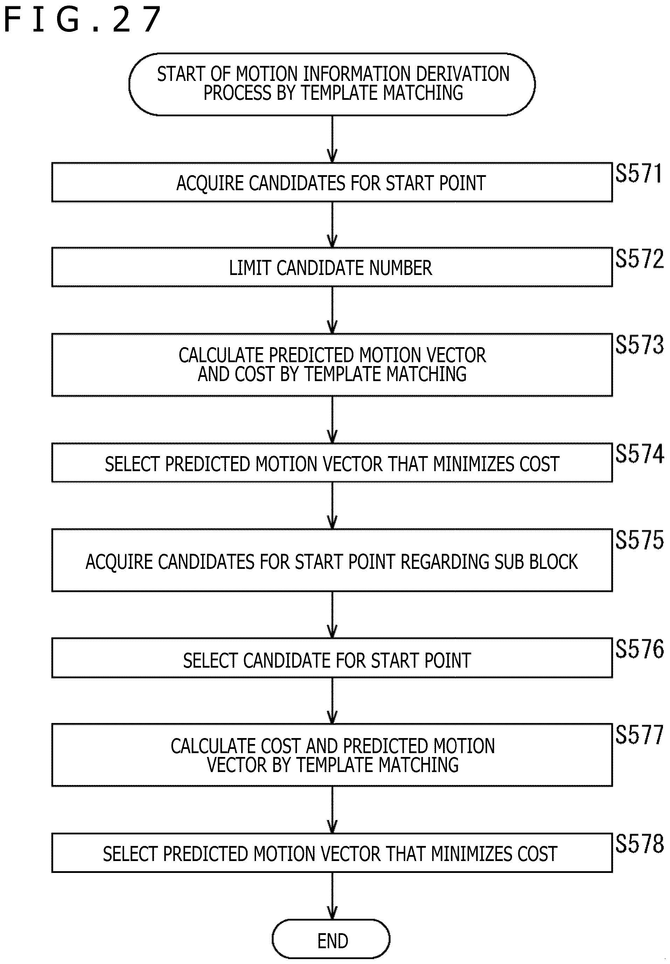

   FIG. 27 is a flow chart illustrating another motion information derivation process by template matching.
[FIG. 28]

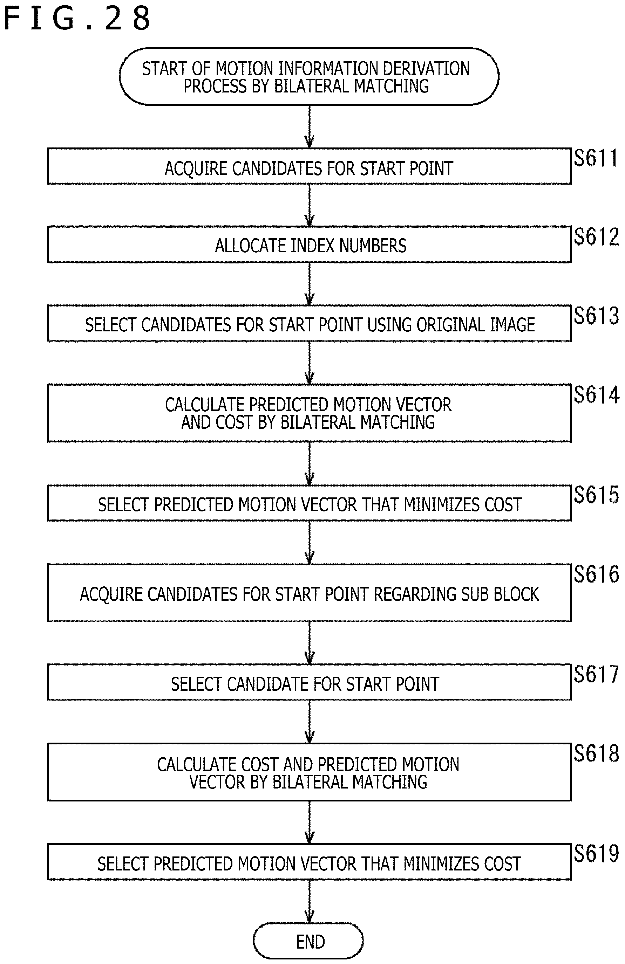

   FIG. 28 is a flow chart illustrating a further motion information derivation process by bilateral matching.
[FIG. 29]

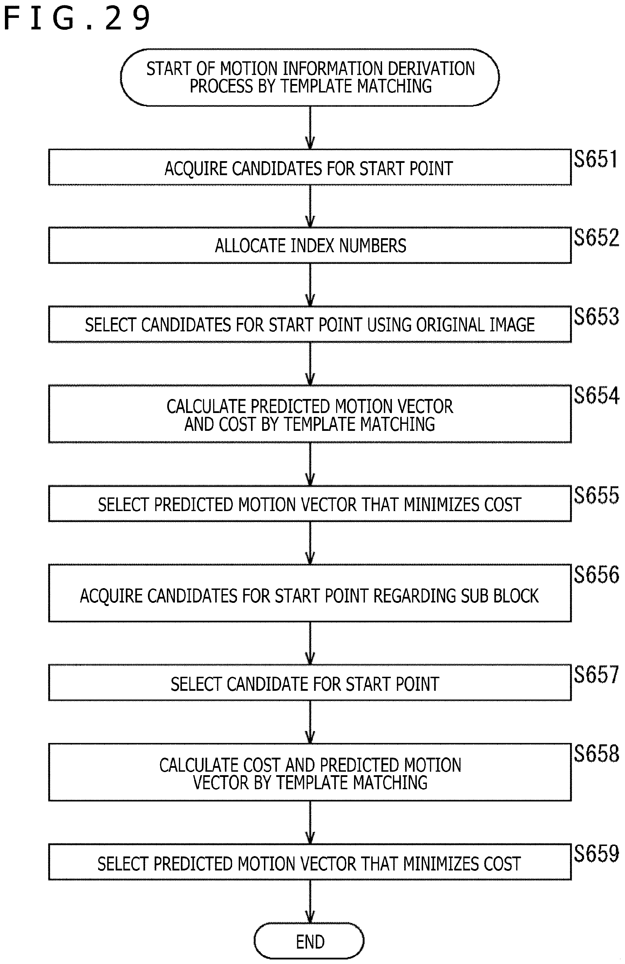

   FIG. 29 is a flow chart illustrating a further motion information derivation process by template matching.
[FIG. 30]

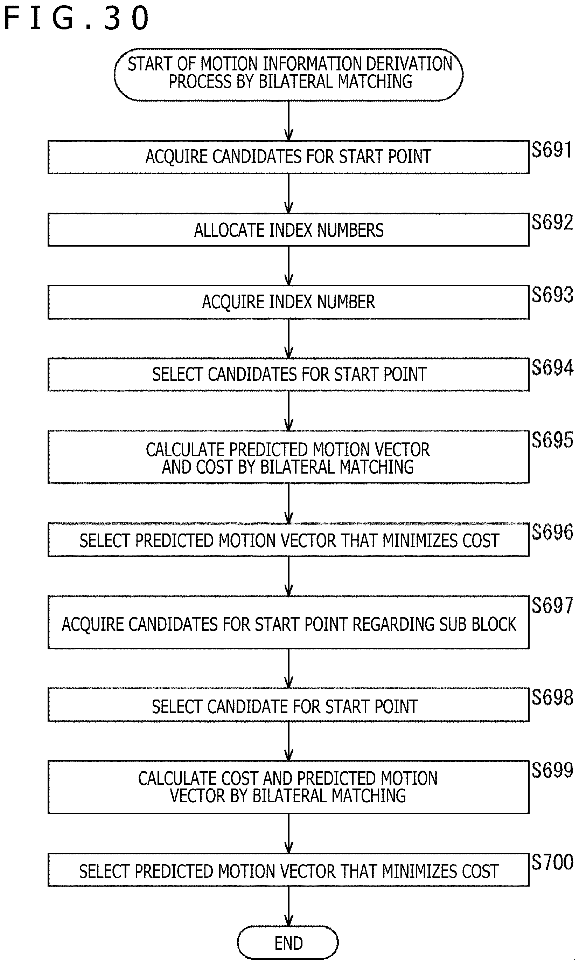

   FIG. 30 is a flow chart illustrating a still further motion information derivation process by bilateral matching.
[FIG. 31]

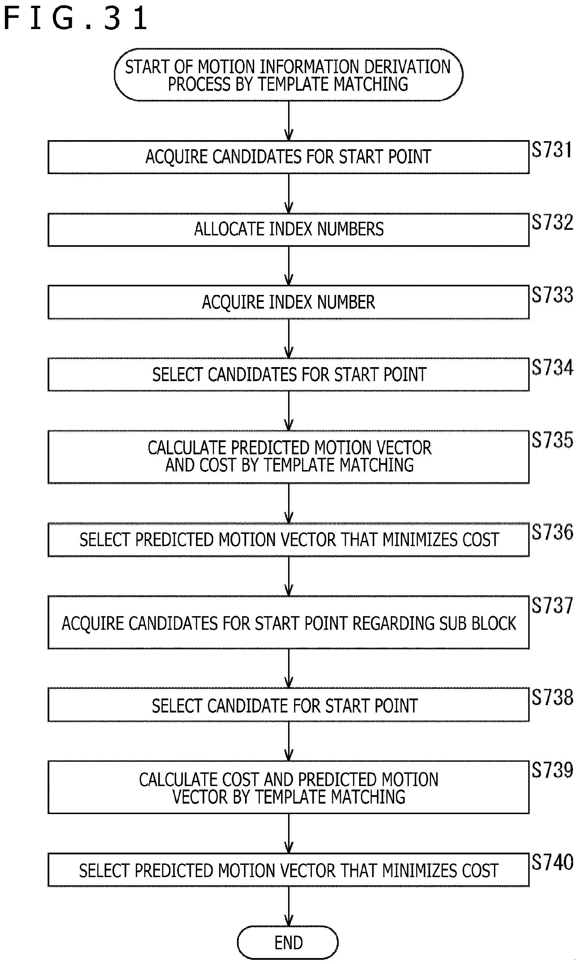

   FIG. 31 is a flow chart illustrating a still further motion information derivation process by template matching.
[FIG. 32]

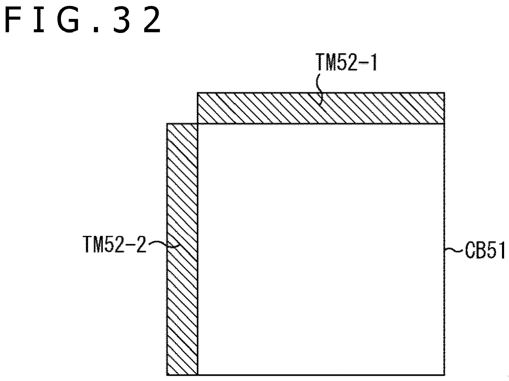

   FIG. 32 is a view illustrating a delay in template matching.
[FIG. 33]

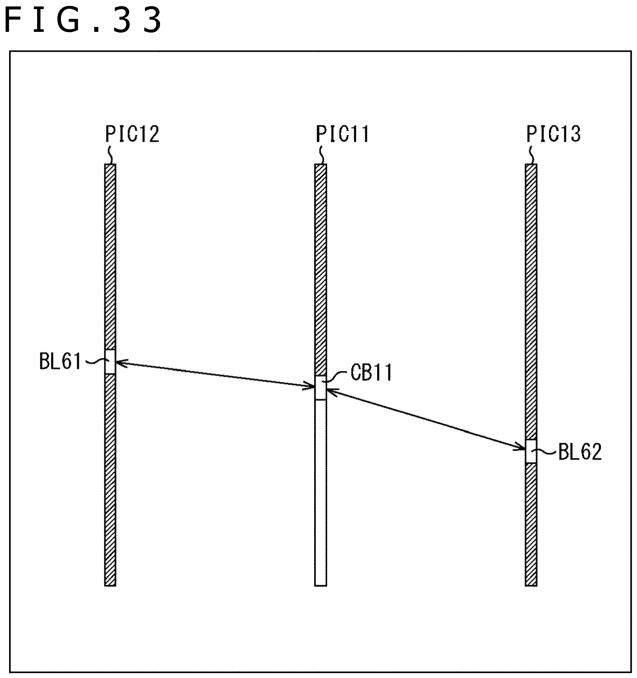

   FIG. 33 is a view illustrated improved template matching.
[FIG. 34]

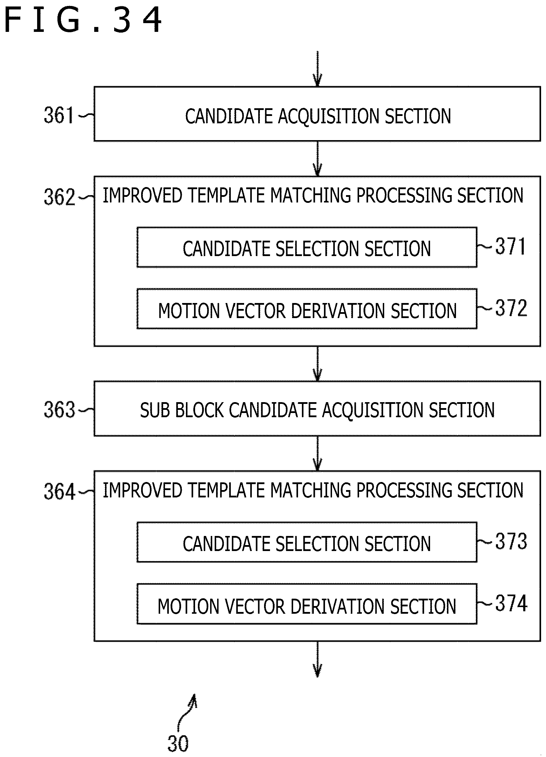

   FIG. 34 is a view depicting an example of a configuration of a prediction section.
[FIG. 35]

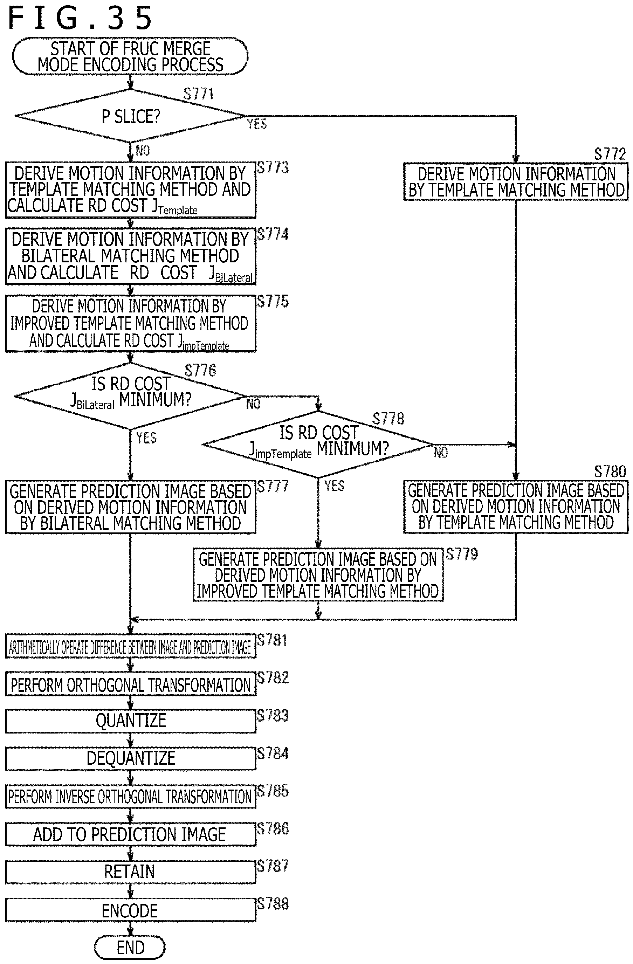

   FIG. 35 is a flow chart illustrating a FRUC merge mode encoding process.
[FIG. 36]

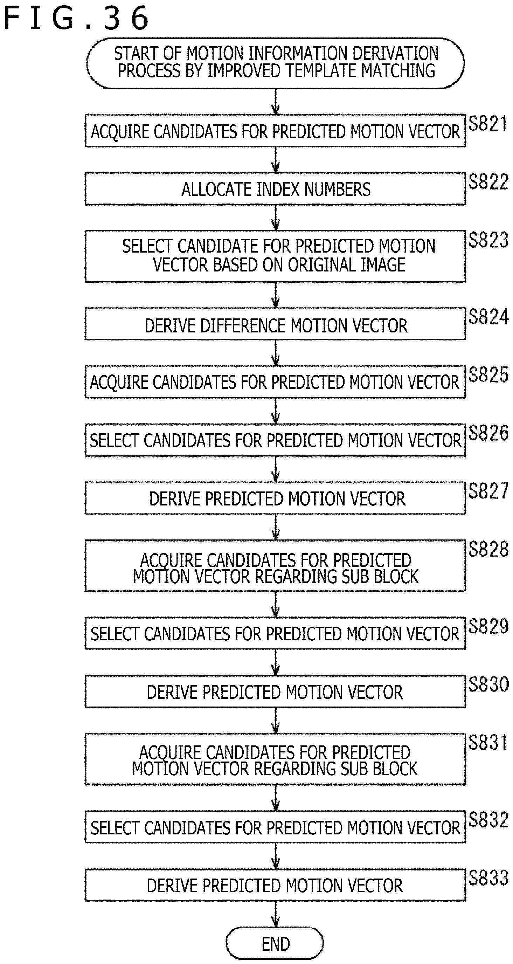

   FIG. 36 is a flow chart illustrating a motion information derivation process by improved template matching.
[FIG. 37]

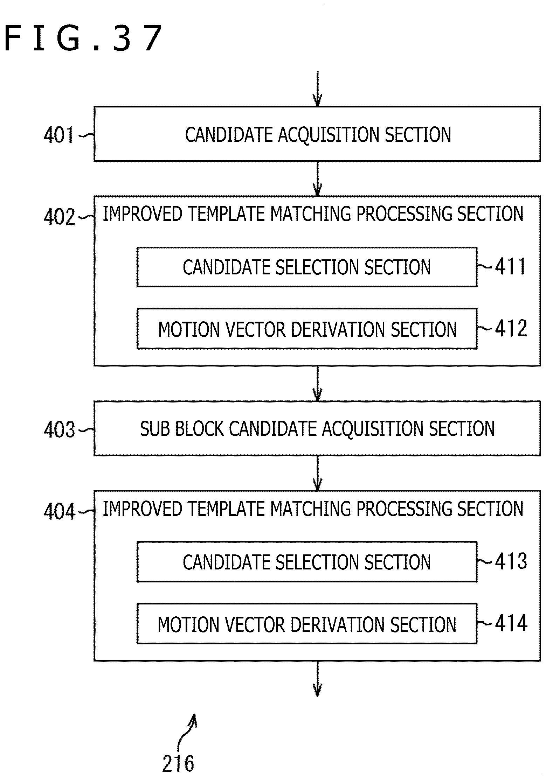

   FIG. 37 is a view depicting a further example of a configuration of a prediction section.
[FIG. 38]

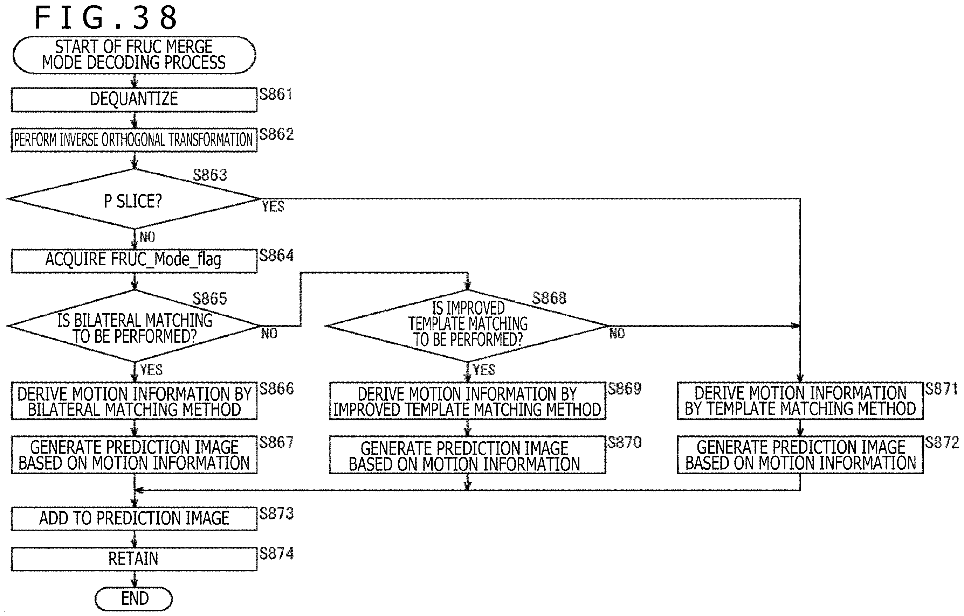

   FIG. 38 is a flow chart illustrating a further FRUC merge mode decoding process.
[FIG. 39]

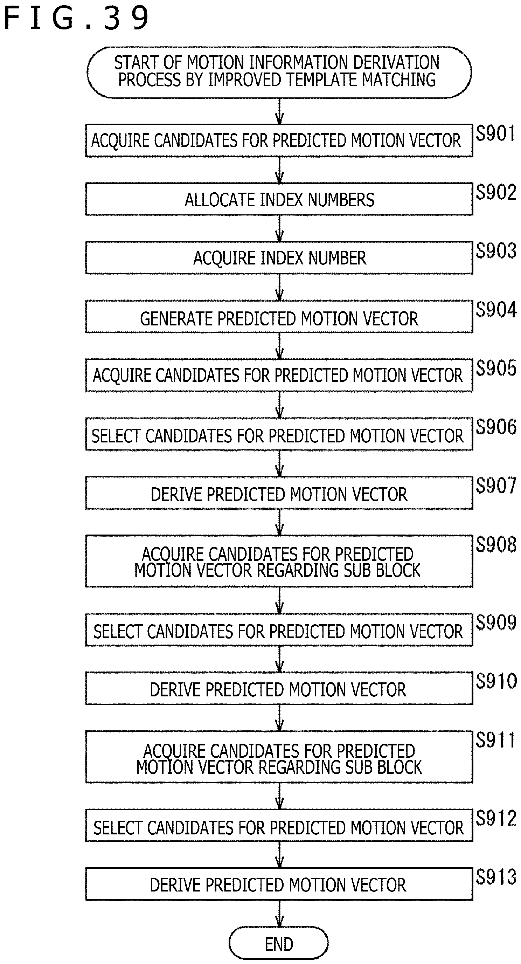

   FIG. 39 is a flow chart illustrating a motion information derivation process by improved template matching.
[FIG. 40]

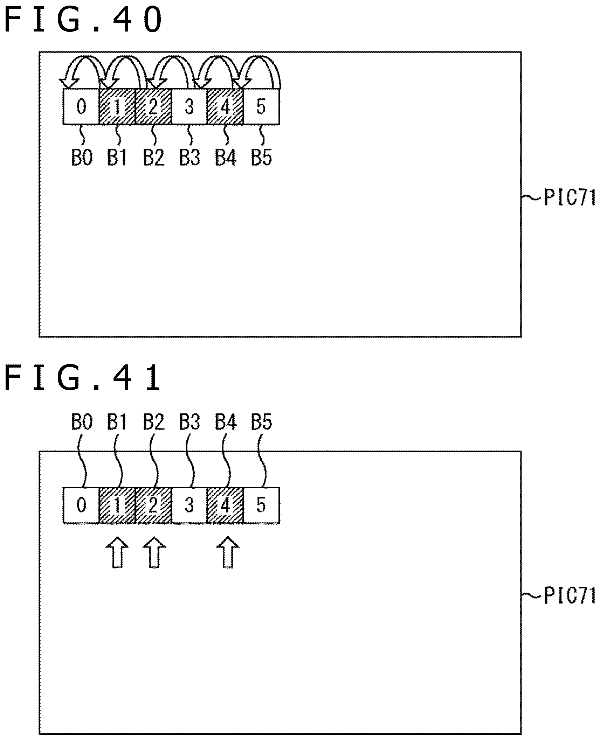

   FIG. 40 is a view depicting reference to a FRUC block.
[FIG. 41]
   FIG. 41 is a view depicting reference to a FRUC block.
[FIG. 42]

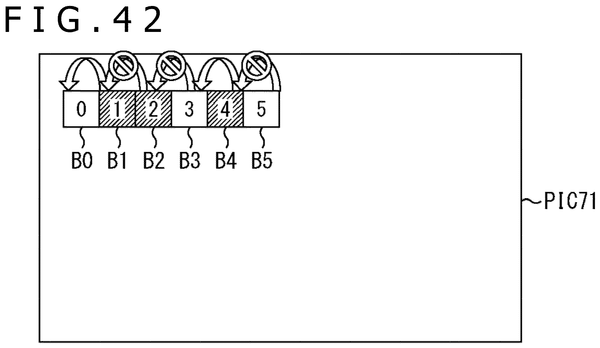

   FIG. 42 is a view depicting reference to a FRUC block.
[FIG. 43]

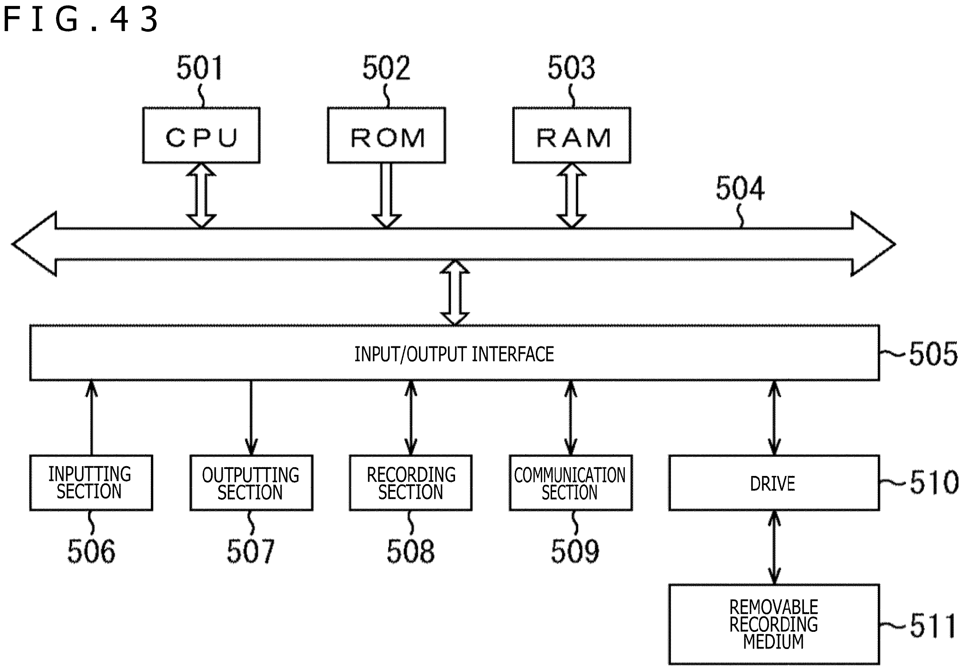

   FIG. 43 is a view depicting an example of a configuration of a computer.

### [Description of Embodiments]

In the following, embodiments to which the present technology is applied are described with reference to the drawings.

### <First Embodiment>

### <Types of Inter-Prediction Mode>

In the present technology, a moving image that is a processing target is encoded and decoded by an inter-prediction mode or an intra-prediction mode.

At the time of encoding or decoding of a moving image, a picture corresponding to a frame configuring the moving image is encoded and decoded in a processing unit (encoding unit) called CU (Coding Unit).

The CU is a block that is formed by recursively dividing a CTU (Coding Tree Unit) that is a maximum encoding unit and has a variable size. In the following description, unless otherwise specified, the CTU is referred to simply as CU and a CU obtained by dividing a CTU is referred to as sub block. Further, in the case where the CU and the sub block need not be distinguished specifically from each other in the following description, each of them is sometimes referred to simply as block.

Furthermore, the inter-prediction mode includes a plurality of modes, for example, as depicted in FIG. 1, and encoding and decoding are performed in accordance with one of the plurality of modes.

In the example depicted in FIG. 1, the inter-prediction mode is classified into a skip mode and a non-skip mode.

In the non-skip mode, a prediction residual that is, in regard to a block in a picture, a difference between the block and a reference block of a reference picture that is a reference destination of the block is placed into a bit stream obtained by encoding. In contrast, in the skip mode, the prediction residual is not placed into a bit stream.

Further, the non-skip mode is further classified into a merge mode and a non-merge mode. In the non-merge mode, in regard to a block in a picture, a difference motion vector that indicates an error of a predicted motion vector determined in regard to the block is placed into a bit stream obtained by encoding. In contrast, in the merge mode, such difference motion vector is not placed into a bit stream.

Further, the non-merge mode in the non-skip mode includes an affine AMVP (Advanced Motion Vector Prediction) mode indicated by an arrow mark A11, a Non-FRUC mode indicated by an arrow mark A12, namely, an ordinary AMVP mode, and a FRUC mode indicated by an arrow mark A13.

The affine AMVP mode is a mode for deriving movement information utilizing affine transformation. The AMVP mode is a mode in which, in regard to a block in a picture, a prediction residual, a candidate for a predicted motion vector for obtaining a predicted motion vector, and a difference motion vector are placed into a bit stream. In particular, a candidate for a predicted motion vector and a difference motion vector are placed as movement information into a bit stream.

Here, an index or the like indicating one of a plurality of peripheral regions around a block of a processing target is placed in a bit stream as information indicating a candidate for a predicted motion vector. In the AMVP mode, upon decoding, a vector obtained by adding a difference motion vector to a predicted motion vector of a peripheral region that is a candidate for a predicted motion vector is used as a motion vector of the block of the processing target.

Further, the FRUC mode indicated by the arrow mark A13 is a mode in which, in regard to a block in a picture, FRUC_Mode_flag indicating by which one of a template matching method and a bilateral matching method motion information is to be derived, a prediction residual, and a difference motion vector are placed into a bit stream. The FRUC mode is a mode in which motion information is derived on the decoder side taking the AMVP mode as a basis. In the following description, the FRUC mode indicated by the arrow mark A13 is sometimes referred to specifically as FRUC AMVP mode.

Further, the merge mode in the non-skip mode includes a FRUC mode indicated by an arrow mark A14, a merge mode in AMVP indicated by an arrow mark A15, and an affine merge mode indicated by an arrow mark A16.

The FRUC mode indicated by the arrow mark A14 is a mode in which, in regard to a block in a picture, FRUC_Mode_flag and a prediction residual are placed into
a bit stream. In the following description, the FRUC mode indicated by the arrow mark A14 is sometimes referred to specifically as FRUC merge mode.

The merge mode in AMVP indicated by the arrow mark A15 is a mode in which, in regard to a block in a picture, a prediction residual and a candidate for a predicted motion vector are placed into a bit stream, and this merge mode is sometimes referred to specifically as AMVP merge mode.

The affine merge mode indicated by the arrow mark A16 is different from the affine AMVP mode indicated by the arrow mark A11 in that a difference motion vector is not placed into a bit stream.

Further, the skip mode is classified into a FRUC mode and a Non-FRUC mode. In particular, the skip mode includes a FRUC mode indicated by an arrow mark A17, a merge mode indicated by an arrow mark A18, and an affine merge mode indicated by an arrow mark A19.

The FRUC mode indicated by the arrow mark A17 is a mode in which, in regard to a block in a picture, FRUC_Mode_flag is placed into a bit stream. In the following description, the FRUC mode indicated by the arrow mark A17 is sometimes referred to specifically as skip FRUC mode.

The merge mode indicated by the arrow mark A18 is a mode in which, in regard to a block in a picture, a candidate for a predicted motion vector is placed into a bit stream, and, in the following description, this merge mode is sometimes referred to specifically as skip merge mode.

The affine merge mode indicated by the arrow mark A19 is different from the affine merge mode indicated by the arrow mark A16 in that a prediction residual is not placed into a bit stream.

In the present technology, one of the modes indicated by the arrow marks A11 to A19 of FIG. 1 is selected on the encoder side and a block on a picture is encoded. It is to be noted that, in the following description, the description is continued assuming that, in order to simplify the description, the skip mode and modes relating to affine transformation are not selected and a mode upon encoding of a block is selected from among the AMVP mode, FRUC AMVP mode, AMVP merge mode, and FRUC merge mode.

### <Example of Configuration of Image Encoding Apparatus>

Now, an image encoding apparatus as an image processing apparatus to which the present technology is applied is described.

FIG. 2 is a view depicting an example of a configuration of an embodiment of the image encoding apparatus to which the present technology is applied.

An image encoding apparatus 11 depicted in FIG. 2 is an encoder that encodes a prediction residual between an image and a prediction image therefor like AVC (Advanced Video Coding) or HEVC (High Efficiency Video Coding). For example, the technology of HEVC or the technology proposed by JVET is incorporated in the image encoding apparatus 11.

It is to be noted that, in FIG. 2, main ones of processing sections, flows of data and so forth are depicted and those depicted in FIG. 2 may not be all ones. In particular, a processing section that is not depicted as a block in FIG. 2 may exist in the image encoding apparatus 11 or a process or a flow of data that is not depicted as an arrow mark or the like in FIG. 2 may exist.

The image encoding apparatus 11 includes a control section 21, an arithmetic operation section 22, a transformation section 23, a quantization section 24, an encoding section 25, a dequantization section 26, an inverse transformation section 27, another arithmetic operation section 28, a frame memory 29, and a prediction section 30. The image encoding apparatus 11 performs encoding for each CU or for each sub block for an inputted picture that is a moving image of a unit of a frame.

In particular, the control section 21 of the image encoding apparatus 11 sets encoding parameters including header information Hinfo, prediction information Pinfo, transformation information Tinfo and so forth on the basis of an input from the outside or the like.

The header information Hinfo includes information such as, for example, a video parameter set (VPS (Video Parameter Set)), a sequence parameter set (SPS (Sequence Parameter Set)), a picture parameter set (PPS (Picture Parameter Set)), and a slice header (SH).

The prediction information Pinfo includes, for example, split flag indicative of presence or absence of division in a horizontal direction or a vertical direction in each division hierarchy upon formation of a sub block (PU (Prediction Unit)). Further, the prediction information Pinfo includes, for each block, mode information pred_mode_flag indicative of whether a prediction process of the block is the intra-prediction process or the inter-prediction process.

Where the mode information pred_mode_flag indicates the inter-prediction process, the prediction information Pinfo includes Merge_flag, FRUC_flag, FRUC_Mode_flag, motion vector information, reference image specification information for specifying a reference image (reference picture) and so forth.

Merge_flag is flag information indicative of whether or not the mode of the inter-prediction process is the merge mode. For example, in the case where the mode of the inter-prediction process is the merge mode, the value of Merge_flag is set to 1, but in the case where the mode of the inter-prediction process is not the merge mode, the value of Merge_flag is set to 0.

FRUC_flag is flag information indicative of whether or not the mode is the FRUC mode, and, for example, in the case where the mode is the FRUC mode, the value of the FRUC_flag is set to 1, but where the mode is not the FRUC mode, the value of the FRUC_flag is set to 0.

FRUC_Mode_flag is flag information indicating, in the case where the mode is the FRUC mode, by which one of a template matching method and a bilateral matching method motion information is to be derived. For example, where motion information is to be derived by bilateral matching, the value of FRUC_Mode_flag is set to 1, but in the case where the motion information is to be derived by template matching, the value of FRUC_Mode_flag is set to 0.

The motion vector information is information configured from at least one of a candidate for a predicted motion vector or a difference motion vector described above.

Where the mode information pred_mode_flag indicates the intra-prediction process, the prediction information Pinfo includes intra-prediction mode information indicative of the intra-prediction mode that is a mode of the intra-prediction process and so forth. Naturally, the substance of the prediction information Pinfo can be determined arbitrarily, and any information other than the example described above may be included in the prediction information Pinfo.

The transformation information Tinfo includes TBSize indicative of a size of a processing unit (transformation block) called TB (Transform Block). While a TU (Transform Unit) that is a processing unit of an orthogonal transformation process is configured from a TB for each luminance (Y) and color difference (Cb, Cr), it is assumed here that the TU is same as the sub block.

Further, in the image encoding apparatus 11, a picture of a moving image that is an encoding target (hereinafter referred to sometimes as original image) is supplied to the arithmetic operation section 22 and the prediction section 30.

The arithmetic operation section 22 determines inputted pictures in order as a picture of an encoding target and sets a block of an encoding target, namely, a CU or a sub block, to the picture of the encoding target on the basis of split flag of the prediction information Pinfo. The arithmetic operation section 22 subtracts a prediction image P in a unit of a block supplied from the prediction section 30 from an image I of the block of the encoding target (hereinafter referred to sometimes as current block) to calculate a prediction residual D and supplies the calculated prediction residual D to the transformation section 23.

The transformation section 23 performs orthogonal transformation and so forth for the prediction residual D supplied from the arithmetic operation section 22 on the basis of the transformation information Tinfo supplied from the control section 21 to derive a transformation coefficient Coeff and supplies the derived transformation coefficient Coeff to the quantization section 24.

The quantization section 24 performs scaling (quantization) for the transformation coefficient Coeff supplied from the transformation section 23 on the basis of the transformation information Tinfo supplied from the control section 21 to derive a quantization transformation coefficient level level. The quantization section 24 supplies the quantization transformation coefficient level level to the encoding section 25 and the dequantization section 26.

The encoding section 25 encodes the quantization transformation coefficient level level or the like supplied from the quantization section 24 by a predetermined method. For example, the encoding section 25 transforms encoding parameters (header information Hinfo, prediction information Pinfo, transformation information Tinfo and so forth) supplied from the control section 21 and the quantization transformation coefficient level level supplied from the quantization section 24 into a syntax value of each syntax element in accordance with a definition of a syntax table. Then, the encoding section 25 encodes the syntax values by arithmetic encoding or the like.

The encoding section 25 multiplexes encoded data of a bit string of the syntax elements obtained, for example, as a result of the encoding and outputs the multiplexed encoded data as an encoded stream.

The dequantization section 26 performs scaling (dequantization) for a value of the quantization transformation coefficient level level supplied from the quantization section 24 on the basis of the transformation information Tinfo supplied from the control section 21 to derive a transformation coefficient Coeff_IQ after the dequantization. The dequantization section 26 supplies the transformation coefficient Coeff_IQ to the inverse transformation section 27. The dequantization performed by the dequantization section 26 is a reverse process to that of the quantization performed by the quantization section 24 and is a process similar to that of the dequantization performed by an image decoding apparatus hereinafter described.

The inverse transformation section 27 performs inverse orthogonal transformation and so forth for the transformation coefficient Coeff_IQ supplied from the dequantization section 26 on the basis of the transformation information Tinfo supplied from the control section 21 to derive a prediction residual D'. The inverse transformation section 27 supplies the prediction residual D' to the arithmetic operation section 28.

The inverse orthogonal transformation performed by the inverse transformation section 27 is an inverse process to that of the orthogonal transformation performed by the transformation section 23, and is a process similar to that of inverse orthogonal transformation performed by the image decoding apparatus hereinafter described.

The arithmetic operation section 28 adds the prediction residual D' supplied from the inverse transformation section 27 and a prediction image P supplied from the prediction section 30 and corresponding to the prediction residual D' to derive a local decoded image Rec. The arithmetic operation section 28 supplies the local decoded image Rec to the frame memory 29.

The frame memory 29 reconstructs a decoded image in a unit of a picture using the local decoded image Rec supplied from the arithmetic operation section 28 and stores the reconstructed decoded image into a buffer in the frame memory 29.

The frame memory 29 reads out and supplies a decoded image designated by the prediction section 30 as a reference image (reference picture) from the buffer to the prediction section 30. Alternatively, the frame memory 29 may store the header information Hinfo, prediction information Pinfo, transformation information Tinfo and so forth according to generation of the decoded image into the buffer in the frame memory 29.

The prediction section 30 acquires a decoded image that indicates time same as that of the block of the encoding target and is stored in the frame memory 29 as a reference image on the basis of the mode information pred_mode_flag of the prediction information Pinfo. Then, the prediction section 30 performs the intra-prediction process of the intra-prediction mode indicated by intra-prediction mode information for the block of the encoding target using the reference image.

Further, the prediction section 30 acquires a decoded image that indicates time different from that of the block of the encoding target and is stored in the frame memory 29 as a reference image on the basis of the mode information pred_mode_flag of the prediction information Pinfo and the reference image specification information. The prediction section 30 performs the inter-prediction process in a mode determined by Merge_flag and FRUC_flag for the reference image on the basis of Merge_flag, FRUC_flag, FRUC_Mode_flag, motion vector information and so forth. It is to be noted that, upon the inter-prediction process, also the supplied original image is used as occasion demands.

The prediction section 30 supplies the prediction image P of the block of the encoding target generated as a result of the intra-prediction process or the inter-prediction process to the arithmetic operation section 22 and the arithmetic operation section 28.

### <FRUC Mode>

Here, the FRUC mode is described.

For example, in inter-prediction, in order to perform motion compensation, motion information such as a predicted motion vector and a reference index is required by the decoder side.

Normally, the predicted motion vector is included in an encoded stream in such form as difference motion vector information from a candidate for a predicted motion vector, and the decoder reconstructs a predicted motion vector on the basis of the candidate for a predicted motion vector and the difference motion vector information.

Since, if the difference motion vector is stored in an encoded stream, then the code amount of the encoded stream increases, the encoding efficiency decreases.

The FRUC technology is one of methods for prediction of motion information, namely, for derivation of motion information and, if motion information is derived by the decoder side by the FRUC technology, then not only a predicted motion vector can be predicted with high accuracy but also the code amount of the motion information can be reduced, and the encoding efficiency can be increased. Especially, since motion information is not required in the skip FRUC mode, the encoding efficiency can be increased significantly.

As described above, in the FRUC mode, one of the bilateral matching method and the template matching method can be selected by the encoder side and, on the decoder side, a motion information can be derived by the method designated by the encoder side.

For example, in bilateral matching, a picture PIC11 that is a picture (frame) of an encoding target and a picture PIC12 and a picture PIC13 that are reference pictures are used to derive a predicted motion vector of a current block CB11 on the picture PIC11 as depicted in FIG. 3.

It is to be noted that the horizontal direction in FIG. 3 indicates time and, in this example, the picture PIC12 is a frame at time older than that of the picture PIC11 in a displaying order and the picture PIC13 is a frame at time newer than that of the picture PIC11 in the displaying order.

Especially, the picture PIC12 is a picture (frame) indicated as a reference picture by a reference list Ref0 as reference image specification information. On the other hand, the picture PIC13 is a picture (frame) indicated as a reference picture by a reference list Ref1 as the reference image specification information.

Here, the reference list Ref0 is a list that basically indicates an older frame than the picture PIC11 of the encoding target as a reference picture, and a plurality of pictures including the picture of the encoding target can be designated as reference pictures in the reference list Ref0.

Similarly, the reference list Ref1 is a list basically indicating a newer frame than the picture PIC11 of the encoding target as a reference picture, and, in the reference list Ref1, a plurality of pictures including the picture of the encoding target can be designated as the reference picture.

Further, in the example depicted in FIG. 3, TDO indicates a time distance between the picture PIC11 and the picture PIC12 and TD1 indicates a time distance between the picture PIC11 and the picture PIC13. Here, for example, the time distance TDO and the time distance TD1 are equal distances to each other.

For example, upon derivation of the predicted motion vector of the current block CB11 that is an encoding target, in regard to a linear line L11 passing the center of the current block CB11, a block BL11 centered at a point of intersection with a linear line L11 in the picture PIC12 and a block BL12 centered at a point of intersection with the linear line L11 in the picture PIC13 are selected. Then, the difference between the block BL11 and the block BL12 is calculated.

Further, the difference is calculated in regard to all combinations of the blocks BL11 and the blocks BL12 while successively displacing the positions of the block BL11 and the block BL12 in a search range to search for a combination in which the difference is smallest. Then, a vector indicative of the block of the combination in which the difference is smallest is determined as a predicted motion vector to be determined.

It is to be noted that, at this time, each block is selected such that a linear line coupling the center of the block BL11 and the center of the block BL12 passes the center of the current block CB11 without fail. In other words, the difference between the block BL11 and the block BL12 that couple the current block CB11 linearly is calculated.

In this example, a motion vector MVO and a motion vector MV1 indicated by arrow marks in FIG. 3 are obtained as predicted motion vectors of the current block CB11.

The motion vector MVO is a vector that has a start point at the position on the picture PIC12 having the same positional relationship with the center position of the current block CB11 and an end point at the position of the center of the block BL11. Similarly, the motion vector MV1 is a vector that has a start point at the position on the picture PIC13 having the same positional relationship with the center position of the current block CB11 and an end point at the position of the center of the block BL12.

In this manner, in bilateral matching, a model in which a texture moves linearly is assumed between the picture PIC12 and the picture PIC13, and an object that moves (performs a movement) at a constant speed applies to the model.

FIG. 4 is a view that represents the pictures one-dimensionally in order to facilitate understandings that blocks on two reference pictures are coupled linearly to a current block in bilateral matching. It is to be noted that, in FIG. 4, like elements to those in FIG. 3 are denoted by the same symbols and description of them is omitted suitably.

In this example, the current block CB11, a block BL21 on the picture PIC12, and a block BL22 on the picture PIC13 are coupled linearly to each other. In particular, the current block CB11, the block BL21, and the block BL22 are positioned on a linear line L21, and the difference between the block BL21 and the block BL22 is calculated in order to derive a predicted motion vector.

Here, in regard to the picture PIC12 and the picture PIC13 that are reference pictures, all regions of the picture PIC12 and the picture PIC13 are encoded or decoded already at a point of time at which the current block CB11 is determined as an encoding target or a decoding target.

In contrast, in regard to the picture PIC11, although a region on the upper side with respect to the current block CB11 in FIG. 4 is encoded or decoded already at a point of time at which the current block CB11 is determined as an encoding target or a decoding target, a region on the lower side with respect to the current block CB11 in FIG. 4 remains in a state in which it is not encoded or decoded as yet.

Upon derivation of a predicted motion vector of the current block CB11, the block that becomes a calculation target of a difference varies by varying the angle (inclination) of the linear line L21.

As described above, in the bilateral matching, a predicted motion vector is derived by block matching in which two reference pictures that are different in displaying time from a picture of an encoding target and are different in displaying time from each other are used while successively varying the block that is a calculation target of the difference. Consequently, the predicted motion vector can be derived (predicted) with high accuracy not only by the encoder side but also by the decoder side.

Further, in template matching, block matching is performed between a picture of an encoding target and a reference picture having displaying time different from that of the picture of the encoding target, for example, as depicted in FIG. 5. It is to be noted that, in FIG. 5, like elements to those in FIG. 3 are denoted by the same symbols and description of them is omitted suitably.

In the example depicted in FIG. 5, the current block CB11 on the picture PIC11 is an encoding target and block matching is performed between the picture PIC11 and the picture PIC12.

In the block matching, a region TM11-1 and another region TM11-2 that are adjacent to the current block CB11 on the picture PIC11 are determined as templates that are regions to be used for block matching, namely, for calculation of the difference. It is to be noted that, where there is no necessity to specifically distinguish the region TM11-1 and the region TM11-2 from each other, each of them is sometimes referred to simply as region TM11.

The region TM11 is a region that has been encoded or decoded already at a point of time at which the current block CB11 is determined as a processing target.

Further, in the picture PIC12 that is a reference picture, a region TM12-1 and a region TM12-2 having the same size and shape as those of the region TM11-1 and region TM11-2 are templates.

It is to be noted that the shape and the size of the region TM12-1 are same as those of the region TM11-1, and the shape and the size of the region TM12-2 are same as those of the region TM11-2. Further, a relative positional relationship between the region TM12-1 and the region TM12-2 is same as a relative positional relationship between the region TM11-1 and the region TM11-2.

In the following, in the case where there is no necessity to specifically distinguish the region TM12-1 and the region TM12-2 from each other, each of them is referred to also as region TM12.

In template matching, the difference between a region TM11 and a region TM12 that have the same shape is calculated at each position while the position of the region TM12 is successively displaced in a predetermined search range to search for a region of the position of the region TM12 at which the difference is smallest.

In this example, upon calculation of a difference, the difference between the region TM11-1 and the region TM12-1 and the difference between the region TM11-2 and the region TM12-2 are calculated.

Then, the vector indicative of the position of the region TM12 when the difference is smallest is a predicted motion vector to be determined. In this example, as the predicted motion vector of the current block CB11, a motion vector MVO represented by an arrow mark in FIG. 5 is obtained.

For example, a block that has a shape and a size same as those of the current block CB11 and has a relative positional relationship to the region TM12 in the picture PIC12 same as a relative positional relationship between the region TM11 and the current block CB11 is determined as block BL31. Further, it is assumed that, when the positions of the region TM12 and the block BL31 are such positions as depicted in FIG. 5, the difference between the region TM11 and the region TM12 is in the minimum.

In this case, a vector that has a start point at the position on the picture PIC12 having the same positional relationship to the center position of the current block CB11 and has an end point at the position of the center of the block BL31 is determined as motion vector MVO.

FIG. 6 is a view representing pictures one-dimensionally in order to facilitate understandings of a relationship between a template of a reference picture and a template adjacent the current block in template matching. It is to be noted that like portions in FIG. 6 to those in FIG. 3 or FIG. 5 are denoted by the same symbols and description of them is suitably omitted.

In this example, the region TM11 of the template adjacent the current block CB11 and the region TM12 of the template on the picture PIC12 that is a reference picture are depicted as being tied by a linear line, and the difference between the region TM11 and the region TM12 is calculated in order to drive a predicted motion vector.

Here, at the point of time at which the current block CB11 becomes an encoding target or a decoding target, the picture PIC12 and the picture PIC13 that are reference pictures are encoded or decoded already over an overall area of the picture PIC12 and the picture PIC13.

In contrast, although, in regard to the picture PIC11, at the point of time at which the current block CB11 becomes an encoding target or a decoding target, also the region on the upper side in FIG. 6 than the current block CB11 is encoded or decoded already, the region on the lower side in FIG. 6 than the current block CB11 is in a state in which it is not encoded or decoded as yet. In this example, the region TM11 is a region encoded or decoded already.

In template matching, it is assumed that the motion vector is same between the current block CB11 and the region TM11 that is a template adjacent the current block CB11. Then, a region similar to the region TM11, namely, the region TM12 having a small difference, is searched out from within the picture PIC12, and the motion vector indicated by a result of the search is determined as a predicted motion vector of the current block CB11.

In this manner, in template matching, while the template position on a reference picture that is a calculation target of the difference is successively changed, a predicted motion vector is derived by block matching in which one reference picture whose displaying time is different from that of the encoding target. Consequently, the predicted motion vector can be derived (predicted) with high accuracy not only by the encoder side but also by the decoder side.

### <Configuration of Prediction Section>

Incidentally, in the prediction section 30 of the image encoding apparatus 11 described above, derivation of motion information, namely, of a predicted motion vector, is performed by bilateral matching or template matching.

For example, the prediction section 30 has a configuration depicted in FIG. 7 as the configuration for deriving motion information by bilateral matching.

In particular, in the example depicted in FIG. 7, the prediction section 30 includes a candidate acquisition section 51, a bilateral matching processing section 52, a sub block candidate acquisition section 53, and a bilateral matching processing section 54.

The candidate acquisition section 51 and the bilateral matching processing section 52 from among the candidate acquisition section 51 to bilateral matching processing section 54 are processing blocks that derive motion information of a CU (CTU) of an encoding target. In contrast, the sub block candidate acquisition section 53 and the bilateral matching processing section 54 are processing blocks that derive motion information of a sub block of an encoding target.

The candidate acquisition section 51 collects predicted motion vectors in peripheral regions adjacent a CU of an encoding target (each of such predicted motion vectors is hereinafter referred to also as adjacent motion vector) as candidates for a predicted motion vector, namely, as candidates for a start point.

For example, if it is assumed that a predicted motion vector of one CU 71 is to be determined as depicted in FIG. 8, then four regions R11-1 to R11-4 adjacent the CU 71 are peripheral regions. It is to be noted that, in the case where there is no necessity to specifically distinguish the region R11-1 to region R11-4 from each other, each of them is sometimes referred to merely as region R11.

For example, each region R11 is a region encoded (decoded) already in regard to the CU 71 by a predetermined method. In other words, a region R11 that is decoded already after it is encoded at the point of time at which the CU 71 is determined as an encoding target is determined as a peripheral region.

Since the regions R11 determined as the peripheral regions are regions encoded already, the prediction section 30 has predicted motion vectors of the regions R11 obtained already.

Therefore, the candidate acquisition section 51 uses the predicted motion vectors of the regions R11 as candidates for a predicted motion vector of the CU 71, namely, as candidates for a start point of the CU 71. It is to be noted that, in the following description, not only adjacent motion vectors but also peripheral regions are suitably referred to as candidates for a start point or candidates for a predicted motion vector.

Referring back to FIG. 7, the candidate acquisition section 51 generates a list of peripheral regions determined in advance in regard to a CU of an encoding target as a list of candidates for a start point (hereinafter referred to also as candidate list). For example, a list of indices indicative of peripheral regions used for derivation of a predicted motion vector in the AMVP merge mode is generated as the candidate list.

Further, the candidate acquisition section 51 acquires candidates for a start point indicated by the generated candidate list, namely, adjacent motion vectors of peripheral regions and supplies the adjacent motion vectors to the bilateral matching processing section 52.

The bilateral matching processing section 52 includes a candidate selection section 61 and a motion vector derivation section 62.

The candidate selection section 61 selects one candidate from among a plurality of candidates for a predicted motion vector (candidates for a start point) indicated by the candidate list.

The motion vector derivation section 62 determines a predicted motion vector of a CU of an encoding target by bilateral matching using each candidate for a predicted motion vector as a start point.

In particular, the motion vector derivation section 62 determines a region determined by adjacent motion vectors that are candidates for a start point on one reference picture (hereinafter referred to as standard reference picture) as a search range and determines blocks in the search range as difference calculation blocks.

Then, the motion vector derivation section 62 calculates a difference between a difference calculation block and a block of a reference picture at time different from the time of the standard reference picture corresponding to the difference calculation block and calculates a cost that can be determined from a result of the calculation. For example, the cost determined in regard to a difference calculation block has a value decreasing as the difference regarding the difference calculation block decreases.

It is to be noted that, in the following description, an index indicative of a candidate for a start point is represented by id and the cost of a predetermined difference calculation block determined in regard to the candidate for a start point indicated by the index id is represented as cost Ccur_bilat(id). Further, a predicted motion vector regarding a predetermined difference calculation block obtained in regard to the candidate for a start point indicated by the index id is represented also as predicted motion vector MVbilat(id).

The motion vector derivation section 62 calculates the predicted motion vector MVbilat(id) and the cost Ccur_bilat(id) with each region determined as a difference calculation block while successively moving the position of the difference calculation block in the search range.

Although details are hereinafter described, it is assumed that, for example, in the motion vector derivation section 62, a plurality of matching processing circuits each of which calculates the predicted motion vector MVbilat(id) and the cost Ccur_bilat(id) by bilateral matching in regard to one candidate for a start point are provided in parallel.

In this case, processing is performed in parallel by the matching processing circuits in regard to candidates for each start point, and from among predicted motion vectors MVbilat(id) calculated for the individual reference pictures in regard to all candidates for a start point, the predicted motion vector MVbilat(id) whose cost Ccur_bilat(id) is lowest is selected as a predicted motion vector of the encoding target by the candidate selection section 61.

Further, as occasion demands, the motion vector derivation section 62 calculates the difference between the predicted motion vector obtained finally and the adjacent motion vector that is a candidate for a predicted motion vector used for derivation of the predicted motion vector as the difference motion vector of the CU of the encoding target.

The bilateral matching processing section 52 supplies the predicted motion vector of the CU of the encoding target to the sub block candidate acquisition section 53.

The sub block candidate acquisition section 53 determines regions within a CU of an encoding target determined in advance in regard to a sub block of an encoding target as peripheral regions and generates a list in which the peripheral regions and predicted motion vectors supplied from the bilateral matching processing section 52 are indicated as candidates for a predicted motion vector of a sub block (such list is hereinafter referred to also as sub block candidate list).

The sub block candidate acquisition section 53 acquires the candidates for a predicted motion vector indicated by the generated sub block candidate list, namely, the adjacent motion vectors of the peripheral regions, and the predicted motion vectors supplied from the bilateral matching processing section 52, and supplies the acquired adjacent motion vectors and predicted motion vectors to the bilateral matching processing section 54.

The bilateral matching processing section 54 performs a process similar to that of the bilateral matching processing section 52 on the basis of the adjacent motion vectors and the predicted motion vectors supplied thereto from the sub block candidate acquisition section 53 to derive a predicted motion vector of the sub block of the encoding target.

The bilateral matching processing section 54 includes a candidate selection section 63 and a motion vector derivation section 64, and the candidate selection section 63 and the motion vector derivation section 64 correspond to the candidate selection section 61 and the motion vector derivation section 62, respectively.

Further, as occasion demands, the motion vector derivation section 64 calculates the difference between the predicted motion vector obtained finally and the candidate for a predicted motion vector used for the derivation of the predicted motion vector as the difference motion vector of the sub block of the encoding target.

In the prediction section 30, the predicted motion vector and the difference motion vector derived by the bilateral matching processing section 52 are obtained as motion information of the CU of the encoding target as described above. Further, the predicted motion vector and the difference motion vector derived by the bilateral matching processing section 54 are obtained as motion information of the sub block of the encoding target.

Incidentally, in bilateral matching, such processes as to select a standard reference picture, further select candidates for a start point in regard to the standard reference picture and determine a predicted motion vector that indicates the lowest cost in regard to the selected candidates for a start point are performed repeatedly. In other words, a process for determining a predicted motion vector is performed repeatedly in order in regard to all combinations of standard reference pictures and candidates for a start point.

Especially, since the processing steps of block matching are great in processing amount, repeated performances of block matching require much time for derivation of a predicted motion vector, resulting in failure to rapidly obtain motion information.

Here, the image encoding apparatus 11 is configured such that at least one of the bilateral matching processing section 52 or the bilateral matching processing section 54 can obtain motion information more rapidly by performing at least part of processes for predicted motion vector derivation in regard to several standard reference pictures or several candidates for a start point in parallel.

As an example, in the case where the motion vector derivation section 62 of the bilateral matching processing section 52 is configured such that it can perform bilateral matching in parallel, a plurality of matching processing circuits are provided in parallel in the motion vector derivation section 62.

For example, it is assumed that N matching processing circuits are provided in the motion vector derivation section 62. In this case, each of the N matching circuits is an arithmetic processing circuit that derives a predicted motion vector MVbilat(id) that indicates the lowest cost Ccur_bilat(id) by bilateral matching in regard to given candidates for a start point.

In the following, it is assumed that the cost Ccur_bilat(id) that is lowest in regard to one candidate for a start point is referred to also as cost Ccur_bilatbest(id), and the predicted motion vector MVbilat(id) corresponding to the cost Ccur_bilat(id) is referred to also as predicted motion vector MVbilatbest(id).

Now, it is assumed that the number of candidates for a predicted motion vector indicated by the candidate list, namely, of candidates for a start point, is N. In this case, in the motion vector derivation section 62, arithmetic operation for deriving a predicted motion vector MVbilatbest(id) in regard to the N candidates for a start point of one standard reference picture can be performed in parallel by the N matching processing circuits, and motion information can be obtained more rapidly.

For example, it is assumed that, in the case where a cost Ccur_bilatbest(id) of a predicted motion vector MVbilatbest(id) is obtained for each of the candidates for a start point in each matching processing circuit, the candidate selection section 61 determines the predicted motion vector MVbilatbest(id) corresponding to the cost Ccur_bilatbest(id) that is lowest from among the costs Ccur_bilatbest(id) as final predicted motion vector of the CU of the encoding target.

It is to be noted that, if the N costs Ccur_bilatbest(id) are compared not in order one by one but are divided into several groups to simultaneously compare the N cost Ccur_bilatbest(id) such as, for example, to successively compare them in the tournament style, then the lowest cost Ccur_bilatbest(id) can be specified more rapidly.

Further, for example, the candidate selection section 61 may be configured such that a plurality of cost arithmetic operation circuits each for selecting one candidate for a start point from among a plurality of candidates for a start point (candidates for a predicted motion vector) are provided in parallel.

In such a case, for example, in one cost arithmetic operation circuit, a process for calculating the cost in regard to one candidate for a start point is performed.

In particular, for example, the cost arithmetic operation circuit determines, in regard to one candidate for a start point, a difference between a block on a standard reference picture indicated by an adjacent motion vector that is the candidate for a start point and a block on a reference picture different from the standard reference picture indicated by the adjacent motion vector and calculates a cost according to the difference.

Here, the cost of a candidate for a start point indicates a predicted motion vector likeness of the candidate for a start point, namely, of the candidate for a predicted motion vector, and the value of the cost has a value that decreases as the difference between blocks on the reference picture decreases.

In the candidate selection section 61, a process for calculating a cost of a candidate for a start point is performed in parallel by a plurality of cost arithmetic operation circuits.

The candidate selection section 61 selects one candidate for a start point that indicates the lowest cost from among all candidates for a start point.

In this case, the motion vector derivation section 62 performs, only in regard to one candidate for a start point selected by the candidate selection section 61, a process for deriving the predicted motion vector MVbilat(id) and the cost Ccur_bilat(id) and determines a predicted motion vector MVbilatbest(id) obtained as a result of the process as a final predicted motion vector of the CU of the encoding target. Accordingly, in this case, it is sufficient if the motion vector derivation section 62 includes a signal matching processing circuit.

In the case where a plurality of cost arithmetic operation circuits are provided in parallel in the candidate selection section 61 in this manner, a process for determining the cost of the candidates for a start point can be performed in parallel, and as a result, motion information can be obtained more rapidly.

Not only in the bilateral matching processing section 52 but also in the bilateral matching processing section 54, the candidate selection section 63 may include a plurality of cost arithmetic operation circuits provided in parallel or the motion vector derivation section 64 may include a plurality of matching processing circuits provided in parallel.

Further, for example, each of a plurality of matching processing circuits provided in the motion vector derivation section 62 and each of a plurality of matching processing circuits provided in the motion vector derivation section 64 may be connected in series to each other. In this case, the candidate selection section 63 determines a predicted motion vector corresponding to the lowest cost from among costs obtained by the matching processing circuits of the motion vector derivation section 64 is determined as a final predicted motion vector of the sub block of the encoding target.

It is to be noted that the following description continues taking a case in which a plurality of matching circuits are provided in parallel to each other in the motion vector derivation section 62 while circuits are not provided in parallel to each other in any of the candidate selection section 61, the candidate selection section 63, and the motion vector derivation section 64 as an example.

Further, for example, the prediction section 30 has a configuration depicted in FIG. 9 as a configuration for deriving motion information by template matching.

In particular, in the example depicted in FIG. 9, the prediction section 30 includes a candidate acquisition section 91, a template matching processing section 92, a sub block candidate acquisition section 93, and a template matching processing section 94.

The candidate acquisition section 91 and the template matching processing section 92 from among the candidate acquisition section 91 to template matching processing section 94 are processing blocks that derive motion information in regard to a CU (CTU) of an encoding target. In contrast, the sub block candidate acquisition section 93 and the template matching processing section 94 are processing blocks that derive motion information in regard to a sub block of an encoding target.

The candidate acquisition section 91 performs operation similar to that of the candidate acquisition section 51 to generate a candidate list and acquires and supplies candidates for a predicted motion vector indicated by a candidate list, namely, adjacent motion vectors of peripheral regions, to the template matching processing section 92.

The template matching processing section 92 includes a candidate selection section 101 and a motion vector derivation section 102.

The candidate selection section 101 selects one candidate from among a plurality of candidates for a predicted motion vector (candidates for a start point) indicated by a candidate list.

The motion vector derivation section 102 determines a predicted motion vector of a CU of an encoding target by template matching determining a candidate for a predicted motion vector as a candidate for a start point.

In particular, the motion vector derivation section 102 determines a region on a reference picture determined by an adjacent motion vector that is a candidate for a start point as a search range and determines a region at a predetermined position in the search range as a template. Then, the motion vector derivation section 102 calculates the difference between the template for a reference picture and a template adjacent a CU of an encoding target by the template matching method and calculates a cost that can be determined from a result of the calculation. For example, the cost determined in regard to a template has a value that decreases as the difference between the templates has a decreasing value.

It is to be noted that, in the following description, an index indicative of a candidate for a start point is represented by id and the cost of a candidate for a start point indicated by the index id in regard to a predetermined template for a reference picture is represented as cost Ccur_temp(id). Further, a predicted motion vector regarding a template for a reference picture obtained in regard to the candidate for a start point indicated by the index id is represented also as predicted motion vector MVtemp(id).

The motion vector derivation section 102 calculates a predicted motion vector MVtemp(id) and a cost Ccur_temp(id) using all regions as a template while successively moving the position of the template in the search range.

Further, the cost Ccur_temp(id) that is lowest in regard to one candidate for a start point is referred to also as cost Ccur_tempbest(id) and the predicted motion vector MVtemp(id) corresponding to the cost Ccur_tempbest(id) is referred to also as predicted motion vector MVtempbest(id). The motion vector derivation section 102 calculates the predicted motion vector MVtempbest(id) and the cost Ccur_tempbest(id) by block matching.

It is assumed that, for example, a plurality of matching processing circuits for calculating the predicted motion vector MVtempbest(id) and the cost Ccur_tempbest(id) by template matching in regard to one candidate for a start point are provided in parallel in the motion vector derivation section 102.

In this case, processing is performed in parallel for the candidates for a start point by the matching processing circuits, and from among the predicted motion vectors MVtempbest(id) calculated for the individual reference pictures in regard to all candidates for a start point, the predicted motion vector MVtempbest(id) that indicates the lowest cost Ccur_tempbest(id) is selected as a predicted motion vector of the CU of the encoding target by the candidate selection section 101.

Further, in the motion vector derivation section 102, as occasion demands, the difference between the predicted motion vector obtained finally and the adjacent motion vector that is a candidate for a predicted motion vector and has been used for derivation of the predicted motion vector is calculated as a difference motion vector of the CU of the encoding target.

The template matching processing section 92 supplies the predicted motion vector of the CU of the encoding target to the sub block candidate acquisition section 93.

The sub block candidate acquisition section 93 performs operation similar to that of the sub block candidate acquisition section 53 using the predicted motion vector from the template matching processing section 92 to generate a sub block candidate list.

The sub block candidate acquisition section 93 acquires candidates for a predicted motion vector indicated by the generated sub block candidate list, namely, the adjacent motion vectors of the peripheral regions, and a predicted motion vector supplied from the template matching processing section 92 and supplies them to the template matching processing section 94.

The template matching processing section 94 performs a process similar to that of the template matching processing section 92 on the basis of the adjacent motion vectors and the predicted motion vectors supplied from the sub block candidate acquisition section 93 to derive a predicted motion vector of the sub block of the encoding target.

The template matching processing section 94 includes a candidate selection section 103 and a motion vector derivation section 104, and the candidate selection section 103 and the motion vector derivation section 104 correspond to the candidate selection section 101 and the motion vector derivation section 102, respectively.

Further, in the motion vector derivation section 104, as occasion demands, the difference between the predicted motion vector obtained finally and the candidate for a predicted motion vector having been used for derivation of the predicted motion vector is calculated as a difference motion vector of the sub block of the encoding target.

In this manner, in the prediction section 30, the predicted motion vector or the difference motion vector derived by the template matching processing section 92 is obtained as motion information of the CU of the encoding target. Further, the predicted motion vector or the difference motion vector derived by the template matching processing section 94 is obtained as motion information of the sub block of the encoding target.

It is to be noted that the prediction section 30 may be configured such that, similarly as in the case of the configuration for deriving motion information by bilateral matching, in at least one of the template matching processing section 92 or the template matching processing section 94, a process for predicted motion vector derivation in regard to several candidates for a reference picture or a start point may be performed in parallel.

As an example, in the case where the motion vector derivation section 102 of the template matching processing section 92 is configured such that it can perform template matching in parallel, the motion vector derivation section 102 includes a plurality of matching circuits provided in parallel.

For example, it is assumed that N matching processing circuits are provided in the motion vector derivation section 102. In this case, each of the N matching circuits is an arithmetic operation processing circuit that derives a cost Ccur_tempbest(id) and a predicted motion vector MVtempbest(id) by template matching in regard to a candidate for a start point given thereto.

Now, for example, it is assumed that the number of candidates for a predicted motion vector indicated by a candidate list, namely, the number of candidates for a start point, is N. In this case, in the motion vector derivation section 102, arithmetic operation for deriving the predicted motion vector MVtempbest(id) can be carried out in parallel in regard to the N candidates for a start point of a reference picture by the N matching processing circuits, and motion information can be obtained more rapidly.

For example, in the case where the cost Ccur_tempbest(id) of the predicted motion vector MVtempbest(id) in regard to each candidate for a start point is obtained in each matching processing circuit, the candidate selection section 101 determines the predicted motion vector MVtempbest(id) corresponding to the cost Ccur_tempbest(id) that is the lowest from among the costs Ccur_tempbest(id) as a final predicted motion vector of the CU of the encoding target.

Further, for example, a plurality of cost arithmetic operation circuits may be provided in parallel in the candidate selection section 101 similarly as in the case of the candidate selection section 61.

It is to be noted that the following description is continued taking a case in which a plurality of matching processing circuits are provided in parallel in the motion vector derivation section 102 while circuits are not provided in parallel in any of the candidate selection section 101, the candidate selection section 103, and the motion vector derivation section 104.

### <Description of Image Encoding Process>

Now, operation of the image encoding apparatus 11 described above is described.

First, an image encoding process by the image encoding apparatus 11 is described with reference to a flow chart of FIG. 10. It is to be noted that this image encoding process is performed in a unit of a CU or in a unit of a sub block.

At step S11, the control section 21 sets encoding parameters on the basis of an input from the outside or the like and supplies the set encoding parameters to associated components of the image encoding apparatus 11.

At step S11, for example, such header information Hinfo, prediction information Pinfo, transformation information Tinfo and so forth as described above are set as encoding parameters.

At step S12, the prediction section 30 decides, on the basis of mode information pred_mode_flag of the prediction information Pinfo supplied from the control section 21, whether or not an inter-prediction process is to be performed. For example, in the case where the value of the mode information pred_mode_flag indicates an inter-prediction process, it is decided at step S12 that an inter-prediction process is to be performed.

In the case where it is decided at step S12 that an inter-prediction process is to be performed, at step S13, the prediction section 30 decides whether or not the value of Merge_flag of the prediction information Pinfo supplied from the control section 21 is 1, namely, whether or not Merge_flag = 1 is satisfied.

In the case where it is decided at step S13 that Merge_flag = 1, namely, it is decided that the applicable mode is the Merge mode, at step S14, the prediction section 30 decides whether or not the value of FRUC_flag of the prediction information Pinfo supplied from the control section 21 is 1, namely, whether or not FRUC-flag = 1 is satisfied.

In the case where it is decided at step S14 that FRUC-flag = 1 is satisfied, namely, the applicable mode is the FRUC mode, the processing advances to step S15.

At step S15, the components of the image encoding apparatus 11 perform an encoding process for encoding an image I (current block) of an encoding target in the FRUC merge mode, and then the image processing process ends therewith.

In the encoding process in the FRUC merge mode, motion information is derived by the FRUC mode and an encoded stream in which the prediction information Pinfo, the quantization transformation coefficient level level and so forth are placed is generated.

The prediction information Pinfo generated at the time includes, for example, Merge_flag, FRUC-flag, FRUC_Mode_flag, and reference image specification information, but does not include motion vector information. Further, when the image I, namely, the current block, is a block of a P slice, the prediction information Pinfo includes FRUC_Mode_flag.

Further, although description is omitted here, in the case of the skip FRUC mode, a process similar to the encoding process in the FRUC merge mode performed at step S15 is performed such that an encoded stream is generated and outputted. However, in the skip FRUC mode, the encoded stream does not have the quantization transformation coefficient level level placed therein.

On other hand, in the case where it is decided at step S14 that FRUC_flag = 1 is not satisfied, in other words, in the case where FRUC_flag = 0 is satisfied and the applicable mode is not the FRUC mode, the processing advances to step S16.

At step S16, the components of the image encoding apparatus 11 perform an encoding process for encoding the image I of the encoding target in the AMVP merge mode, and the image encoding process ends therewith.

It is to be noted that, in the encoding process in the AMVP mode, the prediction section 30 performs motion compensation in the AMVP mode and performs an inter-prediction process. Then, a prediction image P obtained by the inter-prediction process is used to encode the current block, and an encoded stream in which the prediction information Pinfo, the quantization transformation coefficient level level and so forth are placed is generated.

Further, in the case where it is decided at step S13 that FRUC_flag = 1 is not satisfied, namely, that FRUC_flag = 0 is satisfied and the applicable mode is the non-merge mode, the processing advances to step S17.

At step S17, the prediction section 30 decides whether or not the value of FRUC_flag of the prediction information Pinfo supplied from the control section 21 is 1, namely, whether or not FRUC_flag = 1 is satisfied.

In the case where it is decided at step S17 that FRUC_flag = 1 is satisfied, namely, that the applicable mode is the FRUC mode, the processing advances to step S18.

At step S18, the components of the image encoding apparatus 11 perform an encoding process for encoding the image I of the encoding target in the AMVP mode, and the image encoding process ends therewith.

It is to be noted that, in the encoding process in the FRUC AMVP mode, a process similar to the encoding process in the FRUC merge mode is performed to generate an encoded stream. In this case, motion information is derived by the FRUC mode and an encoded stream in which the prediction information Pinfo, the quantization transformation coefficient level level and so forth are placed is generated.

Further, the prediction information Pinfo includes for example, Merge_flag, FRUC_flag, FRUC_Mode_flag, difference motion vector as motion vector information, and reference image specification information. However, when the current block is a block of a P slice, the prediction information Pinfo does not include FRUC_Mode_flag.

On the other hand, in the case where it is decided at step S17 that FRUC_flag = 1 is not satisfied, namely, in the case where FRUC_flag = 0 is satisfied and the applicable mode is not the FRUC mode, the processing advances to step S19.

At step S19, the components of the image encoding apparatus 11 perform an encoding process for encoding the image I of the encoding target in the AMVP mode, and the image encoding process ends therewith.

It is to be noted that, in the encoding process in the AMVP mode, the prediction section 30 performs motion compensation in the AMVP mode to perform an inter-prediction process. Then, a prediction image P obtained by the inter-prediction process is used to encode the current block to generate an encoded stream in which the prediction information Pinfo, the quantization transformation coefficient level level, the motion vector information and so forth are placed.

On the other hand, in the case where it is decided at step S12 that an inter-prediction process is not to be performed, namely, in the case where it is decided that an intra-prediction process is to be performed, the processing advances to step S20.

At step S20, the components of the image encoding apparatus 11 perform an intra-encoding process for encoding the image I of the encoding target in the intra-prediction mode, and the image encoding process ends therewith.

In the intra-encoding process, the prediction section 30 generates a prediction image P in the intra-prediction mode. Then, the prediction image P is used to encode a current block to generate an encoded stream in which the prediction information Pinfo, the quantization transformation coefficient level level and so forth are placed.

The image encoding apparatus 11 encodes an image inputted in response to encoding parameters and outputs an encoded stream obtained by the encoding in such a manner as described above. By encoding an image in an appropriate mode, the encoding efficiency can be improved.

### <Description of Inter-Prediction Process Mode Setting Process>

Now, an inter-prediction process mode setting process corresponding to the process at step S11 of FIG. 10 is described with reference to a flow chart of FIG. 11.

This inter-prediction process mode setting process is a process of a portion of the process at step S11 of FIG. 10 relating to the inter-prediction process mode. In particular, the inter-prediction process mode setting process is a process of a portion by which values of Merge_flag and FRUC_flag are determined. Further, the inter-prediction process mode setting process is performed in a unit of a CU or in a unit of a sub block.

At step S51, the control section 21 controls the components of the image encoding apparatus 11 to perform an encoding process of a block of an encoding target in the FRUC merge mode to calculate an RD cost J_{FRUC_MRG}.

It is to be noted that the RD cost is calculated on the basis of the generation bit amount (code amount) obtained as a result of encoding, an SSE (Error Sum of Squares) of an decoded image or the like.

At step S52, the control section 21 controls the components of the image encoding apparatus 11 to perform an encoding process of the block of the encoding target in the AMVP merge mode to calculate an RD cost J_{MRG}.

At step S53, the control section 21 controls the components of the image encoding apparatus 11 to perform an encoding process of the block of the encoding target in the FRUC AMVP mode to calculate an RD cost J_{FRUC_AMVP}.

At step S54, the control section 21 controls the components of the image encoding apparatus 11 to perform an encoding process of the block of the encoding target in the AMVP mode to calculate an RD cost J_{AMVP}.

At step S55, the control section 21 decides whether or not the RD cost J_{FRUC_MRG} from among the RD cost J_{FRUC_MRG}, the RD cost J_{MRG}, the RD cost J_{FRUC_AMVP}, and the RD cost J_{AMVP} obtained by the processes at step S51 to step S54 is the lowest.

In the case where it is decided at step S55 that the RD cost J_{FRUC_MRG} is lowest, the processing advances to step S56. In this case, as the inter-prediction mode for the current block, the FRUC merge mode is selected, and in the image encoding process described hereinabove with reference to FIG. 10, the encoding process at step S15 is performed to generate an encoded stream.

At step S56, the control section 21 sets Merge_flag and FRUC_flag to Merge_flag = 1 and FRUC_flag = 1, respectively. In other words, the control section 21 sets the value of Merge_flag as the prediction information Pinfo to 1 and sets the value of the FRUC_flag to 1.

At step S57, the control section 21 generates FRUC_Mode_flag on the basis of a derivation result of motion information in the FRUC mode, and the inter-prediction process mode setting process ends therewith. However, when the current block is a block of a P slice, the process at step S57 is not performed and FRUC_Mode_flag is not generated.

For example, in the case where, upon encoding in the FRUC mode, an RD code J_{BiLateral} when the template matching method is adopted for derivation of motion information is lower than an RD cost Jₜₑₘₚₗₐₜₑ when the template matching method is adopted for derivation of motion information, the value of the FRUC_Mode_flag is set to 1. In other words, at step S57, FRUC_Mode_flag whose value is 1 is generated. On the other hand, in the case where the RD cost J_{BiLateral} is equal to or higher than the RD cost Jₜₑₘₚₗₐₜₑ, the value of FRUC_Mode_flag is set to 0.

Further, in the case where it is decided at step S55 that the RD cost J_{FRUC_MRG} is not lowest, the processing advances to step S58. At step S58, the control section 21 decides whether or not the RD cost J_{MRG} is lowest among the RD cost J_{FRUC_MRG}, the RD cost J_{MRG}, the RD cost J_{FRUC_AMVP}, and the RD cost J_{AMVP}.

In the case where it is decided at step S58 that the RD cost J_{MRG} is lowest, the processing advances to step S59. In this case, as the inter-prediction mode for the current block, the AMVP merge mode is selected, and in the image encoding process described hereinabove with reference to FIG. 10, the encoding process at step S16 is performed to generate an encoded stream.

At step S59, the control section 21 sets Merge_flag and FRUC_flag to Merge_flag = 1 and FRUC_flag = 0, respectively, and the inter-prediction process mode setting process ends therewith.

Further, in the case where it is decided at step S58 that the RD cost J_{MRG} is not lowest, the processing advances to step S60.

At step S60, the control section 21 decides whether or not the RD cost J_{FRUC_AMVP} is lowest among the RD cost J_{FRUC_MRG}, the RD cost J_{MRG}, the RD cost J_{FRUC_AMVP}, and the RD cost J_{AMVP}.

In the case where it is decided at step S60 that the RD cost J_{FRUC_AMVP} is lowest, the control section 21 sets Merge_flag and FRUC_flag to Merge_flag = 0 and FRUC_flag = 1 at step S61.

In this case, as the inter-prediction mode for the current block, the FRUC AMVP mode is selected, and in the image encoding process described hereinabove with reference to FIG. 10, the encoding process at step S18 is performed to generate an encoded stream.

At step S62, the control section 21 generates FRUC_Mode_flag on the basis of a result of derivation of motion information in the FRUC mode, and the inter-prediction process mode setting process ends therewith. However, in the case where the current block is a block of a P slice, the process at step S62 is not performed and FRUC_Merge_flag is not generated.

It is to be noted that, at step S62, a process similar to that at step S57 is performed.

On the other hand, in the case where it is decided at step S60 that the RD cost J_{FRUC_AMVP} is not lowest, namely, in the case where the RD cost J_{AMVP} is lowest, the processing advances to step S63. In this case, as the inter-prediction mode of the current block, the AMVP mode is selected, and in the image encoding process described hereinabove with reference to FIG. 10, the encoding process at step S19 is performed to generate an encoded stream.

At step S63, the control section 21 sets Merge_flag and FRUC_flag to Merge_flag = 0 and FRUC_flag = 0, respectively, and the inter-prediction process mode setting process ends therewith.

The image encoding apparatus 11 calculates RD costs in the individual modes, selects a mode that indicates the lowest RD cost and generates Merge_flag and FRUC_flag in response to a result of the selection in such a manner as described above. By this, the encoding efficiency can be improved.

### <Description of FRUC Merge Mode Encoding Process>

Now, a FRUC merge mode encoding process by the image encoding apparatus 11 is described with reference to a flow chart of FIG. 12. It is to be noted that this FRUC merge mode encoding process is performed in a unit of a CU or in a unit of a sub block.

At step S91, the prediction section 30 decides, on the basis of prediction information Pinfo and so forth supplied from the control section 21, whether or not a current block of a processing target, namely, a CU or a sub block that is an image I of an encoding target, is a block of a P slice.

In the case where it is decided at step S91 that the current block is a block of a P slice, the processing advances to step S92. In the case where the current block is a block of a P slice, only one reference picture is available to a P slice and bilateral matching cannot be performed upon derivation of motion information, and therefore, as a derivation method of motion information, template matching is adopted (selected) automatically.

At step S92, the prediction section 30 derives motion information of the current block by the template matching method. For example, the prediction section 30 reads out a picture (frame) of an encoding target and a reference picture indicated by reference image specification information from the frame memory 29 on the basis of the prediction information Pinfo and so forth supplied from the control section 21 and uses the picture to derive motion information of the current block by the template matching method.

If the process at step S92 is performed to derive motion information, then the processing thereafter advances to step S97.

On the other hand, in the case where it is decided at step S91 that the current block is not a block of a P slice, the processing advances to step S93.

At step S93, the prediction section 30 derives motion information of the current block by the template matching method and calculates the RD cost J_{Template} when the template matching method is adopted.

For example, the prediction section 30 reads out the picture (frame) of the encoding target and reference pictures indicated by the reference image specification information from the frame memory 29 on the basis of the prediction information Pinfo and so forth supplied from the control section 21. Further, the prediction section 30 uses the read out picture to derive motion information of the current block by the template matching and calculate also the RD cost J_{Template}.

At step S94, the prediction section 30 derives motion information of the current block by the bilateral matching method and calculates the RD cost J_{BiLateral} when the bilateral matching method is adopted.

For example, the prediction section 30 reads out two reference pictures indicated by the reference image specification information of the prediction information Pinfo supplied from the control section 21 from the frame memory 29. Further, the prediction section 30 uses the read out reference pictures to derive motion information of the current block by the bilateral matching method and calculate also the RD cost J_{BiLateral}.

At step S95, the prediction section 30 decides whether or not the RD cost J_{BiLateral} is lower than the RD COSt J_{Template}.

In the case where it is decided at step S95 that the RD cost J_{BiLateral} is lower than the RD cost J_{Template}, the prediction section 30 generates a prediction image on the basis of the motion information derived by the bilateral matching method and supplies the prediction image to the arithmetic operation section 22 and the arithmetic operation section 28 at step S96.

For example, the prediction section 30 determines an image generated by motion compensation using blocks indicated by the motion information (predicted motion vectors) in the two individual reference pictures as prediction image P.

After the prediction image is generated, the processing advances to step S98.

On the other hand, if it is decided at step S95 that the RD cost J_{BiLateral} is not lower than the RD cost J_{Template} or after the process at step S92 is performed, a process at step S97 is performed thereafter.

In particular, at step S97, the prediction section 30 generates a prediction image on the basis of the motion information derived by the template matching and supplies the prediction image to the arithmetic operation section 22 and the arithmetic operation section 28. For example, the prediction section 30 determines an image of a block indicated by the motion information (predicted motion vectors) in the reference pictures as prediction image P.

After the prediction image is generated, the processing advances to step S98.

After the process at step S96 or step S97 is performed to generate a prediction image P, a process at step S98 is performed.

At step S98, the arithmetic operation section 22 arithmetically operates the difference between the supplied image I and the prediction image P supplied from the prediction section 30 as a prediction residual D and supplies the prediction residual D to the transformation section 23.

At step S99, the transformation section 23 performs orthogonal transformation and so forth for the prediction residual D supplied from the arithmetic operation section 22 on the basis of the transformation information Tinfo supplied from the control section 21 and supplies a resulting transformation coefficient Coeff to the quantization section 24.

At step S100, the quantization section 24 scales (quantizes) the transformation coefficient Coeff supplied from the transformation section 23 on the basis of the transformation information Tinfo supplied from the control section 21 to derive a quantization transformation coefficient level level. The quantization section 24 supplies the quantization transformation coefficient level level to the encoding section 25 and the dequantization section 26.

At step S101, the dequantization section 26 quantizes the quantization transformation coefficient level level supplied from the quantization section 24 with a characteristic corresponding to a characteristic of the quantization at step S100 on the basis of the transformation information Tinfo supplied from the control section 21. The dequantization section 26 supplies a transformation coefficient Coeff_IQ obtained by the dequantization to the inverse transformation section 27.

At step S102, the inverse transformation section 27 performs inverse orthogonal transformation and so forth by a method corresponding to the orthogonal transformation and so forth at step S99 for the transformation coefficient Coeff_IQ supplied from the dequantization section 26 on the basis of the transformation information Tinfo supplied from the control section 21 to derive a prediction residual D'. The inverse transformation section 27 supplies the obtained prediction residual D' to the arithmetic operation section 28.

At step S103, the arithmetic operation section 28 adds the prediction residual D' supplied from the inverse transformation section 27 and the prediction image P supplied from the prediction section 30 to generate a local decoded image Rec and supplies the decoded image Rec to the frame memory 29.

At step S104, the frame memory 29 uses the local decoded image Rec supplied from the arithmetic operation section 28 to reconstruct a decoded image in a unit of a picture and retains the decoded image into a buffer in the frame memory 29.

At step S105, the encoding section 25 encodes encoding parameters set by the process at step S11 of FIG. 10 and supplied from the control section 21 and the quantization transformation coefficient level level supplied from the quantization section 24 by the process at step S100 by a predetermined method.

The encoding section 25 multiplexes the encoded data obtained by the encoding to form an encoded stream (bit stream) and outputs the encoded stream to the outside of the image encoding apparatus 11, thereby ending the FRUC merge mode encoding process.

In this case, in the encoded stream, for example, data obtained by encoding Merge_flag, FRUC_flag, FRUC_Mode_flag, reference image specification information and so forth, data obtained by encoding the quantization transformation coefficient level level and so forth are placed. The encoded stream obtained in this manner is transmitted to the decoding side, for example, through a transmission line or a recoding medium.

It is to be noted that the FRUC merge mode encoding process described above basically corresponds to the process at step S15 of FIG. 10. However, more particularly, at the point of time of step S15, it is determined already whether template matching is to be performed or bilateral matching is to be performed. Therefore, motion information is derived in accordance with the method indicated by the prediction information Pinfo and a prediction image P is generated at step S96 or S97 on the basis of the obtained motion information.

Further, the processes at step S91 to step S95 of FIG. 12 correspond to the process at step S11 of FIG. 10, especially to the process at step S51 of FIG. 11 in the process at step S11.

In particular, if an instruction to calculate an RD cost J_{FRUC_MRG} is issued from the control section 21 to the prediction section 30 at step S51 of FIG. 11, then the processes at step S91 to step S95 are performed. Then, for example, the prediction section 30 outputs a lower one of the RD cost J_{Template} and the RD cost J_{BiLateral} as an RD cost J_{FRUC_MRG} to the control section 21. It is to be noted that, when the current block is a block of a P slice, calculation of the RD cost J_{BiLateral} is not performed, and the RD cost J_{Template} is outputted as the RD COST J_{FRUC_MRG}.

Further, similarly as in the case at step S15 of FIG. 10, also at step S18 of FIG. 10, a process similar to the FRUC merge mode encoding process described hereinabove with reference to FIG. 12 is performed. In particular, between the case at step S15 and the case at step S18, the encoding parameter to be encoded at step S105 of FIG. 12 differs.

The image encoding apparatus 11 derives motion information by the FRUC mode and encodes a block of an encoding target in such a manner as described above. By utilizing the FRUC such that motion information is derived on the decoding side in this manner, motion vector information (motion information) to be placed into an encoded stream can be reduced and the encoding efficiency can be improved.

### <Description of Motion Information Derivation Process by Template Matching>

Here, a process for deriving motion information from within the process corresponding to step S93 or step S92 of FIG. 12 is described in more detail. In particular, in the following, a motion information derivation process by template matching performed by the prediction section 30 is described with reference to a flow chart of FIG. 13.

At step S131, the candidate acquisition section 91 generates a candidate list by acquiring candidates for a start point.

In particular, the candidate acquisition section 91 collects peripheral regions as candidates for a start point to generate a candidate list. Further, the candidate acquisition section 91 acquires adjacent motion vectors to reference pictures of the peripheral regions indicated by the candidate list and supplies the adjacent motion vectors to the template matching processing section 92.

At step S132, the motion vector derivation section 102 calculates, using the adjacent motion vectors supplied from the candidate acquisition section 91 as start points, in regard to each of the start points, a predicted motion vector MVtempbest(id) and the cost Ccur_tempbest(id) of the CU of the encoding target by template matching. In this case, the picture of the encoding target, which is the decoded image, and the reference pictures read out from the frame memory 29 are used to perform template matching.

It is to be noted that, at step S132, the process for calculating the predicted motion vector and the cost in regard to a plurality of start points is performed in parallel by the plurality of matching processing circuits as described hereinabove. Consequently, motion information can be obtained more rapidly.

At step S133, the candidate selection section 101 selects, from among the predicted motion vectors MVtempbest(id) obtained in regard to each start point at step S132, a predicted motion vector MVtempbest(id) that indicates the lowest cost Ccur_tempbest(id) as a final predicted motion vector.

The template matching processing section 92 supplies the final predicted motion vector obtained by the selection to the sub block candidate acquisition section 93.

For example, in the case where the FRUC merge mode encoding process described hereinabove with reference to FIG. 12 is performed in a unit of a CU, the predicted motion vector obtained finally at step S133 is used as motion information to perform the process at step S97 of FIG. 12.

On the other hand, in the case where a difference motion vector is placed in an encoded stream, for example, in the case where the current mode is the FRUC AMVP mode or the like, also a difference motion vector is calculated. In such a case as just described, the motion vector derivation section 102 calculates the difference between the final predicted motion vector obtained at step S133 and the adjacent motion vector that is a candidate for a predicted motion vector having been used for derivation of the predicted motion vector as a difference motion vector of the CU of the encoding target.

At step S134, the sub block candidate acquisition section 93 acquires candidates for a start point in regard to the sub block of the encoding target to generate a sub block candidate list. In particular, the sub block candidate acquisition section 93 generates a sub block candidate list on the basis of peripheral regions in a CU of an encoding target determined in advance for the sub block of the encoding target and the predicted motion vector supplied from the template matching processing section 92 to generate a sub block candidate list.

Further, the sub block candidate acquisition section 93 acquires the candidates for a predicted motion vector indicated by the sub block candidate list, namely, adjacent motion vectors of the peripheral regions, and the predicted motion vector supplied from the template matching processing section 92 and supplies the acquired vectors to the template matching processing section 94.

At step S135, the candidate selection section 103 selects one candidate for a start point from among all candidates for a start point of all reference pictures.

In particular, the candidate selection section 103 determines, in regard to each candidate for a start point, a difference between a template on a reference picture indicated by an adjacent motion vector, which is a candidate for a start point, or a predicted motion vector and a template adjacent the sub block of the encoding target. Then, the candidate selection section 103 calculates a cost of the candidate for a start point on the basis of the determined difference.

Here, the difference is determined using the picture of the encoding target and the reference pictures that are decoded images read out from the frame memory 29.

The candidate selection section 103 selects, from among all candidates for a start point, a candidate for a start point that indicates the lowest cost.

At step S136, the motion vector derivation section 104 calculates, in regard to the candidate for a start point selected at step S135, a predicted motion vector of the sub block of the encoding target and the cost of the predicted motion vector by template matching.

In particular, the motion vector derivation section 104 performs block matching while successively displacing the position of the template of the reference picture in a search range on the reference picture determined by an adjacent motion vector as a candidate for a start point or a predicted motion vector.

By the block matching, in regard to the template at each position on the reference picture, the difference between the template and a template adjacent the sub block on the picture of the encoding target is determined to calculate a cost and a predicted motion vector. Also in this case, the picture of the encoding target and the reference pictures that are decoded images read out from the frame memory 29 are used to perform block matching.

At step S137, the motion vector derivation section 104 selects, from among the predicted motion vectors at the individual positions of the template calculated at step S136, the predicted motion vector that indicates the lowest cost as a final predicted motion vector of the sub block of the encoding target. The motion vector derivation section 104 outputs the predicted motion vector obtained in this manner as motion information of the sub block, thereby ending the motion information derivation process by template matching.

For example, in the case where the FRUC merge mode encoding process described hereinabove with reference to FIG. 12 is performed in a unit of a sub block, the predicted motion vector obtained finally at step S137 is used as motion information to perform the process at step S97 of FIG. 12.

On the other hand, in the case where a difference motion vector is placed into an encoded stream in such a case as, for example, in a case in which the applicable mode is the FRUC AMVP mode, also a difference motion vector is calculated. In such a case as just described, the motion vector derivation section 104 calculates the difference between the final predicted motion vector obtained at step S137 and the candidate for a predicted motion vector having been used for derivation of the predicted motion vector as a difference motion vector of the sub block of the encoding target.

The prediction section 30 derives motion information by the template matching method in such a manner as described above. By performing a process for calculating, upon derivation of motion information, a predicted motion vector in parallel in regard to a plurality of candidates for a start point in this manner, motion information can be obtained more rapidly.

### <Description of Motion Information Derivation Process by Bilateral Matching>

Further, the process for deriving motion information from within the process corresponding to step S94 of FIG. 12 is described in more detail. In particular, the motion information derivation process by bilateral matching performed by the prediction section 30 is described with reference to a flow chart of FIG. 14.

In the motion information derivation process by bilateral matching, a process at step S161 is performed by the candidate acquisition section 51, and a process at step S162 is performed by the motion vector derivation section 62, whereafter a process at step S163 is performed by the candidate selection section 61.

Further, a process at step S164 is performed by the sub block candidate acquisition section 53, and a process at step S165 is performed by the candidate selection section 63, whereafter processes at step S166 and step S167 are performed by the motion vector derivation section 64.

It is to be noted that, since the processes at step S161 to step S167 are similar to the processes at step S131 to step S137 of FIG. 13, respectively, description of them is omitted.

However, at step S162 and step S166, calculation of a predicted motion vector and a cost is performed not by template matching but by bilateral matching.

Then, the predicted motion vector obtained at step S163 or the predicted motion vector obtained at step S167 is used as motion information in the process at step S96 of FIG. 12. Further, at step S163 or step S167, also a difference motion vector is calculated as occasion demands.

The prediction section 30 derives motion information by the bilateral matching method in such a manner as described above. By performing, upon derivation of motion information, a process for calculating a predicted motion vector in parallel in regard to a plurality of candidates for a start point in this manner, motion information can be obtained more rapidly.

### <Description of Image Decoding Apparatus>

Now, an image decoding apparatus as an image processing apparatus that decodes an encoded stream outputted from the image encoding apparatus 11 depicted in FIG. 2 and to which the present technology is applied is described.

FIG. 15 is a view depicting an example of a configuration of an embodiment of an image decoding apparatus to which the present technology is applied.

The image decoding apparatus 201 depicted in FIG. 15 decodes an encoded stream generated by the image encoding apparatus 11 by a decoding method corresponding to the encoding method of the image encoding apparatus 11. For example, the image decoding apparatus 201 incorporates the technology proposed by HEVC or the technology proposed by JVET.

It is to be noted that FIG. 15 depicts main ones of processing sections, data flows and so forth, and those depicted in FIG. 15 are not all of such processing sections, data flows or the like. In particular, a processing section that is not depicted as a block in FIG. 15 may exist in the image decoding apparatus 201 or a process or a flow of data that is not depicted as an arrow mark or the like in FIG. 15 may exist.

The image decoding apparatus 201 includes a decoding section 211, a dequantization section 212, an inverse transformation section 213, an arithmetic operation section 214, a frame memory 215, and a prediction section 216.

The image decoding apparatus 201 performs decoding for each CU or each sub block for an encoded stream inputted thereto.

The decoding section 211 decodes the encoded stream supplied thereto by a predetermined decoding method corresponding to the encoding method of the encoding section 25. For example, the decoding section 211 decodes encoding parameters such as header information Hinfo, prediction information Pinfo, transformation information Tinfo and so forth and a quantization transformation coefficient level level from a bit string of the encoded stream in accordance with a definition of a syntax table.

For example, the decoding section 211 divides a CU on the basis of split flag included in the encoding parameters and successively sets the CUs or sub blocks corresponding to the individual quantization transformation coefficient levels level as a block of a decoding target.

Further, the decoding section 211 decodes the encoding parameters obtained by the decoding to blocks of the image decoding apparatus 201. For example, the decoding section 211 supplies the prediction information Pinfo to the prediction section 216, supplies the transformation information Tinfo to the dequantization section 212 and the inverse transformation section 213, and supplies the header information Hinfo to the associated blocks. Further, the decoding section 211 supplies each quantization transformation coefficient level level to the dequantization section 212.

The dequantization section 212 scales (dequantizes) the value of the quantization transformation coefficient level level supplied from the decoding section 211 on the basis of the transformation information Tinfo supplied from the decoding section 211 to derive a transformation coefficient Coeff_IQ. This dequantization is an inverse process to the quantization performed by the quantization section 24 of the image encoding apparatus 11. It is to be noted that the dequantization section 26 performs dequantization similar to that by the dequantization section 212. The dequantization section 212 supplies the thus obtained transformation coefficient Coeff_IQ to the inverse transformation section 213.

The inverse transformation section 213 performs inverse orthogonal transformation and so forth for the transformation coefficient Coeff_IQ supplied from the dequantization section 212 on the basis of the transformation information Tinfo and so forth supplied from the decoding section 211 and supplies a prediction residual D' obtained as a result of the inverse orthogonal transformation to the arithmetic operation section 214.

The inverse orthogonal transformation performed by the inverse transformation section 213 is an inverse process to that of the orthogonal transformation performed by the transformation section 23 of the image encoding apparatus 11. It is to be noted that the inverse transformation section 27 performs inverse orthogonal transformation similar to that by the inverse transformation section 213.

The arithmetic operation section 214 adds the prediction residual D' supplied from the inverse transformation section 213 and a prediction image P corresponding to the prediction residual D' to derive a local decoded image Rec.

The arithmetic operation section 214 reconstructs a decoded image in a unit of a picture using the obtained local decoded image Rec and outputs the resulting decoded image to the outside. Further, the arithmetic operation section 214 supplies the local decoded image Rec also to the frame memory 215.

The frame memory 215 reconstructs a decoded image for each unit of a picture using the local decoded image Rec supplied from the arithmetic operation section 214 and stores the decoded image into the buffer in the frame memory 215.

Further, the frame memory 215 reads out a decoded image designated by the prediction section 216 as a reference image (reference picture) from the buffer and supplies the decoded image to the prediction section 216. Furthermore, the frame memory 215 may store the header information Hinfo, the prediction information Pinfo, the transformation information Tinfo and so forth relating to generation of the decoded image into the buffer in the frame memory 215.

The prediction section 216 acquires, on the basis of mode information pred_mode_flag of the prediction information Pinfo, decoded images stored in the frame memory 215 and indicating time same as that of the block of the decoding target as the reference images. Then, the prediction section 216 performs an intra-prediction process in an intra-prediction mode indicated by the intra-prediction mode information for the block of the decoding target using the reference images.

Further, the prediction section 216 acquires, on the basis of the mode information pred_mode_flag of the prediction information Pinfo and the reference image specification information, a decoded image stored in the frame memory 215 and indicating time same as that of the block of the decoding target and acquires decoded images indicating time different from that of the block of the decoding target as reference images.

The prediction section 216 performs an inter-prediction process in a mode determined by Merge_flag and FRUC_flag using an image acquired from the frame memory 215 on the basis of Merge_flag, FRUC_flag, FRUC_Mode_flag, motion vector information and so forth similarly to the prediction section 30 of the image encoding apparatus 11.

The prediction section 216 supplies a prediction image P of the block of the decoding target generated as a result of the intra-prediction process or the inter-prediction process to the arithmetic operation section 214.

### <Configuration of Prediction Section>

Also the prediction section 216 of the image decoding apparatus 201 has a configuration for deriving motion information by bilateral matching or template matching similarly as in the case of the prediction section 30 of the image encoding apparatus 11.

For example, the prediction section 216 has a configuration depicted in FIG. 16 as the configuration for deriving motion information by bilateral matching.

In particular, in the example depicted in FIG. 16, the prediction section 216 includes a candidate acquisition section 241, a bilateral matching processing section 242, a sub block candidate acquisition section 243, and a bilateral matching processing section 244.

Further, the bilateral matching processing section 242 includes a candidate selection section 251 and a motion vector derivation section 252, and the bilateral matching processing section 244 includes a candidate selection section 253 and a motion vector derivation section 254.

It is to be noted that the candidate acquisition section 241 to bilateral matching processing section 244 correspond to the candidate acquisition section 51 to bilateral matching processing section 54 depicted in FIG. 7, respectively, and have configurations and perform operations similar to those of the candidate acquisition section 51 to bilateral matching processing section 54, respectively, and therefore, description of them is omitted.

Also the candidate selection section 251 to motion vector derivation section 254 are configured similarly and operate similarly to the candidate selection section 61 to motion vector derivation section 64 depicted in FIG. 7, respectively, description of them is omitted.

Furthermore, for example, the prediction section 216 has a configuration depicted in FIG. 17 as the configuration for deriving motion information by template matching.

In particular, in the example depicted in FIG. 17, the prediction section 216 includes a candidate acquisition section 301, a template matching processing section 302, a sub block candidate acquisition section 303, and a template matching processing section 304.

The template matching processing section 302 includes a candidate selection section 311 and a motion vector derivation section 312, and the template matching processing section 304 includes a candidate selection section 313 and a motion vector derivation section 314.

It is to be noted that the candidate acquisition section 301 to template matching processing section 304 correspond to the candidate acquisition section 91 to template matching processing section 94 depicted in FIG. 9, respectively, and have configurations and perform operations similar to those of the candidate acquisition section 91 to template matching processing section 94, respectively, and therefore, description them is omitted.

Also the candidate selection section 311 to motion vector derivation section 314 have configurations and perform operations similar to those of the candidate selection section 101 to motion vector derivation section 104 as depicted in FIG. 9, respectively, and therefore, description of them is omitted.

### <Description of Image Decoding Process>

Now, operation of the image decoding apparatus 201 is described.

First, an image decoding process by the image decoding apparatus 201 is described with reference to a flow chart of FIG. 18.

At step S211, the decoding section 211 decodes an encoded stream supplied to the image decoding apparatus 201 to obtain encoding parameters and quantization transformation coefficient levels level.

The decoding section 211 supplies the encoding parameters to the components of the image decoding apparatus 201 and supplies the quantization transformation coefficient levels level to the dequantization section 212.

At step S212, the decoding section 211 divides a CTU on the basis of split flag included in the encoding parameters and sets a block corresponding to each quantization transformation coefficient level level, namely, a CU or a sub block, to a block of a decoding target. It is to be noted that processes at succeeding step S213 to step S221 are performed for each block of a decoding target.

After the block of the decoding target is determined, processes at step S213 to step S215 are performed by the prediction section 216 on the basis of the prediction information Pinfo outputted from the decoding section 211 to determine a mode for decoding. It is to be noted that the processes at step S213 to step S215 are similar to the processes at step S12 to step S14 of FIG. 10, respectively except that they are performed not by the prediction section 30 but by the prediction section 216, and therefore, description of them is omitted.

In the case where it is decided at step S215 that FRUC_flag = 1 is satisfied, namely, in the case where the applicable mode is the FRUC mode, the processing advances to step S216.

At step S216, the components of the image decoding apparatus 201 perform a decoding process for decoding an image of the block of the decoding target (current block) in the FRUC merge mode, and the image decoding process ends therewith.

In the decoding process in the FRUC merge mode, motion information is derived by the FRUC mode, and a prediction image P generated by performing an inter-prediction process using the resulting motion information is used to generate an image of the block of the decoding target.

In contrast, in the case where it is decided at step S215 that FRUC_flag = 1 is not satisfied, namely, in the case where FRUC_flag = 0 is satisfied and the applicable mode is not the FRUC mode, the processing advances to step S217.

At step S217, the components of the image decoding apparatus 201 perform a decoding process for decoding the image of the block of the decoding target in the AMVP merge mode, and the image decoding process ends therewith.

It is to be noted that, in the decoding process in the AMVP merge mode, the prediction section 216 performs motion compensation by the AMVP mode and performs an inter-prediction process. Then, a prediction image P obtained by the inter-prediction process and the prediction residual D' are added to form an image of the block of the decoding target.

On the other hand, in the case where it is decided at step S214 that Merge_flag = 1 is not satisfied, namely in the case where Merge_flag = 0 is satisfied and the applicable mode is the non-merge mode, the processing advances to step S218.

At step S218, the prediction section 216 decides whether or not the value of FRUC_flag of the prediction information Pinfo supplied from the decoding section 211 is 1, namely, whether or not FRUC_flag = 1 is satisfied.

In the case where it is decided at step S218 that FRUC_flag = 1 is satisfied, namely, in the case where the applicable mode is the FRUC mode, the processing advances to step S219.

At step S219, the components of the image decoding apparatus 201 perform a decoding process for decoding the image of the block of the decoding target in the FRUC AMVP mode, and the image decoding process ends therewith.

It is to be noted that, in the decoding process in the FRUC AMVP mode, a process similar to the decoding process in the FRUC merge mode is performed to derive motion information to generate an image of the block of the decoding target. However, in the FRUC AMVP mode, since a difference motion vector is placed in an encoded stream, the difference motion vector is used to derive a predicted motion vector of the block of the decoding target.

In contrast, in the case where it is decided at step S218 that FRUC_flag = 1 is not satisfied, namely, in the case where FRUC_flag = 0 is satisfied and the applicable mode is not the FRUC mode, the processing advances to step S220.

At step S220, the components of the image decoding apparatus 201 perform a decoding process for decoding the image of the block of the decoding target in the AMVP mode, and the image decoding process ends therewith.

It is to be noted that, in the decoding process in the AMVP mode, the prediction section 216 performs motion compensation by the AMVP mode and performs an inter-prediction process. Then, a prediction image P obtained by the inter-prediction process and the prediction residual D' are added to form an image of the block of the decoding target.

Further, in the case where it is decided at step S213 that an inter-prediction process is not to be performed, namely, in the case where it is decided that an intra-prediction process is to be performed, the processing advances to step S221.

At step S221, the components of the image decoding apparatus 201 perform an intra-decoding process for decoding the image of the block of the decoding target in the intra-prediction mode, and the image decoding process ends therewith.

In the intra-decoding process, the prediction section 216 generates a prediction image P by the intra-prediction mode and adds the prediction image P and the prediction residual D' to form an image of the block of the decoding target.

The image decoding apparatus 201 decodes a block of a decoding target in response to encoding parameters in such a manner as described above. By decoding an image in an appropriate mode in this manner, an image of high quality can be obtained even with an encoded stream of a small code amount.

### <Description of FRUC Merge Mode Decoding Process>

Subsequently, the FRUC merge mode decoding process corresponding to the process at step S216 of FIG. 18 is described. In particular, the FRUC merge mode decoding process performed by the image decoding apparatus 201 is described with reference to a flow chart of FIG. 19. It is to be noted that this FRUC merge mode decoding process is performed for each block of a decoding target.

At step S251, the dequantization section 212 dequantizes a quantization transformation coefficient level level obtained by the process at step S211 of FIG. 18 to derive a transformation coefficient Coeff_IQ and supplies the transformation coefficient Coeff_IQ to the inverse transformation section 213.

At step S252, the inverse transformation section 213 performs inverse orthogonal transformation and so forth for the transformation coefficient Coeff_IQ supplied from the dequantization section 212 and supplies a resulting prediction residual D' to the arithmetic operation section 214.

At step S253, the prediction section 216 decides, on the basis of the prediction information Pinfo and so forth supplied from the decoding section 211, whether or not the block of the decoding target is a block of a P slice.

In the case where it is decided at step S253 that the block of the decoding target is not a block of a P slice, the processing advances to step S254.

At step S254, the prediction section 216 acquires FRUC_Mode_flag.

In particular, in the case where the block of the decoding target is not a block of a P slice, at step S211 of FIG. 18, FRUC_Mode_flag is read out from the encoded stream by the decoding section 211, and the prediction information Pinfo including the read out FRUC_Mode_flag is supplied from the decoding section 211 to the prediction section 216. The prediction section 216 acquires FRUC_Mode_flag from the prediction information Pinfo supplied thereto in this manner.

At step S255, the prediction section 216 decides, on the basis of FRUC_Mode_flag, whether or not bilateral matching is to be performed. For example, in the case where the value of FRUC_Mode_flag is 1, it is decided that bilateral matching is to be performed.

In the case where it is decided at step S255 that bilateral matching is to be performed, the prediction section 216 derives motion information by the bilateral matching method at step S256. Consequently, a predicted motion vector is obtained as the motion information of the block of the decoding target.

At step S257, the prediction section 216 performs motion compensation on the basis of the motion information derived by the process at step S256, namely, on the basis of the predicted motion vector, to generate a prediction image P and supplies the prediction image P to the arithmetic operation section 214.

For example, the prediction section 216 reads out two decoded images indicated by the reference image specification information from the frame memory 215 and generates a prediction image P by motion compensation using the blocks indicated by the predicted motion vectors of the reference pictures.

After the prediction image P is obtained in this manner, the processing advances to step S260.

In contrast, in the case where it is decided at step S255 that bilateral matching is not to be performed or it is decided at step S253 that the block of the decoding target is a block of a P slice, a process at step S258 is performed.

At step S258, the prediction section 216 derives motion information by the template matching method. Consequently, a predicted motion vector is obtained as the motion information of the block of the decoding target.

At step S259, the prediction section 216 performs motion compensation on the basis of the motion information derived by the process at step S258, namely, on the basis of the predicted motion vector, to generate a prediction image P and supplies the prediction image P to the arithmetic operation section 214.

For example, the prediction section 216 reads out one decoded image indicated by the reference image specification information as a reference picture from the frame memory 215 and determines an image of a block indicated by the predicted motion vector in the reference picture as a prediction image P.

After the prediction image P is obtained in this manner, the processing advances to step S260.

After the processes at step S257 to step S259 are performed to generate the prediction image P, a process at step S260 is performed.

At step S260, the arithmetic operation section 214 adds the prediction residual D' supplied from the inverse transformation section 213 and the prediction image P supplied from the prediction section 216 to derive a local decoded image Rec. The arithmetic operation section 214 reconstructs a decoded image of a unit of a picture using the obtained local decoded image Rec and outputs the obtained decoded image to the outside of the image decoding apparatus 201. Further, the arithmetic operation section 214 supplies the local decoded image Rec to the frame memory 215.

At step S261, the frame memory 215 reconstructs a decoded image of a unit of a picture using the local decoded image Rec supplied from the arithmetic operation section 214 and retains the decoded image into the buffer in the frame memory 215. When the decoded image is obtained in this manner, the FRUC merge mode decoding process ends.

The image decoding apparatus 201 derives motion information by the FRUC mode and decodes a block of a decoding target in such a manner as described above. By deriving motion information on the decoding side utilizing the FRUC mode in this manner, the code amount of an encoded stream can be reduced and the encoding efficiency can be improved.

It is to be noted that, also at step S219 of FIG. 18, a process similar to the FRUC merge mode decoding process described above with reference to FIG. 19 is performed. However, since, in the FRUC AMVP mode, a difference motion vector is placed in an encoded stream, the difference motion vector is used to derive a predicted motion vector of the block of the decoding target.

### <Description of Motion Information Derivation Process by Bilateral Matching>

Here, a motion information derivation process by bilateral matching performed by the prediction section 216 and corresponding to the process at step S256 of FIG. 19 is described with reference to a flow chart of FIG. 20.

In the motion information derivation process by bilateral matching, a process at step S291 is performed by the candidate acquisition section 241 and a process at step S292 is performed by the motion vector derivation section 252, and a process at step S293 is performed by the candidate selection section 251.

Further, a process at step S294 is performed by the sub block candidate acquisition section 243 and a process at step S295 is performed by the candidate selection section 253, and processes at step S296 and step S297 are performed by the motion vector derivation section 254.

It is to be noted that the processes at step S291 to step S297 are similar to the processes at step S161 to step S167 of FIG. 14, respectively, and therefore, description of them is omitted.

Further, when a difference motion vector is placed in an encoded stream in such a case in which the applicable mode is the FRUC AMVP mode, a difference motion vector read out from an encoded stream and supplied from the decoding section 211 to the prediction section 216 is added to a candidate for a predicted motion vector to form a predicted motion vector.

### <Description of Motion Information Derivation Process by Template Matching>

Further, a motion information derivation process by template matching performed by the prediction section 216 and corresponding to the process at step S258 of FIG. 19 is described with reference to a flow chart of FIG. 21.

In the motion information derivation process by template matching, a process at step S331 is performed by the candidate acquisition section 301 and a process at step S332 is performed by the motion vector derivation section 312, and a process at step S333 is performed by the candidate selection section 311.

Further, a process at step S334 is performed by the sub block candidate acquisition section 303 and a process at step S335 is performed by the candidate selection section 313, and processes at step S336 and step S337 are performed by the motion vector derivation section 314.

It is to be noted that, since the processes at step S331 to step S337 are similar to the processes at step S131 to step S137 of FIG. 1, respectively, description of them is omitted.

Further, when a difference motion vector is placed in an encoded stream in such a case in which the applicable mode is the FRUC AMVP mode, a difference motion vector read out from an encoded stream and supplied from the decoding section 211 to the prediction section 216 is added to a candidate for a predicted motion vector to form a predicted motion vector.

Also the image decoding apparatus 201 can obtain, upon predicted motion vector derivation, motion information more rapidly by performing part of processes in parallel in such a manner as described above.

### <Second Embodiment>

### <Description of Inter-Prediction Mode Setting Process>

Incidentally, the first embodiment described above is directed to an example in which, when motion information is derived by template matching or bilateral matching, processing is performed in parallel by a plurality of matching processing circuits to implement higher speed derivation of motion information.

However, in this case, the number of matching processing circuits corresponding to the number of candidates for a start point are required, and in the case where the number of matching processing circuits is small, the processing speed decreases most when the number of candidates for a start point becomes maximum.

Further, if it is tried to secure real time reproduction also when the processing speed decreases most, then although there is the necessity to provide the number of matching processing circuits sufficient to derive motion information at a sufficiently high speed, as the number of matching processing circuits increases, increase of the circuit scale is concerned.

Therefore, when motion information is derived by template matching or bilateral matching, it may be made possible to obtain motion information more rapidly by setting an upper limit to the number of candidates for a start point.

In such a case as just described, for example, the control section 21 generates max_num_fruc_template_cand indicative of an upper limit number of candidates for a start point upon template matching and max_num_fruc_bilateral_cand indicative of an upper limit number of candidates for a start point upon bilateral matching.

It is to be noted that, in the case where there is no necessity to specifically distinguish max_num_fruc_template_cand and max_num_fruc_bilateral_cand from each other, each of them is sometimes referred to merely as candidate upper limit number information.

For example, the upper limit number of candidates for a start point can be determined in advance. Also it is possible to dynamically determine an upper limit number of candidates for a start point on the basis of the level or tier, namely, of a frame rate or a bit rate, a resolution (image size) or the like of a moving image (content) that is an encoding target.

Further, the upper limit number of candidates for a start point may be determined on the basis of a type of a reproduction device that reproduces a moving image of an encoding target, a battery capacity or maximum power consumption of the reproduction device, a processing capacity of the reproduction device, an upper limit value of an access bandwidth of a memory the reproduction device has, maximum resources of the reproduction device or the like. Furthermore, the upper limit number of candidates for a start point may be determined on the basis of the number or the like of matching processing circuits provided in parallel in the reproduction device. By appropriately determining the upper limit number of candidates for a start point, also it becomes possible to guarantee the real time reproduction.

Such candidate upper limit number information may be provided by one piece for an entire moving image of an encoding target, may be determined for each picture or for each slice, or may be determined for each CU or for each sub block. For example, in the case where the candidate upper limit number information is determined for each slice, the code amount of an entire encoded stream can be reduced from that in the case where the candidate upper limit number information is determined for each CU or for each sub block.

After the control section 21 generates candidate upper limit number information, it places the candidate upper limit number information into a sequence parameter set or a slice header.

In the case where candidate upper limit number information is generated in this manner, in the image encoding apparatus 11, an inter-prediction process mode setting process depicted in FIG. 22 is performed. In the following, the inter-prediction process mode setting process by the image encoding apparatus 11 is described with reference to a flow chart of FIG. 22.

At step S371, the control section 21 determines an upper limit number of candidates for a start point upon template matching and generates max_num_fruc_template_cand indicative of a result of the determination. For example, the upper limit number of candidates for a start point is determined on the basis of information relating to an image (moving image) of an encoding target such as the level or the tier, information relating to a reproduction device such as a processing capacity or the like of a reproduction device and so forth.

At step S372, the control section 21 determines an upper limit number of candidates for a start point upon bilateral matching and generates max_num_fruc_bilateral_cand indicative of a result of the determination. For example, the upper limit number of candidates for a start point is determined in a similar manner as in the case at step S371.

The control section 21 places max_num_fruc_template_cand and max_num_fruc_bilateral_cand that are the generated candidate upper limit number information into a predetermined position of the sequence parameter set, slice header or the like of the header information Hinfo. Accordingly, for example, at step S105 of FIG. 12, the candidate upper limit number information is encoded and placed into an encoded stream.

After the candidate upper limit number information is placed into the header information Hinfo, processes at step S373 to step S385 are performed, and the inter-prediction process mode setting process ends therewith. However, since those processes are similar to the processes at step S51 to step S63 of FIG. 11, respectively, description of them is omitted.

The image encoding apparatus 11 generates and places candidate upper limit number information into the header information Hinfo in such a manner as described above. This makes it possible for the decoding side to limit the number of candidates for a start point in accordance with the candidate upper limit number information, and motion information can be obtained more rapidly.

### <Description of Motion Information Derivation Process by Bilateral Matching>

Meanwhile, in the case where the inter-prediction process mode setting process depicted in FIG. 22 is performed, the prediction section 30 of the image encoding apparatus 11 performs a motion information derivation process by bilateral matching depicted in FIG. 23 and a motion information derivation process by template matching depicted in FIG. 24.

First, the motion information derivation process by bilateral matching performed by the prediction section 30 of the image encoding apparatus 11 is described with reference to a flow chart of FIG. 23.

At step S411, the candidate acquisition section 51 acquires candidates for a start point to generate a candidate list. It is to be noted that, at step S411, a process similar to the process at step S161 of FIG. 14 is performed.

At step S412, the candidate acquisition section 51 of the prediction section 30 restricts the number of candidates for a start point. In particular, the candidate acquisition section 51 acquires max_num_fruc_bilateral_cand from the control section 21 and determines a number indicated by max_num_fruc_bilateral_cand as an upper limit to the number of candidates. Consequently, the number of candidates for a start point is restricted to the number indicated by max_num_fruc_bilateral_cand.

After the number of candidates for a start point is restricted, processes at step S413 to step S418 are performed, and the motion information derivation process ends therewith. However, since the processes are similar to the processes at step S162 to step S167 of FIG. 14, respectively, description of them is omitted.

However, at step S413, bilateral matching is performed only in regard to the number of candidates for a start point after the restriction determined at step S412 to calculate a predicted motion vector.

For example, it is assumed that the number indicated by max_num_fruc_bilateral_cand is 3. In this case, at step S413, three candidates determined in advance from among the candidates for a start point indicated by the candidate list are used as actual start points, and bilateral matching is performed in regard to the three start points to calculate a predicted motion vector.

Accordingly, in this example, the motion vector derivation section 62 performs a process for calculating a predicted motion vector in parallel in regard to the candidates for a start point by three matching processing circuits.

Note that it is assumed which candidates for a start point are to be used at step S413 from among the candidates for a start point indicated by the candidate list is determined in advance with respect to the number of candidates indicated by the candidate upper limit number information, namely, with respect to the number of candidates after the restriction. In other words, candidates to be excluded from the candidates for a start point are determined in advance with respect to the number of candidates indicated by the candidate upper limit number information.

Further, while an example in which candidates for a start point to be used at step S413 are restricted to the number of candidates indicated by the candidate upper limit number information is described here, also in the bilateral matching processing section 54, the number of candidates for a start point may be restricted.

The prediction section 30 restricts the number of candidates for a start point and uses the number of candidates indicated by the candidate upper limit number information as an actual start point to derive motion information in such a manner as described above. Consequently, motion information can be obtained more rapidly.

Further, by determining an upper limit to the number of candidates, it becomes possible to reduce also the number of matching processing circuits to be provided in the motion vector derivation section 62 and increase of the circuit scale can be suppressed. For example, if the upper limit number indicated by the candidate upper limit number information is always equal irrespective of a moving image of the encoding target, then also the number of matching processing circuits to be provided in parallel may be only the upper limit number.

### <Description of Motion Information Derivation Process by Template Matching>

Subsequently, a motion information derivation process by template matching performed by the prediction section 30 of the image encoding apparatus 11 is described with reference to a flow chart of FIG. 24.

At step S451, the candidate acquisition section 91 acquires candidates for a start point to generate a candidate list. It is to be noted that, at step S451, a process similar to the process at step S131 of FIG. 13 is performed.

At step S452, the candidate acquisition section 91 of the prediction section 30 restricts the number of candidates for a start point.

In particular, the candidate acquisition section 91 acquires max_num_fruc_template_cand from the control section 21 and determines the number indicated by max_num_fruc_template_cand as an upper limit to the number of candidates. Consequently, the number of candidates for a start point is restricted to the number indicated by max_num_fruc_template_cand.

After the number of candidates for a start point is restricted, processes at step S453 to step S458 are performed, and the motion information derivation process by template matching ends therewith. However, since the processes are similar to the processes at step S132 to step S137 of FIG. 13, respectively, description of them is omitted.

However, at step S453, template matching is performed only in regard to the number of candidates for a start point after the restriction determined at step S452 is performed to calculate a predicted motion vector.

For example, it is assumed that the number indicated by max_num_fruc_template_cand is 3. In this case, at step S453, three candidates determined in advance from among the candidates for a start point indicated by the candidate list are used as actual start points, and template matching is performed in regard to the three start points to calculate a predicted motion vector.

Note that it is assumed which candidates for a start point are to be used at step S453 from among the candidates for a start point indicated by the candidate list is determined in advance with respect to the number of candidates indicated by the candidate upper limit number information, namely, with respect to the number of candidates after the restriction.

Further, while an example in which candidates for a start point to be used at step S453 are restricted to the number of candidates indicated by the candidate upper limit number information is described here, also in the template matching processing section 94, the number of candidates for a start point may be restricted.

The prediction section 30 restricts the number of candidates for a start point and uses the number of candidates indicated by the candidate upper limit number information as an actual start point to derive motion information in such a manner as described above. Consequently, motion information can be obtained more rapidly. Further, by determining an upper limit to the number of candidates, it becomes possible to reduce also the number of matching processing circuits to be provided in the motion vector derivation section 102 and increase of the circuit scale can be suppressed.

### <Description of FRUC Merge Mode Decoding Process>

Further, in the case where max_num_fruc_bilateral_cand or max_num_fruc_template_cand is placed in an encoded stream, in the image decoding apparatus 201, max_num_fruc_bilateral_cand and max_num_fruc_template_cand are read out from the header information Hinfo of the encoding parameters obtained by decoding at step S211 of the image decoding process depicted in FIG. 18.

Then, such max_num_fruc_bilateral_cand and max_num_fruc_template_cand are supplied from the decoding section 211 to the prediction section 216.

Further, as the FRUC merge mode decoding process corresponding to step S216 of FIG. 18, for example, a process depicted in FIG. 25 is performed. In the following, the FRUC merge mode decoding process performed by the image decoding apparatus 201 is described with reference to a flow chart of FIG. 25.

It is to be noted that, since processes at step S491 to step S494 are similar to the processes at step S251 to step S254 of FIG. 19, respectively, description of them is omitted.

At step S495, the prediction section 216 acquires candidate upper limit number information, namely, max_num_fruc_bilateral_cand and max_num_fruc_template_cand, from the decoding section 211.

After the candidate upper limit number information is acquired, processes at step S496 to step S502 are executed, and the FRUC merge mode decoding process ends therewith. However, since the processes are similar to the processes at step S255 to step S261 of FIG. 19, respectively, description of them is omitted.

However, at step S497, the bilateral matching process is performed for the number of candidates for a start point restricted by max_num_fruc_bilateral_cand. Further, at step S499, the template matching process in regard to the number of candidates for a start point restricted by max_num_fruc_template_cand is performed.

The prediction section 216 restricts the number of candidates for a start point upon derivation of motion information by acquiring candidate upper limit number information in this manner, and it becomes possible to acquire motion information more rapidly.

### <Description of Motion Information Derivation Process by Bilateral Matching>

Here, a process corresponding to the process at step S497 of FIG. 25 is described. In particular, a motion information derivation process by bilateral matching performed by the prediction section 216 is described below with reference to a flow chart of FIG. 26.

It is to be noted that, since a process at step S531 is similar to the process at step S291 of FIG. 20, description of that is omitted.

At step S532, the candidate acquisition section 241 of the prediction section 216 restricts the number of candidates for a start point. In particular, the candidate acquisition section 241 determines, on the basis of max_num_fruc_bilateral_cand acquired from the decoding section 211 by the process at step S495 of FIG. 25, a number indicated by max_num_fruc_bilateral_cand as an upper limit to the number of candidates. Consequently, the number of candidates for a start point is restricted to the number indicated by max_num_fruc_bilateral_cand.

After the number of candidates for a start point is restricted, processes at step S533 to step S538 are performed, and the motion information derivation process by bilateral matching ends therewith. However, since the processes are similar to the processes at step S292 to step S297 of FIG. 20, respectively, description of them is omitted.

However, at step S533, bilateral matching is performed only in regard to the number of candidates for a start point after the restriction determined at step S532 is performed to calculate a predicted motion vector similarly as in the case at step S413 of FIG. 23.

The prediction section 216 restricts the number of start points to perform bilateral matching to derive motion information in such a manner as described above. Consequently, motion information can be obtained more rapidly.

### <Description of Motion Information Derivation Process by Template Matching>

Further, a process corresponding to the process at step S499 of FIG. 25 is described. In particular, a motion information derivation process by template matching performed by the prediction section 216 is described below with reference to a flow chart of FIG. 27.

It is to be noted that, since a process at step S571 is similar to the process at step S331 of FIG. 21, description of that is omitted.

At step S572, the candidate acquisition section 301 of the prediction section 216 restricts the number of candidates for a start point. In particular, the candidate acquisition section 301 determines, on the basis of max_num_fruc_template_cand acquired from the decoding section 211 in the process at step S495 of FIG. 25, a number indicated by max_num_fruc_template_cand as an upper limit of the number of candidates. Consequently, the number of candidates for a start point is restricted to the number indicated by max_num_fruc_template_cand.

After the number of candidates for a start point is restricted, processes at step S573 to step S578 are performed, and the motion information derivation process by template matching ends therewith. However, since the processes are similar to the processes at step S332 to step S337 of FIG. 21, description of them is omitted.

However, at step S573, template matching is performed only in regard to the number of candidates for a start point after the restriction determined at step S572 is performed to calculate a predicted motion vector similarly as in the case at step S453 of FIG. 24.

The prediction section 216 restricts the number of start points to perform template matching to derive motion information in such a manner as described above. Consequently, motion information can be obtained more rapidly.

### <Third Embodiment>

### <Candidate Upper Limit Number Information>

Incidentally, in template matching, a region existing in the proximity of a current block is used as a template as described hereinabove, for example, with reference to FIG. 5.

Accordingly, only after an image of a template is obtained, for example, by decoding, processing of template matching, namely, block matching, can be started. For example, if much time is required until an image of a template is obtained, then starting of processing of block matching is delayed, which is not preferable from the point of view of real time reproduction. In other words, it is advantageous in real time reproduction if processing of block matching can be started at an earlier timing.

Therefore, in order to make it possible to obtain motion information more rapidly, in some cases, the value of max_num_fruc_template_cand described hereinabove may be set to 0.

In this case, if the value of max_num_fruc_template_cand is 0, then template matching is not performed but bilateral matching is performed to derive motion information. Accordingly, block matching for deriving motion information can be started at an earlier timing.

Similarly, the value of max_num_fruc_bilateral_cand may be suitably set to 0 such that, in such a case, bilateral matching is not performed but template matching is performed to derive motion information.

For example, it is sometimes determined on the encoding side that a picture or a block is that from which it is desired to derive motion information rapidly or a picture or a block is that in regard to which it is desired to assure sufficient picture quality even if time is required for derivation of motion information. In other words, it is sometimes determined which one of bilateral matching and template matching is to be applied to a picture or a block of an encoding target to derive motion information.

In such a case as just described, if the control section 21 determines the value of max_num_fruc_template_cand or max_num_fruc_bilateral_cand appropriately, then motion information can be obtained more rapidly.

In the case where the value of the candidate upper limit number information is suitably set to 0 such that template matching or bilateral matching is not performed in this manner, for example, at step S371 or step S372 of FIG. 22, the value of max_num_fruc_template_cand is suitably set to 0 or the value of max_num_fruc_bilateral_cand is suitably set to 0.

In this case, for example, in the FRUC merge mode encoding process depicted in FIG. 12, the prediction section 30 acquires the candidate upper limit number information from the control section 21 and derives motion information in accordance with the acquired candidate upper limit number information. In particular, when max_num_fruc_template_cand = 0 is satisfied, the process at step S93 is not performed, and when max_num_fruc_bilateral_cand = 0 is satisfied, the process at step S94 is not performed. Consequently, encoding can be performed more rapidly.

Further, it is assumed that, in the case where max_num_fruc_template_cand or max_num_fruc_bilateral_cand is placed as candidate upper limit number information into an encoded stream, the value of at least one the types of candidate upper limit number information is set to 0 without fail. In this case, the prediction section 216 of the image decoding apparatus 201 can refer to the candidate upper limit number information to specify which one of the methods of bilateral matching and template matching is to be used to derive motion information in the FRUC mode.

Accordingly, in such a case as just described, the prediction section 216 acquires max_num_fruc_template_cand and max_num_fruc_bilateral_cand from the decoding section 211 at step S254 of FIG. 19. Then, at step S255, the prediction section 216 decides, on the basis of the values of max_num_fruc_template_cand and max_num_fruc_bilateral_cand acquired at step S254, whether or not bilateral matching is to be performed.

Especially, in this case, since FRUC_Mode_flag is unnecessary, it is possible for the image encoding apparatus 11 not to perform the processes at step S379 and step S384 of FIG. 22 such that FRUC_Mode_flag is not placed into an encoded stream.

### <Fourth Embodiment>

### <Description of Motion Information Derivation Process by Bilateral Matching>

Generally, in the case where a predicted motion vector is derived by template matching or bilateral matching, candidates for a start point, namely, candidates for a motion vector, are collected to generate a candidate list first.

Then, the candidates for a predicted motion vector indicated by the candidate list are used and, from among the candidates for a predicted motion vectors, an optimum one is selected. In other words, an optimum predicted motion vector is determined on the basis of the candidates for a predicted motion vector.

Although it depends upon the application or the like, generally on the broadcasting side of a moving image, time may be required for processing when encoding (encode) is performed. However, on the reproduction side such as a television receiver or a personal computer, it is frequently necessary to perform decoding (decode) on the real time basis. However, since the processing for acquiring a predicted motion vector on the basis of candidates for a prediction motion process involves a great processing amount, in some cases, there is the possibility that real time reproduction may not be able to perform.

Further, since the decoding side does not have an original image, a predicted motion vector determined by template matching or bilateral matching is not necessarily optimum with respect to the original image and there is the possibility that a predicted motion vector that is not optimum may be selected.

Therefore, on the encoding side, candidates for a predicted motion vector may be selected using an original image before encoding such that, on the decoding side, only fine adjustment of the predicted motion vector is performed using the candidates for a predicted motion vector.

In such a case as just described, for example, the candidate selection section 61 depicted in FIG. 7 or the candidate selection section 101 depicted in FIG. 9 is configured such that the single cost arithmetic operation circuit described hereinabove is provided or configured such that a plurality of cost arithmetic operation circuits connected in parallel to each other are provided.

Further, for example, the motion vector derivation section 62 depicted in FIG. 7, the motion vector derivation section 102 depicted in FIG. 9, the motion vector derivation section 252 depicted in FIG. 16, and the motion vector derivation section 312 depicted in FIG. 17 are configured such that they includes a single matching processing circuit described hereinabove.

Furthermore, in this case, the prediction section 30 performs, for example, the process depicted in FIG. 28 as the motion information derivation process by bilateral matching. In particular, the motion information derivation process by bilateral matching performed by the image encoding apparatus 11 is described with reference to a flow chart of FIG. 28.

It is to be noted that, since a process at step S611 is similar to the process at step S161 of FIG. 14, description of that is omitted.

At step S612, the candidate acquisition section 51 allocates, to each of the candidates for a start point obtained at step S611, namely, to each of the candidates for a predicted motion vector, an index number for identifying the candidate for a predicted motion vector. For example, an index number to be allocated is determined in advance for each of positions of the candidates for a predicted motion vector, namely, of the peripheral regions.

At step S613, the candidate selection section 61 selects one candidate for a predicted motion vector from among all candidates for a start point, namely, from among all candidates for a predicted motion vector, in regard to all reference pictures using the original image.

For example, the candidate selection section 61 determines, in regard to each of the candidates for a predicted motion vector, a difference between each of blocks on two reference pictures indicated by an adjacent motion vector that is a candidate for a predicted motion vector and a CU of an encoding target on the original image and calculates a cost of the candidate for a predicted motion vector based on the determined difference.

The candidate selection section 61 selects a candidate for a motion vector that indicates the lowest cost from among all candidates for a predicted motion vector.

Here, although the two reference pictures used for calculation of the cost are decoded images read out from the frame memory 29, as an image including the CU of the encoding target, the original image same as that supplied to the arithmetic operation section 22 is used. By calculating the cost using the original image in this manner, more accurate candidates for a predicted motion vector can be selected more accurately.

The prediction section 30 outputs an index number of the candidate for a predicted motion vector selected in this manner to the control section 21. Then at step S11 of FIG. 10, the control section 21 places the index number supplied from the prediction section 30 into the prediction information Pinfo or the like. Accordingly, for example, at step S105 of FIG. 12, an encoded stream in which index numbers of candidates for a predicted motion vector, namely, of candidates for a start point, are placed in an encoded form is obtained.

At step S614, the motion vector derivation section 62 calculates, in regard to the candidate for a start point selected at step S613, namely, the candidate for a predicted motion vector, a predicted motion vector of the CU of the encoding target and a cost of the predicted motion vector by bilateral matching. It is to be noted that, at step S614, the decoded image read out from the frame memory 29 is used as a reference picture to perform a process similar to that at step S166 of FIG. 14.

At step S615, the motion vector derivation section 62 selects the predicted motion vector that indicates the lowest cost from among the predicted motion vectors calculated at step S614 as a final predicted motion vector of the CU of the encoding target and supplies the final predicted motion vector to the sub block candidate acquisition section 53.

Further, in the case where a difference motion vector is placed into an encoded stream such as a case in which, for example, the applicable mode is the FRUC AMVP mode or the like, the difference between the candidate for a predicted motion vector and the predicted motion vector is calculated as a reference motion vector and the obtained difference motion vector is placed into an encoded stream at step S615. It is to be noted that the original image may be used also in calculation of a difference motion vector.

After the predicted motion vector of the CU of the encoding target is obtained in this manner, processes at step S616 to step S619 are performed, and the motion information derivation process by bilateral matching ends therewith. However, since the processes are similar to the processes at step S164 to step S167 of FIG. 14, respectively, description of them is omitted.

The prediction section 30 outputs an index number indicative of a candidate for a predicted motion vector corresponding to a predicted motion vector in such a manner as described above. Consequently, on the image decoding apparatus 201, an appropriate candidate for a predicted motion vector can be selected and it becomes necessary to perform only a process for the candidate for a predicted motion vector, and appropriate motion information can be obtained more rapidly with a small processing amount.

### <Description of Motion Information Derivation Process by Template Matching>

Similarly, the prediction section 30 performs a process, for example, depicted in FIG. 29 as the motion information derivation process by template matching. In particular, in the following, the motion information derivation process by template matching performed by the image encoding apparatus 11 is described with reference to a flow chart of FIG. 29.

It is to be noted that, since a process at step S651 is similar to the process at step S131 of FIG. 13, description of that is omitted.

Further, after the process at step S651 is performed, a process at step S652 is performed by the candidate acquisition section 91, and a process at step S653 is performed by the candidate selection section 101. It is to be noted that the processes at step S652 and step S653 are similar to the processes at step S612 and step S613 of FIG. 28, respectively, and therefore, description of them is omitted.

However, at step S653, in regard to each candidate for a predicted motion vector, a difference between a block (decoded image) on one reference picture indicated by an adjacent motion vector that is a candidate for a predicted motion vector and the CU of the encoding target on the original image is determined to calculate a cost. Then, from among all candidates for a predicted motion vector, a candidate for a predicted motion vector that indicates the lowest cost is selected.

The prediction section 30 outputs an index number of the candidate for a predicted motion vector selected in this manner to the control section 21. Then, at step S11 of FIG. 10, the control section 21 places the index number supplied from the prediction section 30 into the prediction information Pinfo or the like. Accordingly, for example, at step S105 of FIG. 12, an encoded stream in which the index number of the candidate for a predicted motion vector, namely, the candidate for a start point, is placed in an encoded form is obtained.

At step S654, the motion vector derivation section 102 calculates, in regard to the candidate for a start point selected at step S653, namely, the candidate for a predicted motion vector, a predicted motion vector of the CU of the encoding target and a cost of the predicted motion vector by template matching. It is to be noted that, at step S654, a decoded image read out from the frame memory 29 is used as a picture of an encoding target and a reference picture, and a process similar to the process at step S136 of FIG. 13 is performed.

At step S655, the motion vector derivation section 102 selects, from among the predicted motion vectors calculated at step S654, a predicted motion vector that indicates the lowest cost as a final predicted motion vector of the CU of the encoding target and supplies the final predicted motion vector to the sub block candidate acquisition section 93.

Further, in the case where a difference motion vector is placed into an encoded stream such as a case in which, for example, the applicable mode is the FRUC AMVP mode or the like, a difference motion vector is calculated and the obtained difference motion vector is placed into an encoded stream at step S655.

After the predicted motion vector of the CU of the encoding target is obtained in this manner, processes at step S656 to step S659 are performed, and the motion information derivation process by template matching ends therewith. However, since the processes are similar to the processes at step S134 to step S137 of FIG. 13, respectively, description of them is omitted.

The prediction section 30 outputs an index number indicative of a candidate for a predicted motion vector corresponding to a predicted motion vector in such a manner as described above. Consequently, appropriate motion information can be obtained more rapidly with a small processing amount.

It is to be noted here that, although, in regard to a CU of an encoding target, an example in which the index number of a candidate for a start point is placed into an encoded stream, also in regard to a sub block, an index number of a candidate for a start point may be placed into an encoded stream similarly.

### <Description of Motion Information Derivation Process by Bilateral Matching>

On the other hand, in the image decoding apparatus 201, a motion information derivation process by bilateral matching depicted in FIG. 30 and a motion information derivation process by bilateral matching depicted in FIG. 31 are performed.

First, the motion information derivation process by bilateral matching performed by the image decoding apparatus 201 is described below with reference to a flow chart of FIG. 30.

It is to be noted that, since a process at step S691 is similar to the process at step S291 of FIG. 20, description of that is omitted.

At step S692, the candidate acquisition section 241 allocates, to each of the candidates for a start point obtained at step S691, namely, to each of the candidates for a predicted motion vector, an index number for identifying the candidates for a start point. It is to be noted that, at step S692, a process similar to that at step S612 of FIG. 28 is performed.

At step S693, the prediction section 216 acquires an index number indicative of a candidate for a start point from the decoding section 211.

In particular, in the decoding section 211, an index number of the candidate for a start point is obtained by decoding of the encoded stream. The prediction section 216 acquires the prediction information Pinfo in which the index number is included and so forth from the decoding section 211 to acquire the index number. The index number obtained at step S693 is an index number of the candidate for a start point selected at step S613 of FIG. 28.

At step S694, the candidate selection section 251 selects one candidate for a start point on the basis of the index number acquired at step S693.

In particular, the candidate selection section 251 selects a candidate for a start point indicated by the index number acquired at step S693 from among the candidates for a start point indicated by the candidate list, namely, from among the candidates for a predicted motion vector.

After the candidate for a predicted motion vector is selected, processes at step S695 and step S696 are performed by the motion vector derivation section 252 to derive a predicted motion vector.

It is to be noted that, since the processes are similar to the processes at step S614 and S615 of FIG. 28, description of them is omitted. However, at step S695, a cost and a predicted motion vector are calculated by bilateral matching only in regard to the candidate for a start point selected at step S694, namely, in regard to the candidate for a predicted motion vector.

Further, when a difference motion vector is placed in an encoded stream in such a case in which the applicable mode is the FRUC AMVP mode, the processes at step S695 and step S696 are not performed. In this case, a difference motion vector is acquired from the decoding section 211 by the prediction section 216, and a result when the difference motion vector is added to the adjacent motion vector as a candidate for a predicted motion vector selected at step S694 is determined as a predicted motion vector.

After the process at step S696 is performed to acquire a predicted motion vector of the CU of the decoding target, processes at step S697 to step S700 are performed, and the motion information derivation process by bilateral matching ends therewith. It is to be noted that, since the processes at step S697 to step S700 are similar to the processes at step S294 to step S297 of FIG. 20 respectively, description of them is omitted.

The prediction section 216 performs a process only for a candidate for a start point indicated by an index number to derive motion information in this manner. Consequently, since the necessity for performing processing for each of a plurality of candidates for a start point is eliminated, the processing amount by the image decoding apparatus 201 side is reduced. As a result, motion information can be obtained more rapidly. Besides, by using, as the candidate for a start point, a candidate for a start point indicated by an index number designated by the image encoding apparatus 11, more accurate motion information can be derived.

### <Description of Motion Information Derivation Process by Template Matching>

Subsequently, a motion information derivation process by template matching performed by the image decoding apparatus 201 is described with reference to a flow chart of FIG. 31.

It is to be noted that, since a process at step S731 is similar to the process at step S331 of FIG. 21, description of that is omitted.

Further, after the process at step S731 is performed, a process at step S732 is performed by the candidate acquisition section 301 and a process at step S733 is performed by the prediction section 216. Furthermore, a process at step S734 is performed by the candidate selection section 311, and processes at step S735 and step S736 are performed by the motion vector derivation section 312.

It is to be noted that, since the process at step S732 to step S736 are similar to the processes at step S692 to step S696 of FIG. 30, description of them is omitted.

However, at step S735, a cost and a predicted motion vector are calculated by template matching only in regard to the candidate for a start point selected at step S734, namely, in regard to the candidate for a predicted motion vector.

However, in the case where a difference motion vector is placed in an encoded stream in such a case in which the applicable mode is the FRUC AMVP mode, the processes at step S735 and step S736 are not performed. In this case, a difference motion vector is acquired from the decoding section 211 by the prediction section 216, and a result when the difference motion vector is added to the adjacent motion vector as a candidate for a predicted motion vector selected at step S734 is determined as a predicted motion vector.

After the process at step S736 is performed to acquire a predicted motion vector of the CU of the decoding target, processes at step S737 to step S740 are performed, and the motion information derivation process by template matching ends therewith. It is to be noted that, since the processes at step S737 to step S740 are similar to the processes at step S334 to step S337 of FIG. 21, respectively, description of them is omitted.

The prediction section 216 performs a process only for a candidate for a start point indicated by an index number to derive motion information in this manner. Consequently, since the necessity for performing processing for each of a plurality of candidates for a start point is eliminated, the processing amount by the image decoding apparatus 201 side is reduced, and motion information can be obtained more rapidly. Besides, by using, as the candidate for a start point, a candidate for a start point indicated by an index number designated by the image encoding apparatus 11 side, more accurate motion information can be derived.

### <Fifth Embodiment>

### <Improved Template Mode>

Incidentally, in template matching, for example, decoded images (decoded images) of a region TM52-1 and another region TM52-2 adjacent a current block CB51 are used as templates as depicted in FIG. 32.

Accordingly, until after decoded images of the region TM52-1 and the region TM52-2 are obtained, processing of block matching by template matching cannot be started. Usually, much time is required before decoded images of region TM52-1 and the region TM52-2 are obtained after a processing procedure for decoding (decode). Therefore, since processing for encoding or decoding cannot be performed in regard to a plurality of blocks (CUs), high speed processing is difficult.

Further, in bilateral matching, for example, as described hereinabove with reference to FIG. 3, the movement of an object on an image is restricted to a movement linearly interconnecting the block BL11, the current block CB11, and the block BL12. However, since actually there exists also an object (image) that does not move linearly, derivation (search) of a predicted motion vector by bilateral matching sometimes results in failure, which results in degradation of the encoding efficiency. In other words, an appropriate predicted motion vector cannot sometimes be acquired.

Therefore, in the case where the applicable mode is the FRUC mode, it may be made possible for motion information to be derived not only by the template matching method and the bilateral matching method but also by an improved template matching method. In other words, in the case where the applicable mode is the FRUC mode, motion information may be derived by one of the template matching method, the bilateral matching method, and the improved template matching method.

It is to be noted that, in the case where the applicable mode is the FRUC mode, although one of the bilateral matching method and the improved template matching method may be capable of being selected as a derivation method of motion information, the following description is continued assuming that, in the case where the applicable mode is the FRUC mode, one of the template matching method, the bilateral matching method, and the improved template matching method can be selected.

Here, an overview of the improved template matching method is described.

For example, it is assumed that there are, as depicted in FIG. 33, a picture PIC11 of an encoding target and a picture PIC12 and a picture PIC13 that are reference pictures. It is to be noted that like portions in FIG. 33 to those in FIG. 4 are denoted by the same symbols and description of them is suitably omitted.

In this example, the current block CB11 on the picture PIC11 is an encoding target or a decoding target. Meanwhile, the picture PIC12 is a reference picture indicated by a reference list Ref0 and earlier in time to the picture PIC11, and the picture PIC13 is a reference picture indicated by a reference list Ref1 and later in time than the picture PIC11.

In improved template matching, first in regard to the current block CB11, peripheral regions adjacent the current block CB11 are determined as candidates for a predicted motion vector and adjacent motion vectors of the peripheral regions are acquired similarly as upon template matching or bilateral matching.

Then, for example, in regard to the picture PIC12, a difference between a block BL61 indicated by one candidate for a predicted motion vector and the current block CB11 is calculated, and a cost of the candidate for a predicted motion vector is calculated. The value of this cost decreases as the difference between the block BL61 and the current block CB11 decreases.

Similarly, also in regard to the other candidate for a predicted motion vector, the difference from the current block CB11 is calculated and the cost is calculated.

After the cost is calculated for each candidate for a predicted motion vector in regard to the picture PIC12, a candidate for a predicted motion vector whose cost indicates the lowest value is determined as a predicted motion vector regarding the picture PIC12. Here, it is assumed that the cost of the candidate for a predicted motion vector corresponding, for example, to the block BL61 is lowest.

It is to be noted that a predicted motion vector of a current block determined in regard to a reference picture of the reference list Ref0, namely, a predicted motion vector between the current block and the reference picture of the reference list Ref0, is hereinafter referred to also as predicted motion vector MVL0.

Subsequently, it is assumed that the block BL61 indicated by the predicted motion vector MVL0 is positioned at the position of the current block CB11. In short, an image of the block BL61 is used as an image of the current block CB11.

Further, in regard to the current block CB11, peripheral regions adjacent the current block CB11 are determined as candidates for a predicted motion vector, and adjacent motion vectors in regard to the picture PIC13 of the peripheral regions are acquired.

Then, for example, in regard to the picture PIC13, the difference between a block BL62 indicated by one candidate for a predicted motion vector and the block BL61 used as the current block CB11 is calculated, and the cost regarding the candidate for a predicted motion vector is calculated. This cost has a value that decreases as the difference between the block BL62 and the block BL61 decreases.

Also in regard to the other candidate for a predicted motion vector, the difference from the block BL61 is calculated and the cost is calculated similarly.

After the cost is calculated for each candidate for a predicted motion vector in regard to the picture PIC13, a candidate for a predicted motion vector whose cost is lowest from among the costs is selected.

Further, a region on the picture PIC13 determined by the selected candidate for a predicted motion vector is determined as a search range, and the predicted motion vector is successively calculated by block matching while the position of the block BL62 is successively displaced in the search range.

In particular, the difference between the block BL62 in the search range and the block BL61 is calculated, and the predicted motion vector and the cost regarding the position of each block BL62 are calculated. This cost has a value that decreases as the difference between the block BL61 and the block BL62 decreases.

After the cost of each block BL62 position is calculated in regard to the picture PIC13, the motion vector of the cost that is lowest among the costs is determined as a predicted motion vector between the picture PIC13 and the current block CB11.

It is to be noted that the predicted motion vector determined in regard to the reference picture of the reference list Ref1, namely, the predicted motion vector between the current block and the reference block of the reference list Ref1 is hereinafter referred to also as predicted motion vector MVL1.

For example, in this example, a predicted motion vector MVL0 is derived by the image encoding apparatus 11 side, and information indicative of a candidate for a predicted motion vector corresponding to the obtained predicted motion vector MVL0 is transmitted to the image decoding apparatus 201. Then, in the image decoding apparatus 201, the predicted motion vector MVL0 designated from the image encoding apparatus 11 is used to derive a predicted motion vector MVL1.

It is to be noted that, while description is given here of an example in which the predicted motion vector MVL1 is derived after the predicted motion vector MVL0 is derived, the predicted motion vector MVL0 may otherwise be derived after the predicted motion vector MVL1 is derived.

In such a case as just described, the predicted motion vector MVL1 is derived by the image encoding apparatus 11 side, and information indicative of a candidate for a predicted motion vector corresponding to the obtained predicted motion vector MVL1 is transmitted to the image decoding apparatus 201. Then, in the image decoding apparatus 201, the predicted motion vector MVL1 designated from the image encoding apparatus 11 is used to derive the predicted motion vector MVL0.

In the following, description is continued assuming that the predicted motion vector MVL0 is derived by the image encoding apparatus 11 side and the predicted motion vector MVL1 is derived by the image decoding apparatus 201 side.

In such improved template matching as described above, when the image encoding apparatus 11 selects a candidate for a predicted motion vector upon derivation of a predicted motion vector MVL0, it can calculate the cost using an original image. Therefore, a candidate for a predicted motion vector that is more accurate, namely more appropriate, can be selected.

Further, in the image decoding apparatus 201, a block indicated by the predicted motion vector MVL0 on a reference picture is used as a current block. Therefore, processing of block matching can be started without wailing until a decoded image of part of a picture of a decoding target such as a template is obtained, and motion information can be obtained more rapidly.

Furthermore, since the predicted motion vector MVL0 and the predicted motion vector MVL1 can be obtained by the improved template matching, the motion of an object (image) is not restricted to a linear motion as in the case of bilateral matching between the picture PIC12 and the picture PIC13. Accordingly, it is possible to obtain a more accurate predicted motion vector can be obtained with respect to an actual moving image, and the encoding efficiency can be improved.

Besides, since the predicted motion vector MVL1 is derived on the image decoding apparatus 201 side, the necessity for placing information relating to the predicted motion vector MVL1 into an encoded stream is eliminated, and the code amount can be reduced as much.

### <Configuration of Prediction Section>

In the case where motion information can be derived by template matching in the FRUC mode, FRUC_Mode_flag generated by the control section 21 of the image encoding apparatus 11 is information indicative of which one of the template matching method, the bilateral matching method, and the improved template matching method is to be used to derive motion information.

Further, the prediction section 30 of the image encoding apparatus 11 includes, as a configuration for deriving motion information by improved template matching, for example, a configuration depicted in FIG. 34.

In particular, in the example depicted in FIG. 34, the prediction section 30 includes a candidate acquisition section 361, an improved template matching processing section 362, a sub block candidate acquisition section 363, and an improved template matching processing section 364.

Of the candidate acquisition section 361 to improved template matching processing section 364, the candidate acquisition section 361 and the improved template matching processing section 362 are processing blocks for deriving motion information in regard to a CU (CTU) of an encoding target. In contrast, the sub block candidate acquisition section 363 and the improved template matching processing section 364 are processing blocks for deriving motion information in regard to a sub block of an encoding target.

The candidate acquisition section 361 performs, for example, operation similar to that of the candidate acquisition section 51 of FIG. 7 to generate a candidate list, and acquires adjacent motion vectors of candidates for a predicted motion vector indicated by the candidate list, namely, of peripheral regions and supplies the adjacent motion vectors to the improved template matching processing section 362.

The improved template matching processing section 362 includes a candidate selection section 371 and a motion vector derivation section 372.

The candidate selection section 371 selects one candidate from a plurality of candidates for a predicted motion vector (candidates for a start point) indicated by the candidate list.

The motion vector derivation section 372 determines a predicted motion vector of the encoding target by block matching on the basis of the candidates for a predicted motion vector. Consequently, a predicted motion vector MVL0 and a predicted motion vector MVL1 are obtained in regard to the CU of the encoding target.

Further, as occasion demands, the motion vector derivation section 372 derives the difference between the predicted motion vector obtained finally and the candidate for a predicted motion vector used for derivation of the predicted motion vector as a difference motion vector of the CU of the encoding target.

The improved template matching processing section 362 supplies the obtained predicted motion vector of the CU of the encoding target to the sub block candidate acquisition section 363.

The sub block candidate acquisition section 363 uses the predicted motion vector from the improved template matching processing section 362 to perform operation similar to that of the sub block candidate acquisition section 53 of FIG. 7 to generate a sub block candidate list.

The sub block candidate acquisition section 363 acquires candidates for a predicted motion vector indicated by the sub block candidate list generated thereby, namely, of the peripheral regions, and the predicted motion vector supplied from the improved template matching processing section 362 and supplies the acquired predicted motion vectors to the improved template matching processing section 364.

The improved template matching processing section 364 performs a process similar to that of the improved template matching processing section 362 on the basis of the adjacent motion vector and the predicted motion vector supplied from the sub block candidate acquisition section 363 to derive a predicted motion vector of the sub block of the encoding target.

The improved template matching processing section 364 includes a candidate selection section 373 and a motion vector derivation section 374, and the candidate selection section 373 and the motion vector derivation section 374 correspond to the candidate selection section 371 and the motion vector derivation section 372, respectively.

Further, as occasion demands, in the motion vector derivation section 374, the difference between the finally obtained predicted motion vector and the candidate for a predicted motion vector used for derivation of the predicted motion vector is calculated as a difference motion vector of the sub block of the encoding target.

### <Description of FRUC Merge Mode Encoding Process>

Subsequently, a FRUC merge mode encoding process by the image encoding apparatus 11 is described with reference to a flow chart of FIG. 35. It is to be noted that the FRUC merge mode encoding process is performed in a unit of a CU or in a unit of a sub block.

After the FRUC merge mode encoding process is started, processes at step S771 to step S774 are performed. However, the processes are similar to the processes at step S91 to step S94 of FIG. 12, respectively, and therefore, description of them is omitted.

At step S775, the prediction section 30 derives motion information of the current block by the improved template matching method and calculates an RD cost J_{impTemplate} when the improved template matching method is adopted.

For example, the prediction section 30 reads out a reference picture indicated by reference image specification information from the frame memory 29 on the basis of prediction information Pinfo and so forth supplied from the control section 21. Further, the prediction section 30 uses the read out reference picture and an original image of the picture of the encoding target supplied thereto to derive motion information of the current block by the improved template matching method and calculate also the RD cost J_{impTemplate}.

At step S776, the prediction section 30 decides whether or not the RD cost J_{BiLateral} from among the RD cost J_{BiLateral}, the RD cost J_{Template}, and the RD COSt J_{impTemplate} calculated at step S773 to step S775 is lowest.

In the case where it is decided at step S776 that the RD cost J_{BiLateral} is lowest, a process at step S777 is performed, and thereafter, the processing advances to step S781. It is to be noted that, since the process at step S777 is similar to the process at step S96 of FIG. 12, description of that is omitted.

On the other hand, in the case where it is decided at step S776 that the RD cost J_{BiLateral} is not lowest, the processing advances to step S778.

At step S778, the prediction section 30 decides whether or not the RD cost J_{impTemplate} is lowest among the RD cost J_{BiLateral}, the RD cost J_{Template}, and the RD cost J_{impTemplate} is lowest.

In the case where it is decided at step S778 that the RD cost J_{impTemplate} is lowest, the processing advances to step S779.

At step S779, the prediction section 30 generates a prediction image on the basis of the motion information derived by the improved template matching method and supplies the prediction image to the arithmetic operation section 22 and the arithmetic operation section 28. For example, the prediction section 30 determines the image generated by motion compensation using blocks indicated by the motion information of two reference pictures that are decoded images, namely, indicated by the predicted motion vector MVL0 and the predicted motion vector MVL1 as a prediction image P.

It is to be noted that, although, in the improved template matching, a reference picture of the reference list Ref0 and a reference picture of the reference list Ref1 are used to generate a prediction image P, only one of the reference pictures may otherwise be used to generate a prediction image P.

After the prediction image P is generated at step S779, the processing advances to step S781.

On the other hand, in the case where it is decided that the RD cost J_{impTemplate} is not lowest at step S778, or the process at step S772 is performed, a process at step S780 is performed thereafter. However, since the process at step S780 is similar to the process at step S97 of FIG. 12, description of that is omitted. After the process at step S780 is performed, the processing advances to step S781.

It is to be noted that, at step S57 or step S62 of the inter-prediction process mode setting process described hereinabove with reference to FIG. 11, on the basis of a result of the decision at step S776 or step S778, FRUC_Mode_flag is generated which indicates which one of the template matching method, the bilateral matching method, and the improved template matching method is to be used to derive motion information.

If the process at step S777 is performed, if the process at step S779 is performed or if the process at step S780 is performed, then processes at step S781 to step S788 are performed, and the FRUC merge mode encoding process ends therewith. It is to be noted that, since the processes at step S781 to step S788 are similar to the processes at step S98 to step S105 of FIG. 12, respectively, description of them is omitted.

The image encoding apparatus 11 derives motion information by the FRUC mode and encodes a block of an encoding target in such a manner as described above. By utilizing the FRUC mode and deriving motion information on the decoding side in this manner, motion information to be placed into an encoded stream can be reduced and the encoding efficiency can be improved.

### <Description of Motion Information Derivation Process by Improved Template Matching>

Here, a process for deriving motion information from within the process corresponding to step S775 of FIG. 35 is describe in more detail. In particular, a motion information derivation process by improved template matching method performed by the prediction section 30 is described with reference to a flow chart of FIG. 36.

At step S821, the candidate acquisition section 361 acquires candidates for a start point in regard to a reference picture of a reference list Ref0, namely, candidates for a predicted motion vector, to generate a candidate list. For example, at step S821, a process similar to that at step S161 of FIG. 14 is performed.

At step S822, the candidate acquisition section 361 allocates, to the candidates for a predicted motion vector obtained at step S821, index numbers for identifying the candidates for a predicted motion vector. For example, the index number to be allocated for each of the candidates for a predicted motion vector, namely, for each of the positions of peripheral regions, are determined in advance.

Further, the candidate acquisition section 361 acquires adjacent motion vectors that are candidates for a predicted motion vector indicated by the candidate list and supplies the adjacent motion vectors to the improved template matching processing section 362.

At step S823, the candidate selection section 371 selects a candidate for a predicted motion vector whose cost is lowest from among the candidates for a predicted motion vector indicated by the candidate list on the basis of an original image.

In particular, the candidate selection section 371 reads out a block indicated by an adjacent motion vector that is a candidate for a predicted motion vector in a reference picture (decoded image) of a reference list Ref0 indicated by the reference image specification information from the frame memory 29. Then, the candidate selection section 371 calculates the difference between the read out block and the CU of the encoding target (current block) on the original image supplied thereto to calculate the cost of the candidate for a predicted motion vector.

The candidate selection section 371 selects a candidate for a predicted motion vector whose cost is lowest from among the candidates for a predicted motion vector.

At step S824, the motion vector derivation section 372 derives a difference motion vector.

In particular, the motion vector derivation section 372 determines a region defined by the candidate for a predicted motion vector selected at step S823 in the reference picture (decoded image) of the reference list Ref0 as a search range. The motion vector derivation section 372 determines a difference between the CU of the encoding target on the original image and the block in the search range to calculate a cost and a predicted motion vector and determines the motion prediction vector whose cost is lowest as a final predicted motion vector MVL0. Then, the difference between the predicted motion vector MVL0 and the adjacent motion vector that is the candidate for a predicted motion vector is determined as a difference motion vector.

After the difference motion vector is derived, the obtained difference motion vector, the index number indicative of the selected candidate for a predicted motion vector and selection information that the predicted motion vector MVL0 is selected are supplied from the prediction section 30 to the control section 21. Further, the motion vector derivation section 372 supplies the obtained predicted motion vector MVL0 to the sub block candidate acquisition section 363.

Here, the selection information is information indicative of which predicted motion vector from between the predicted motion vector MVL0 and the predicted motion vector MVL1 is derived and placed into an encoded stream by the image encoding apparatus 11. Further, the motion vector information here is, for example, a difference motion vector and an index number indicative of the selected candidate for a predicted motion vector.

The selection information, the index information, and the difference motion vector are placed into and transmitted together with an encoded stream to the image decoding apparatus 201 at step S788 of FIG. 35.

It is to be noted that a difference motion vector may not be derived and the selected candidate for a predicted motion vector may be determined as it is as the predicted motion vector MVL0.

At step S825, the candidate acquisition section 361 performs a process similar to that at step S821 to acquire candidates for a start point in regard to a reference picture of the reference list Ref1, namely, candidates for a predicted motion vector, to generate a candidate list.

Further, the candidate acquisition section 361 acquires adjacent motion vectors that are candidates for a predicted motion vector indicated by the candidate list and supplies the adjacent motion vectors to the improved template matching processing section 362.

At step S826, the candidate selection section 371 selects a candidate for a predicted motion vector whose cost is lowest from among the candidates for a predicted motion vector indicated by the candidate list.

In particular, the candidate selection section 371 reads out a block indicated by an adjacent motion vector that is a candidate for a predicted motion vector in the reference picture (decoded image) of the reference list Ref1 indicated by the reference image specification information from the frame memory 29.

Further, the candidate selection section 371 reads out a block indicated by the predicted motion vector MVL0 in the reference picture (decoded image) of the reference list Ref0 indicated by the reference image specification information from the frame memory 29.

Then, the candidate selection section 371 determines the difference between the read out two blocks to calculate a cost of the candidates for a predicted motion vector and selects the candidate for a predicted motion vector whose cost is lowest.

At step S827, the motion vector derivation section 372 derives a predicted motion vector on the basis of the candidate for a predicted motion vector selected by the process at step S826.

In particular, the motion vector derivation section 372 determines a region defined by the candidate for a predicted motion vector selected at step S826 in a reference picture (decoded image) of the reference list Ref1 read out from the frame memory 29 as a search range.

Then, the motion vector derivation section 372 determines a difference between a block indicated by the predicted motion vector MVL0 in the reference picture (decoded image) of the reference list Ref0 read out from the frame memory 29 and each block in the search range to calculate a cost and a predicted motion vector, and determines a predicted motion vector whose cost is lowest by block matching as a final predicted motion vector MVL1. The motion vector derivation section 372 supplies the predicted motion vector MVL1 obtained in this manner to the sub block candidate acquisition section 363.

When encoding is performed in a unit of a CU, at step S779 of FIG. 35, a prediction image P is generated by motion compensation on the basis of the predicted motion vector MVL0 and the predicted motion vector MVL1 obtained by the processes described above.

At step S828, the sub block candidate acquisition section 363 acquires candidates for a predicted motion vector in regard to a reference picture of the reference list Ref0 to generate a sub block candidate list of a sub block of an encoding target.

In particular, the sub block candidate acquisition section 363 generates a sub block candidate list on the basis of peripheral regions in a CU of an encoding target determined in advance with respect to the sub block of the encoding target and the predicted motion vector MVL0 supplied from the improved template matching processing section 362.

Further, the sub block candidate acquisition section 363 acquires adjacent motion vectors of the candidates for a predicted motion vector indicated by the sub block candidate list, namely, of peripheral regions, and the predicted motion vector MVL0 supplied from the improved template matching processing section 362 and supplies the acquired motion vectors to the improved template matching processing section 364.

At step S829, the candidate selection section 373 performs a process similar to that at step S826 to select a candidate for a predicted motion vector whose cost is lowest from among the candidates for a predicted motion vector indicated by the sub block candidate list.

It is to be noted that, here, for example, on the basis of the difference between the block indicated by the predicted motion vector MVL1 obtained at step S827 on the reference picture (decoded image) of the reference list Ref1 and the block indicated by the candidate for a predicted motion vector on the reference picture (decoded image) of the reference list Ref0, a cost of the candidate for a predicted motion vector is calculated.

At step S830, the motion vector derivation section 374 performs a process similar to that at step S827 on the basis of the candidate for a predicted motion vector selected at step S829 to derive a predicted motion vector MVL0 of the sub block of the encoding target.

In this case, for example, a region indicated by the candidate for a predicted motion vector on the reference picture (decoded image) of the reference list Ref0 is determined as a search range. Then, the difference between the block indicated by the predicted motion vector MVL1 obtained at step S827 on the reference picture (decoded image) of the reference list Ref1 and each block in the search range is determined to calculate a cost and a predicted motion vector, and the predicted motion vector whose cost is lowest by block matching is determined as a final predicted motion vector MVL0.

After the predicted motion vector MVL0 is derived, processes at step S831 to step S833 are performed for the reference picture of the reference list Ref1 in regard to the sub block of the encoding target to derive a predicted motion vector MVL1 of the sub block of the encoding target. It is to be noted that, since processes at step S831 to step S833 are similar to the processes at step S825 to step S827, respectively, description of them is omitted.

When encoding in a unit of a sub block is performed, at step S779 of FIG. 35, a prediction image P is generated by motion compensation on the basis of the predicted motion vector MVL0 and the predicted motion vector MVL1 of the sub block obtained by the processes descried above.

When the predicted motion vector MVL0 and the predicted motion vector MVL1 are derived in such a manner as described above, the motion information derivation process by improved template matching ends therewith.

The prediction section 30 derives motion information by improved plate matching using an original image in such a manner as described above. This makes it possible to obtain a more accurate predicted motion vector more rapidly.

### <Configuration of Prediction section>

Further, in the case where derivation of motion information by improved plate matching is performed in the FRUC mode, the prediction section 216 of the image decoding apparatus 201 includes, for example, a configuration depicted in FIG. 37 as a configuration for deriving motion information by improved template matching.

In particular, in the example depicted in FIG. 37, the prediction section 216 includes a candidate acquisition section 401, an improved template matching processing section 402, a sub block candidate acquisition section 403, and an improved template matching processing section 404.

Further, the improved template matching processing section 402 includes a candidate selection section 411 and a motion vector derivation section 412, and the improved template matching processing section 404 includes a candidate selection section 413 and a motion vector derivation section 414.

It is to be noted that, since the candidate acquisition section 401 to improved template matching processing section 404 are similar to the candidate acquisition section 361 to improved template matching processing section 364 of FIG. 34, respectively, description of them is omitted.

Also the candidate selection section 411 to motion vector derivation section 414 are similar to the candidate selection section 371 to motion vector derivation section 374 of FIG. 34, respectively, and therefore, description of them is omitted.

### <Description of FRUC Merge Mode Decoding Process>

Now, a FRUC merge mode decoding process by the image decoding apparatus 201 is described with reference to a flow chart of FIG. 38. This FRUC merge mode decoding process is performed in a unit of a CU or in a unit of a sub block.

It is to be noted that, since processes at step S861 to step S867 are similar to the processes at step S251 to step S257 of FIG. 19, respectively, description of them is omitted.

In the case where it is decided at step S865 that bilateral matching is not to be performed, the prediction section 216 decides, at step S868, on the basis of FRUC_Mode_flag whether or not improved template matching is to be performed. For example, in the case where the value of FRUC_Mode_flag is a value indicating that improved template matching is to be performed, it is decided that improved template matching is to be performed.

In the case where it is decided at step S868 that improved template matching is to be performed, at step S869, the prediction section 216 derives motion information by the improved template matching method. Consequently, a predicted motion vector is obtained as the motion information of the block of the decoding target. Here, a predicted motion vector MVL0 and a predicted motion vector MVL1 described hereinabove are obtained.

At step S870, the prediction section 216 performs motion compensation on the basis of the motion information derived by the process at step S869, namely, on the basis of the predicted motion vector, to generate a prediction image P and supplies the prediction image P to the arithmetic operation section 214.

For example, the prediction section 216 reads out two decoded images indicated by the reference image specification information as reference pictures from the frame memory 215 and generates a prediction image P by motion compensation using blocks indicated by predicted motion vectors in the reference pictures.

After the prediction image P is obtained in this manner, the processing advances to step S873.

On the other hand, in the case where it is decided at step S868 that improved plate matching is not to be performed or it is decided at step S863 that the CU or the sub block is a P slice, processes at step S871 and step S872 are performed, and thereafter, the processing advances to step S873. It is to be noted that, since the processes at step S871 and step S872 are similar to the processes at step S258 and step S259 of FIG. 19, respectively, description of them is omitted.

Further, after the process at step S867 is performed, after the process at step S870 is performed or after the process at step S872 is performed, processes at step S873 and step S874 are performed, and the FRUC merge mode decoding process ends therewith. It is to be noted that, since the processes at step S873 and step S874 are similar to the processes at step S260 and step S261 of FIG. 19, respectively, description of them is omitted.

The image decoding apparatus 201 derives motion information by the FRUC mode and decodes a block of a decoding target in such a manner as described above. By utilizing the FRUC mode and deriving motion information on the decoding side, the code amount of the encoded stream can be reduced and the encoding efficiency can be improved.

### <Description of Motion Information Derivation Process by Improved Template Matching>

Here, a motion information derivation process by improved template matching corresponding to the process at step S869 of FIG. 38 and performed by the prediction section 216 is described with reference to a flow chart of FIG. 39.

At step S901, candidates for a predicted motion vector are acquired by the candidate acquisition section 401, and at step S902, index numbers are allocated to the candidates for a predicted motion vector by the candidate acquisition section 401.

It is to be noted that, since the processes at step S901 and step S902 are similar to the processes at step S821 and step S822 of FIG. 36, respectively, description of them is omitted.

At step S903, the prediction section 216 acquires the index numbers indicative of the candidates for a predicted motion vector from the decoding section 211.

In particular, the decoding section 211 acquires index numbers, difference motion vectors, and selection information of the candidates for a predicted motion vector by decoding of the encoded stream. The prediction section 216 acquires the index numbers by acquiring the prediction information Pinfo, which includes the index numbers, difference motion vectors and selection information, from the decoding section 211. It is to be noted that the index numbers and the difference motion vectors acquired here are those obtained at step S823 and step S824 of FIG. 36.

At step S904, the motion vector derivation section 412 generates a predicted motion vector on the basis of the index number acquired at step S903.

In particular, the candidate selection section 411 selects, from among the candidates for a predicted motion vector indicated by the candidate list, a candidate for a predicted motion vector indicated by the index number acquired at step S903. Then, the motion vector derivation section 412 adds the difference motion vector acquired at step S903 to the adjacent motion vector that is a candidate for a predicted motion vector selected by the candidate selection section 411 to obtain a predicted motion vector MVLO.

It is to be noted that, in the case where there is no candidate for a predicted motion vector, the candidate for a predicted motion vector selected by the candidate selection section 411 is determined as it is as the predicted motion vector MVL0. Here, since the selection information is information that the predicted motion vector MVL0 is derived, after the predicted motion vector MVL0 is obtained, the predicted motion vector MVL1 is derived. However, when the selection information is information that the predicted motion vector MVL1 is derived, the predicted motion vector MVL0 is derived after the predicted motion vector MVL1 is obtained.

After the predicted motion vector MVL0 is derived, processes at step S905 to step S913 are performed, and the motion information derivation process by improved template matching ends therewith. However, since the processes are similar to the processes at step S825 to step S833 of FIG. 36, respectively, description of them is omitted. For example, at step S870 of FIG. 38, the predicted motion vector MVL0 and the predicted motion vector MVL1 derived by the processes described above are used to generate a prediction image P.

The prediction section 216 derives the predicted motion vector MVL0 using a candidate for a predicted motion vector indicated by an index number in such a manner as described above. This makes it possible to obtain a more accurate predicted motion vector more rapidly.

### <Sixth Embodiment>

### <Parallel Processing in FRUC Mode>

Incidentally, in order to improve the processing speed in derivation of motion information of each block in the FRUC mode, it is one of solutions to perform a process for deriving motion information in parallel in regard to a plurality of blocks.

For example, as depicted in FIG. 40, it is assumed that there are a block B0 to a block B5 lined up successively in a predetermined picture PIC71. Further, it is assumed that, in the block B1, the block B2, and the block B4 indicated by slanting lines, processing for encoding or decoding is performed by the FRUC mode, and in the remaining block B0, block B3, and block B5, encoding or decoding by a different mode than the FRUC mode is performed. It is to be noted here that the following description continues under the assumption that decoding is performed.

For example, if decoding can be performed in parallel for the block B1, block B2 and block B4 that are processed by the FRUC mode, then since the three blocks are decoded simultaneously, the decoding process can be speeded up.

However, if derivation of motion information in the FRUC mode is considered, then when candidates for a predicted motion vector, namely, candidates for a start point, are collected first, it is necessary to refer to adjacent motion vectors that are predicted motion vectors of blocks around a block of a processing target.

Accordingly, in the present example, when processing in the FRUC mode is performed for the block B2, it is necessary to use the region of the adjacent block B1 as a peripheral region and refer to (collect) the predicted motion vector (adjacent motion vector) of the peripheral region.

It is to be noted that, in FIG. 40, each arrow mark represents that the block at the start position of the arrow mark refers to information of the block at the end position of the arrow mark.

Since, upon decoding, it is necessary for each block to refer to a block adjacent on the left side thereto in FIG. 40, even if it is tried to perform decoding of the block B1, the block B2, and the block B4 in parallel, a situation that an adjacent motion vector of a block cannot be acquired until processing for the reference destination is completed occurs in cascade. Accordingly, if this goes on, then the blocks cannot be processed in parallel to improve the processing speed.

Therefore, a predicted motion vector (adjacent motion vector) derived in the FRUC mode may suitably refrain from being referred to as a candidate for a predicted motion vector. This makes it possible to prevent such a situation that derivation of a motion vector cannot be started until processing for the reference destination is completed occurs in cascade.

In this case, for example, a predicted motion vector (adjacent motion vector) derived by the FRUC mode may be prevented from becoming a candidate for a predicted motion vector without fail independently of a condition.

Further, for example, whether or not a predicted motion vector derived in the FRUC mode is to be made a candidate for a predicted motion vector may be controlled using a control signal fluc_mv_decoupling_flag.

In such a case as just described, in the case where the value of the control signal fluc_mv_decoupling_flag is 1, a predicted motion vector derived by the FRUC mode refrains from being determined as a candidate for a predicted motion vector. In contrast, in the case where the value of the control signal fluc_mv_decoupling_flag is 0, also a predicted motion vector derived by the FRUC mode is determined as a candidate for a predicted motion vector.

For example, a value of the control signal fluc_mv_decoupling_flag is determined in advance by the image encoding apparatus 11, and the control signal fluc_mv_decoupling_flag is placed as an encoding parameter into an encoding parameter by the control section 21.

By the configuration just described, the prediction section 30 of the image encoding apparatus 11 and the prediction section 216 of the image decoding apparatus 201 refer to the same candidate for a predicted motion vector in response to the control signal fluc_mv_decoupling_flag to derive motion information.

It is to be noted that the following description is continued assuming that such control signal fluc_mv_decoupling_flag is used.

Here, an example of processing in the case where the value of the control signal fluc_mv_decoupling_flag is 1 is described with reference to FIGS. 41 and 42. It is to be noted that like portions in FIGS. 41 and 41 to those in FIG. 40 are denoted by the same symbols and description of them is suitably omitted.

For example, if the block B1 in the example depicted in FIG. 41 is decoded by the FRUC mode, then the prediction section 216 retains FRUC block information that the block B1 is a block decoded by the FRUC mode. It is to be noted that, in the following description, a block decoded (processed) by the FRUC mode, namely, a block from which motion information is derived by the FRUC mode, is referred to also as FRUC block.

By this, for example, when the prediction section 216 collects candidates for a predicted motion vector in regard to the block B2, it can refer to the FRUC_flag block information regarding the block B1 to grasp (specify) that the block B1 is a FRUC block.

It is to be noted that, in the following description, a block that is not a FRUC block, namely, a block that is not processed by the FRUC mode, is referred to also as non-FRUC block.

In this example, for example, when candidates for a predicted motion vector in regard to the block B2 are collected, although the block B1 is originally determined as a candidate for a predicted motion vector, since the block B1 is a FRUC block, it is not determined as a candidate for a predicted motion vector.

Then, in place of the block B1, the block B0 adjacent on the left side in FIG. 41 to the block B1 or a non-FRUC block adjacent on the upper side in FIG. 41 to the block B1 is determined as a candidate for a predicted motion vector. In particular, a predicted motion vector (adjacent motion vector) of a non-FRUC block adjacent the block B1 that is a FRUC block is determined as a candidate for a predicted motion vector in regard to the block B2.

It is to be noted that, in the case where a block adjacent on the upper side in FIG. 41 to the block B0 or the block B1 is a FRUC block, a non-FRUC block further adjacent on the upper side to the block is determined as a candidate for a predicted motion vector.

In particular, for example, when the block B0 is a FRUC block and a block adjacent on the left side in FIG. 41 to the block B0 is a non-FRUC block, the non-FRUC block is determined as a candidate for a predicted motion vector.

Similarly, for example, when a block adjacent on the upper side in FIG. 41 to the block B1 is a FRUC block and a block adjacent on the upper side in FIG. 41 to the block is a non-FRUC block, the non-FRUC block is made a candidate for a predicted motion vector.

In short, in the present example, a non-FRUC block that is positioned on the earlier side in the order in which the decoding process is performed than the block of the decoding target and besides positioned on the nearest to the block of the decoding target is determined as a candidate for a predicted motion vector. In other words, a non-FRUC block that is subject to a decoding process earlier than the block of the decoding target and besides is positioned nearest to the block of the decoding target is determined as a candidate for a predicted motion vector.

It is to be noted that, when a block that is adjacent a block of a decoding target and is originally to be made a candidate for a predicted motion vector is a FRUC block, the FRUC block may be made a candidate for a predicted motion vector assuming that the predicted motion vector in regard to the FRUC block is a vector determined in advance such as a zero vector.

Further, similarly to the block B1, also in regard to the block B2 that is a FRUC block, FRUC block information that the block B2 is a FRUC block is retained, and also in regard to the block B4, FRUC block information that the block B4 is a FRUC block is retained.

By collecting candidates for a predicted motion vector in regard to each block in this manner, for example, it is possible to immediately refer to the block B0 from the block B1. In other words, in regard to the block B1, the block B0 is determined as a candidate for a predicted motion vector.

Meanwhile, in regard to the block B2, since it can be specified from the FRUC block information that the block B1 is a FRUC block, not the block B1 but the block B0 is determined as a candidate for a predicted motion vector, and the candidate for predicted motion vector can be referred to immediately.

Furthermore, although the block B3 is a non-FRUC block, for example, when the block B3 is decoded in the AMVP mode or in a like case, candidates for a predicted motion vector are collected from the block B3.

In particular, in the block B3, it can be specified from the FRUC block information that the block B2 and the block B1 are FRUC blocks. Further, it is assumed that, for example, a block adjacent on the upper side in FIG. 41 to the block B2 is a non-FRUC block.

In this case, in regard to the block B3, a block that is adjacent on the upper side in FIG. 41 to the block B2 and is a non-FRUC block that is earlier in the decoding order than the block B3 and is positioned nearest to the block B3 is determined as a candidate for a predicted motion vector, and the candidate for a predicted motion vector can be referred to immediately by the block B3.

In regard to the block B4, since the adjacent block B3 is not a FRUC block, the block B3 is determined as a candidate for a predicted motion vector, and the candidate for a predicted motion vector can be referred to immediately by the block B4.

Further, in regard to the block B5, since the block B4 can be specified as a FRUC block from the FRUC block information, not the block B4 but the block B3 is determined as a candidate for a predicted motion vector, and the candidate for a predicted motion vector can be referred to immediately by the block B5.

By collecting candidates for a predicted motion vector in regard to a block of a decoding target to generate a candidate list and a sub block candidate list in such a manner as described above, a result of block matching of a FRUC block, namely, a predicted motion vector, is not referred to any more as depicted in FIG. 42.

It is represented by FIG. 42 that a block B1, a block B2, and a block B4 that are FRUC blocks are suppressed from being referred to.

In this case, in the block B1 to block B5, a predicted motion vector obtained in a FRUC block is not included in candidates for a predicted motion vector to be collected.

Therefore, the block B1, the block B2, and the block B4 that are FRUC blocks can be decoded at the same time, namely, in parallel, and speeding up of the decoding process can be implemented as a whole. It is to be noted that, while a case in which a decoding process is performed is described as an example here, since a decoded image is used also in the case in which an encoding process is performed, increase of the speed of the encoding process can be implemented by a similar reason.

By collecting candidates for a predicted motion vector in regard to a block of a processing target to generate a candidate list or a sub block candidate list in such a manner as described above, a parallel process of a plurality of FRUC blocks can be implemented, and increase of the speed of the encoding process and the decoding process can be implemented.

In this case, an adjacent motion vector of a peripheral region that is a non-FRUC block from among peripheral regions determined in advance in the proximity of a block of a processing target, namely, a motion vector adjacent the block of the processing target, is acquired as a candidate for a predicted motion vector. Further, when the peripheral region is a FRUC block, an adjacent motion vector of a non-FRUC block in the proximity of the peripheral region is acquired as a candidate for a predicted motion vector.

In particular, in the image encoding apparatus 11, FRUC block information is generated in regard to a block processed in the FRUC mode, for example, at a timing at which the process at step S96 or step S97 of FIG. 12 is performed, and is retained into the prediction section 30.

Then, for example, at step S131 or step S134 of FIG. 13, an adjacent motion vector with regard to which a FRUC block is a peripheral region is excluded from a candidate for a predicted motion vector (start point) on the basis of the FRUC block information. In particular, the adjacent motion vector of the FRUC block is not selected as a candidate for a predicted motion vector and a predicted motion vector of a different block (non-FRUC block) is selected as a candidate for a motion vector in place of the adjacent motion vector. At this time, a substitute candidate for a motion vector may be suppressed from being selected (acquired).

Similarly, for example, also at step S161 or step S164 of FIG. 14, an adjacent motion vector with regard to which a FRUC block is a peripheral region is excluded from a candidate for a predicted motion vector on the basis of the FRUC block information.

Further, also in the image decoding apparatus 201, where a control signal fruc_mv_decoupling_flag that is read out from an encoded stream and whose value is 1 is supplied from the decoding section 211 to the prediction section 216, a process similar to that in such a case as in the image encoding apparatus 11 is performed.

In particular, for example, at a timing at which the process at step S256 or step S258 of FIG. 19 is performed, in regard to a block processed in the FRUC mode, FRUC block information is generated and retained into the prediction section 216.

Then, for example, at step S291 or step S294 of FIG. 20, an adjacent motion vector with regard to which a FRUC block is a peripheral region is excluded from a candidate for a predicted motion vector on the basis of the FRUC block information. In particular, the adjacent motion vector of the FRUC block is not selected as a candidate for a predicted motion vector and a predicted motion vector of a different block (non-FRUC block) is selected as a candidate for a motion vector in place of the adjacent motion vector.

Similarly, for example, also at step S331 or step S334 of FIG. 21, an adjacent motion vector with regard to which a FRUC block is a peripheral region is excluded from a candidate for a predicted motion vector on the basis of the FRUC block information.

It is to be noted that an adjacent motion vector with regard to which a FRUC block is a peripheral region can be excluded from a candidate for a predicted motion vector not only in template matching and bilateral matching but also in improved template matching described above.

As described above, with the present technology, motion information can be obtained more rapidly. Further, the present technology described above can be applied to various electronic equipment and systems such as, for example, a server, a network system, a television set, a personal computer, a portable telephone set, a recording and reproduction apparatus, an imaging apparatus, or portable equipment. Note that also it is naturally possible to suitably combine the embodiments described above.

### <Example of Configuration of Computer>

While the series of processes described in the specification can be executed by hardware, it can otherwise be executed by software. In the case where the series of processes is executed by software, a program that configures the software is installed into a computer. Here, the computer includes a computer incorporated in hardware for exclusive use or a computer, for example, for universal use that can execute various functions by installing various programs.

FIG. 43 is a block diagram depicting an example of a configuration of hardware of a computer that executes the series of processes described above by a program.

In the computer, a CPU (Central Processing Unit) 501, a ROM (Read Only Memory) 502, and a RAM (Random Access Memory) 503 are connected to each other by a bus 504.

To the bus 504, an input/output interface 505 is connected further. To the input/output interface 505, an inputting section 506, an outputting section 507, a recording section 508, a communication section 509, and a drive 510 are coupled.

The inputting section 506 includes a keyboard, a mouse, a microphone, an imaging device and so forth. The outputting section 507 includes a display, a speaker array and so forth. The recording section 508 includes a hard disk, a nonvolatile memory and so forth. The communication section 509 includes a network interface and so forth. The drive 510 drives a removable recording medium 511 such as a magnetic disk, an optical disk, a magneto-optical disk, a semiconductor memory or the like.

In the computer configured in such a manner as described above, the CPU 501 loads a program, for example, recorded in the recording section 508 into the RAM 503 through the input/output interface 505 and the bus 504 and executes the program to perform the series of processes described above.

The program to be executed by the computer (CPU 501) can be recorded on and provided as the removable recording medium 511, for example, in the form of a package medium. Further, the program can be provided through a wired or wireless transmission medium such as a local area network, the Internet or a digital satellite broadcasting.

In the computer, by loading the removable recording medium 511 into the drive 510, a program can be installed into the recording section 508 through the input/output interface 505. Further, the program can be received by the communication section 509 through a wired or wireless transmission medium and installed into the recording section 508. Further, also it is possible to install the program into the ROM 502 or the recording section 508 in advance.

It is to be noted that the program executed by the computer may be a program whose processes are performed in a time series in the order described in the present specification or may be a program whose processes are performed in parallel or at a necessary timing such as when it is called.

Further, the embodiments of the present technology are not limited to the embodiments described above and can be modified in various manners without departing from the subject matter of the present technology.

For example, the present technology can take a configuration for cloud computing in which one function is shared and processed cooperatively by a plurality of apparatus through a network.

Further, the steps described in connection with the flow charts described hereinabove can be executed by one apparatus and can be executed otherwise through cooperation by a plurality of apparatus.

Furthermore, in the case where a plurality of processes are included in one step, the plurality of processes included in the one step can be executed by one apparatus or can be executed through cooperation of a plurality of apparatus.

Further, advantageous effects described in the present specification are exemplary to the last and are not restrictive, and other advantageous effects may be available.

Furthermore, it is possible for the present technology to take the following configurations.
(1) An image processing apparatus, including:
   a prediction section configured to derive, based on a given upper limit number of candidates for a motion vector from among a plurality of candidates for a motion vector, a motion vector of a block of a processing target using reference images having time different from that of an image of the block.
(2) The image processing apparatus according to (1), in which
   the prediction section derives the motion vector by block matching using the reference images.
(3) The image processing apparatus according to (1) or (2), in which
   the prediction section derives the motion vector by template matching based on the image including the block and the reference images.
(4) The image processing apparatus according to (1) or (2), in which
   the prediction section derives the motion vector by bilateral matching based on the reference images having time different from each other.
(5) The image processing apparatus according to (1) or (2), in which
   the prediction section acquires upper limit number information indicative of the upper limit number and derives, where the upper limit number of one of the template matching based on the image including the block and the reference images and the bilateral matching based on the reference images having time different from each other is zero, the motion vector by an other one of the template matching and the bilateral matching.
(6) The image processing apparatus according to any one of (1) to (5), further including:
   an encoding section configured to encode information indicative of whether the motion vector is to be derived by the template matching or the motion vector is to be derived by the bilateral matching.
(7) The image processing apparatus according to any one of (1) to (6), further including:
   an encoding section configured to encode upper limit number information indicative of the upper limit number.
(8) The image processing apparatus according to any one of (1) to (7), in which
   the upper limit number is determined based on information relating to an image of a processing target.
(9) The image processing apparatus according to any one of (1) to (8), in which
   the prediction section performs at least part of processes for deriving the motion vector of the block in parallel.
(10) The image processing apparatus according to (9), in which
   the prediction section includes:
   a motion vector derivation section that includes a plurality of matching processing circuits for deriving the motion vector and a cost by block matching in regard to the candidates for the motion vector; and
   a candidate selection section configured to select, from among the motion vectors derived in parallel by the plurality of matching processing circuits, the motion vector that indicates the lowest cost as a final motion vector of the block.
(11) The image processing apparatus according to (9), in which
   the prediction section includes:
   a candidate selection section that includes a plurality of cost arithmetic operation circuits for calculating the cost indicative of a predicted motion vector likeness of the candidates for the motion vector and selects the candidate for a motion vector indicating the lowest cost from among a plurality of the costs calculated in parallel by the plurality of cost arithmetic operation circuits from among the plurality of candidates for the motion vector; and
   a motion vector derivation section configured to derive the motion vector by block matching based on the candidate for the motion vector selected by the candidate selection section.
(12) The image processing apparatus according to any one of (1) to (11), in which
   the prediction section generates a prediction image of the block based on the motion vector.
(13) An image processing method, including a step of:
   deriving, based on a given upper limit number of candidates for a motion vector from among a plurality of candidates for a motion vector, a motion vector of a block of a processing target using reference images having time different from that of an image including the block.
(14) An image processing apparatus, including:
   a prediction section configured to calculate, in regard to a plurality of candidates for a motion vector, a difference between a block of a processing target of an original image and a block indicated by each of candidates for a motion vector in a decoded image having time different from that of the original image and selects one candidate for a motion vector from among the plurality of candidates for a motion vector based on the differences; and
   an encoding section configured to encode information indicative of the candidate for the motion vector selected by the prediction section.
(15) The image processing apparatus according to (14), in which
   the prediction section:
   derives, based on the original image and a different decoded image having time different from that of the decoded image as well as a block indicated by the selected candidate for a motion vector in the decoded image, a motion vector with the different decoded image of a block of the processing target by block matching; and
   generates a prediction image of the block of the processing target based on the selected candidate for the motion vector and the motion vector.
(16) The image processing apparatus according to (14), in which,
   based on the selected candidate for the motion vector, the prediction section derives a motion vector of the block of the processing target by block matching and derives a difference between the motion vector and the candidate for a motion vector as a difference motion vector; and
   the encoding section encodes the information and the difference motion vector.
(17) An image processing method, including the steps of:
   calculating, in regard to a plurality of candidates for a motion vector, a difference between a block of a processing target of an original image and a block indicated by each of candidates for a motion vector in a decoded image having time different from that of the original image and selecting one candidate for the motion vector from among the plurality of candidates for the motion vector based on the differences; and
   encoding information indicative of the candidate for the motion vector selected by the prediction section.
(18) An image processing apparatus, including:
   a prediction section configured to acquire information indicative of a candidate for a motion vector and derive, based on a block on a reference image having time different from that of an image including a block of a processing target, the block being indicated by a first motion vector indicated by the information and obtained from the candidate for the motion vector, and a different reference image having time different from those of the image and the reference image, a second motion vector between the block of the processing target and the different reference image by block matching.
(19) The image processing apparatus according to (18), in which
   the prediction section generates a prediction image of the block of the processing target based on the first motion vector and the second motion vector.
(20) The image processing apparatus according to (18) or (19), in which
   the prediction section acquires a difference motion vector and adds the difference motion vector and the candidate for a motion vector to obtain the first motion vector.
(21) An image processing method, including a step of:
   acquiring information indicative of a candidate for a motion vector and deriving, based on a block on a reference image having time different from that of an image including a block of a processing target, the block being indicated by a first motion vector indicated by the information and obtained from the candidate for the motion vector, and a different reference image having time different from those of the image and the reference image, a second motion vector between the block of the processing target and the different reference image by block matching.
(22) An image processing apparatus, including:
   a prediction section configured to acquire a motion vector in a peripheral region that is not processed in a FRUC mode from among peripheral regions in a proximity of a block of a processing target as a candidate for a motion vector and derive, based on the acquired candidate for the motion vector, a motion vector of the block of the processing target using a reference image having time different from that of an image that includes a block of the processing target.
(23) The image processing apparatus according to (22), in which,
   in a case where the peripheral region is processed in the FRUC mode, the prediction section acquires a motion vector in a region that is adjacent the peripheral region and is not processed in the FRUC mode as the candidate for a motion vector.
(24) An image processing method, including a step of:
   acquiring a motion vector in a peripheral region that is not processed in a FRUC mode from among peripheral regions in a proximity of a block of a processing target as a candidate for a motion vector and deriving, based on the acquired candidate for the motion vector, a motion vector of the block of the processing target using a reference image having time different from that of an image that includes a block of the processing target.

### [Reference Signs List]

11 Image encoding apparatus, 21 Control section, 30 Prediction section, 51 Candidate acquisition section, 52 Bilateral matching processing section, 53 Sub block candidate acquisition section, 54 Bilateral matching processing section, 91 Candidate acquisition section, 92 Template matching processing section, 93 Sub block candidate acquisition section, 94 Template matching processing section, 201 Image decoding apparatus, 211 Decoding section, 216 Prediction section

## Claims

1. An image processing apparatus, comprising:
a prediction section configured to derive, based on a given upper limit number of candidates for a motion vector from among a plurality of candidates for a motion vector, a motion vector of a block of a processing target using reference images having time different from that of an image of the block.

2. The image processing apparatus according to claim 1, wherein
the prediction section derives the motion vector by block matching using the reference images.

3. The image processing apparatus according to claim 1, wherein
the prediction section derives the motion vector by template matching based on the image including the block and the reference images.

4. The image processing apparatus according to claim 1, wherein
the prediction section derives the motion vector by bilateral matching based on the reference images having time different from each other.

5. The image processing apparatus according to claim 1, wherein
the prediction section acquires upper limit number information indicative of the upper limit number and derives, where the upper limit number of one of the template matching based on the image including the block and the reference images and the bilateral matching based on the reference images having time different from each other is zero, the motion vector by an other one of the template matching and the bilateral matching.

6. The image processing apparatus according to claim 1, further comprising:
an encoding section configured to encode information indicative of whether the motion vector is to be derived by the template matching or the motion vector is to be derived by the bilateral matching.

7. The image processing apparatus according to claim 1, further comprising:
an encoding section configured to encode upper limit number information indicative of the upper limit number.

8. The image processing apparatus according to claim 1, wherein
the upper limit number is determined based on information relating to an image of a processing target.

9. The image processing apparatus according to claim 1, wherein
the prediction section performs at least part of processes for deriving the motion vector of the block in parallel.

10. The image processing apparatus according to claim 9, wherein
the prediction section includes:
a motion vector derivation section that includes a plurality of matching processing circuits for deriving the motion vector and a cost by block matching in regard to the candidates for the motion vector; and
a candidate selection section configured to select, from among the motion vectors derived in parallel by the plurality of matching processing circuits, the motion vector that indicates the lowest cost as a final motion vector of the block.

11. The image processing apparatus according to claim 9, wherein
the prediction section includes:
a candidate selection section that includes a plurality of cost arithmetic operation circuits for calculating the cost indicative of a predicted motion vector likeness of the candidates for the motion vector and selects the candidate for a motion vector indicating the lowest cost from among a plurality of the costs calculated in parallel by the plurality of cost arithmetic operation circuits from among the plurality of candidates for the motion vector; and
a motion vector derivation section configured to derive the motion vector by block matching based on the candidate for the motion vector selected by the candidate selection section.

12. The image processing apparatus according to claim 1, wherein
the prediction section generates a prediction image of the block based on the motion vector.

13. An image processing method, comprising a step of:
deriving, based on a given upper limit number of candidates for a motion vector from among a plurality of candidates for a motion vector, a motion vector of a block of a processing target using reference images having time different from that of an image including the block.

14. An image processing apparatus, comprising:
a prediction section configured to calculate, in regard to a plurality of candidates for a motion vector, a difference between a block of a processing target of an original image and a block indicated by each of candidates for a motion vector in a decoded image having time different from that of the original image and selects one candidate for a motion vector from among the plurality of candidates for a motion vector based on the differences; and
an encoding section configured to encode information indicative of the candidate for the motion vector selected by the prediction section.

15. The image processing apparatus according to claim 14, wherein
the prediction section:
derives, based on the original image and a different decoded image having time different from that of the decoded image as well as a block indicated by the selected candidate for a motion vector in the decoded image, a motion vector with the different decoded image of a block of the processing target by block matching; and
generates a prediction image of the block of the processing target based on the selected candidate for the motion vector and the motion vector.

16. The image processing apparatus according to claim 14, wherein,
based on the selected candidate for the motion vector, the prediction section derives a motion vector of the block of the processing target by block matching and derives a difference between the motion vector and the candidate for a motion vector as a difference motion vector; and
the encoding section encodes the information and the difference motion vector.

17. An image processing apparatus, comprising:
a prediction section configured to acquire information indicative of a candidate for a motion vector and derive, based on a block on a reference image having time different from that of an image including a block of a processing target, the block being indicated by a first motion vector indicated by the information and obtained from the candidate for the motion vector, and a different reference image having time different from those of the image and the reference image, a second motion vector between the block of the processing target and the different reference image by block matching.

18. The image processing apparatus according to claim 17, wherein
the prediction section generates a prediction image of the block of the processing target based on the first motion vector and the second motion vector.

19. An image processing apparatus, comprising:
a prediction section configured to acquire a motion vector in a peripheral region that is not processed in a FRUC mode from among peripheral regions in a proximity of a block of a processing target as a candidate for a motion vector and derive, based on the acquired candidate for the motion vector, a motion vector of the block of the processing target using a reference image having time different from that of an image that includes a block of the processing target.

20. The image processing apparatus according to claim 19, wherein,
in a case where the peripheral region is processed in the FRUC mode, the prediction section acquires a motion vector in a region that is adjacent the peripheral region and is not processed in the FRUC mode as the candidate for a motion vector.
